# EUROPEAN PATENT APPLICATION

(11) **EP 4 586 279 A1**
(43) Date of publication of application: **16.07.2025**
(21) Application number: 23863189.9
(22) Date of filing: 05.09.2023
(51) Int. Cl.: H01B 1/06, C01G 17/00, C01G 30/00, C01G 31/00, C01G 33/00, C01G 35/00, C01G 39/00, C01G 41/00, H01B 1/08, H01M 8/1246

(54) **PROTON-CONDUCTING SOLID ELECTROLYTE, ELECTROLYTE LAYER, AND BATTERY**

(30) Priority: 05.09.2022 JP 2022140685
(71) Applicant: INSTITUTE OF SCIENCE TOKYO, Tokyo 152-8550 (JP); SHIN-ETSU CHEMICAL CO., LTD., Tokyo 1000005 (JP)
(72) Inventor: YASHIMA Masatomo, Tokyo 152-8550 (JP); SAITO Kei, Tokyo 152-8550 (JP); MATSUZAKI Kohei, Tokyo 152-8550 (JP); FUJII Kotaro, Tokyo 152-8550 (JP); UMEDA Kensei, Tokyo 152-8550 (JP)
(74) Representative: TBK
(86) International application number: PCT/JP2023/032421
(87) International publication number: WO 2024/053651

(57) **Abstract**

What is provided are a proton-conducting solid electrolyte which can exhibit high proton conductivity and stability in a low-temperature range and a medium-temperature range, an electrolyte layer formed of the proton-conducting solid electrolyte, and a battery. As an example, a proton-conducting solid electrolyte represented by a general formula: Ba_{1-α}Sc₁₋ₓMoₓO_{3-δ}H_{y}, in which α is -0.2 to 0.2, x is 0.1 to 0.3, y is 0 to 1 - 3x, and δ is 0 to 1/2 - 3x/2, a proton-conducting solid electrolyte represented by a general formula: BaSc₁₋ₓMoₓO_{3-δ}H_{y}, in which x is 0.15 to 0.25, y is 0 to 1 - 3x, and δ is 0 to 1/2 - 3x/2, or the like; an electrolyte layer; and a battery are provided.

## Description

### TECHNICAL FIELD

The present invention relates to a proton-conducting solid electrolyte which is used in a proton-conducting solid electrolyte layer of a fuel cell, a sensor, or the like, an electrolyte layer formed of the proton-conducting solid electrolyte, and a battery.

Priority is claimed on Japanese Patent Application No. 2022-140685, filed September 5, 2022, the content of which is incorporated herein by reference.

### BACKGROUND ART

Various fuel cells are attracting attention as a key to realizing a next-generation clean energy society and solving environmental problems. As a substance which can be used for a fuel cell or a sensor, various ion conductors, for example, a proton conductor of a metal oxide or an oxide ion conductor have been known.

As an ion conductor known in the related art, yttria-stabilized zirconia (ZrO₂-Y₂O₃) (hereinafter, referred to as "YSZ") is known as an oxide ion (O²⁻) conductive ceramic. The YSZ can be used for a solid oxide fuel cell (hereinafter, referred to as "SOFC"), and the SOFC is known to have a particularly high power generation efficiency, does not require a reforming device for a fuel, and has an advantage of excellent long-term stability.

On the other hand, as the proton conductor, a perovskite-type oxide in which oxygen pores are introduced by chemical substitution, such as BaZr0.8Y0.2O2.9, has been known.

Patent Document 1 discloses a crystalline inorganic compound capable of conducting at least one carrier selected from the group consisting of an anion, a cation, a proton, an electron, and a hole. A compound having high electrical conductivity, that is a compound which exhibits high ion conductivity for conducting ions such as an oxide ion (O²⁻) and a proton (H⁺), can be used for a solid electrolyte of the fuel cell or the like.

In Patent Document 2, the present inventors have disclosed a solid electrolyte containing a hexagonal perovskite-related compound, in which the compound is a compound represented by a general formula: Ba_{7-α}Nb_{(4-x-y)}Mo₍₁₊ₓ₎M_{y}O_{(20+z)}, an electrolyte layer formed of the solid electrolyte, and a battery. The solid electrolyte, the electrolyte layer formed of the solid electrolyte, and the battery can have high electrical conductivity even in a low-temperature range as compared with YSZ, and can be suitably used for SOFC.

Patent Document 3 discloses a solid electrolyte containing scandium-containing barium zirconate represented by a general formula: BaZr₁₋ₓScₓO_{3-δ}H_{y}, in which x is more than 0.20 and less than 0.65, y is 0.7x to x, and δ is 0 to 0.15x. The technology is to provide a solid electrolyte which can exhibit a certain or higher proton conductivity and chemical stability in a medium-temperature range.

### Citation List

### Patent Documents

Patent Document 1: Japanese Patent No. 6448020
Patent Document 2: PCT International Publication No. WO2020/153485
Patent Document 3: PCT International Publication No. WO2021/085366

### SUMMARY OF INVENTION

### Technical Problem

In recent years, in addition to the above-described ion conductors known in the related art, an oxide ion conductor having a higher oxide ion conductivity or a higher oxygen transport rate, and a proton conductor having a higher proton conductivity or a higher proton transport rate are further required.

In addition, there is also a demand for an ion conductor having stable properties regardless of the surrounding environment. Examples of the surrounding environment include temperature conditions and dependence on oxygen partial pressure.

Regarding the temperature condition, the YSZ in the related art requires a high temperature of approximately 700°C or higher in order to secure the oxide ion conductivity required for the battery. In order to operate the battery at a high temperature of 700°C or higher, many conditions are required, such as that the fuel cell itself requires pre-heating before the operation and that a constituent material of the fuel cell is required to have thermal durability. Furthermore, it is necessary to have other devices for keeping the environment or space in which the battery is to be operated or the battery itself at a high temperature and for blocking or cooling the other environment so that the other environment does not become a high temperature. Therefore, an ion conductor which exhibits a high ion conductivity under a wide temperature condition is required.

Here, in a proton ceramic fuel cell (PCFC) in which a proton conductor is used as a solid electrolyte, it has been known that protons as a conduction species have a high mobility, and thus the proton ceramic fuel cell exhibits a certain degree of ion conductivity even at a relatively low temperature and has ion conductivity which does not depend on an oxygen partial pressure.

In recent years, as a material which exhibits sufficient proton conductivity in a medium-temperature range, studies using barium zirconate such as BaZr0.8Y0.2O2.9 and BaZr₁₋ₓScₓO_{3-δ}H_{y} described above have been carried out.

Meanwhile, it is strongly required to obtain sufficient proton conductivity in a lower temperature range. However, in order to obtain such characteristics, it is necessary to search for a formulation different from the barium zirconate.

The present invention has been made in view of the above circumstances, and an object of the present invention is to provide a solid electrolyte which can exhibit excellent proton conductivity in a low-temperature range and a medium-temperature range, an electrolyte layer formed of the solid electrolyte, and a battery.

### Solution to Problem

In order to solve the above problems, the present invention has the following aspects.
[1] A proton-conducting solid electrolyte (1) represented by a general formula: Ba_{1-α}Sc₁₋ₓMoₓO_{3-δ}H_{y},
   in which a is -0.2 to 0.2,
   x is 0.1 to 0.3,
   y is 0 to 1 - 3x, and
   δ is 0 to 1/2 - 3x/2.
[2] A proton-conducting solid electrolyte represented by a general formula: BaA₁₋ₓMₓO_{3-δ}H_{y},
   in which A is an element having an ionic radius of 0.52 to 0.97 Å, excluding Ce, In, Zr, and Zn,
   M is an element having an ionic radius of 70% to 130% of the ionic radius of A, excluding A, Zr, Ce, and Zn, or a mixed formulation of a plurality of elements having an average ionic radius of 70% to 130% of the ionic radius of A, excluding A and Zn,
   x is more than 0 and less than 1 (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1),
   y is 0 to 1, and
   δ is 0 to 1/2.
[3] The proton-conducting solid electrolyte according to [2],
   in which A is Sc,
   M is Mo, Ge, Nb, Ta, V, W, or Sb, and
   in a case where M is Mo or W, x is more than 0 and 1/3 or less, in a case where M is Ge, x is more than 0 and less than 1/2, and in a case where M is Nb, Ta, V, or Sb, x is more than 0 and 1/2 or less.
[4] The proton-conducting solid electrolyte according to [2] or [3],
   in which the proton-conducting solid electrolyte is any of the following (2) to (8),
   (2) a proton-conducting solid electrolyte represented by a general formula: BaSc₁₋ₓGeₓO_{3-δ}H_{y}, in which x is 0.25 to 0.35, y is 0 to 1 - x, and δ is 0 to 1/2 - *x*/*2,*
   (3) a proton-conducting solid electrolyte represented by a general formula: BaSc₁₋ₓNbₓO_{3-δ}H_{y}, in which x is 0.2 to 0.4, y is 0 to 1 - 2x, and δ is 0 to 1/2 - x,
   (4) a proton-conducting solid electrolyte represented by a general formula: BaSc₁₋ₓTaₓO_{3-δ}H_{y}, in which x is 0.2 to 0.4, y is 0 to 1 - 2x, and δ is 0 to 1/2 - x,
   (5) a proton-conducting solid electrolyte represented by a general formula: BaSc₁₋ₓVₓO_{3-δ}H_{y}, in which x is 0.2 to 0.25, y is 0 to 1 - 2x, and δ is 0 to 1/2 - x,
   (6) a proton-conducting solid electrolyte represented by a general formula: BaSc₁₋ₓWₓO_{3-δ}H_{y}, in which x is 0.15 to 0.25, y is 0 to 1 - 3x, and δ is 0 to 1/2 - 3x/2,
   (7) a proton-conducting solid electrolyte represented by a general formula: BaSc_{0.6}Ce_{0.4}O_{3-δ}, and
   (8) a proton-conducting solid electrolyte represented by a general formula: BaSc₁₋ₓSbₓO_{3-δ}H_{y}, in which x is 0.35 to 0.45, y is 0 to 1 - 2x, and δ is 0 to 1/2 - x.
[5] A proton-conducting solid electrolyte represented by a general formula: BaSc₁₋ₓMₓO_{3-δ}H_{y},
   in which M represents a mixed formulation of a plurality of elements excluding Sc, Zr, Ce, and Zn, in which an average ionic radius of M is 70% to 130% of the ionic radius of Sc,
   x is more than 0 and 1 or less (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1),
   y is 0 to 1, and
   δ is 0 to 1/2.
[6] A proton-conducting solid electrolyte represented by a general formula: Ba_{1-ε}Sc₁₋ₓMₓO_{3-δ}H_{y},
   in which M is Mo, Ge, Nb, Ta, V, W, or Sb,
   y is 0 to 1,
   ε is 0 to 0.7,
   δ is 0 to 1/2, and
   in a case where M is Ge, x is more than 0 and less than 1/2, in a case where M is Nb, Ta, V, or Sb, x is more than 0 and 1/2 or less, and in a case where M is Mo or W, x is more than 0 and less than 1/3.
[7] A proton-conducting solid electrolyte represented by a general formula: Ba_{1-ε}Sc₁₋ₓCeₓO_{3-δ}H_{y},
   in which x is more than 0 and less than 1,
   y is 0 to 1,
   ε is more than 0.05 to 0.7 (here, in a case where 0.05 < ε < 0.2, 0 < x < 0.5), and
   δ is 0 to 1/2.
[8] A proton-conducting solid electrolyte represented by a general formula: Ba_{1-ε}Sc₁₋ₓMₓO_{3-δ}H_{y},
   in which M is an element having an ionic radius of 70% to 130% of an ionic radius of Sc, excluding Sc and Zn, or a mixed formulation of a plurality of elements excluding Sc and Zn, in which the average ionic radius is 70% to 130% of the ionic radius of Sc,
   x is more than 0 and 1 or less (here, in a case where M is Ti and ε is 0, x is more than 0 and less than 0.2, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1),
   y is 0 to 1,
   ε is 0 to 0.7, and
   δ is 0 to 1/2.
[9] A proton-conducting solid electrolyte represented by a general formula: Ba_{1-ε}A₁₋ₓMₓO_{3-δ}H_{y},
   in which A is an element having an ionic radius of 0.52 to 0.97 Å, excluding Ce, In, Zr, and Zn,
   M is an element having an ionic radius of 70% to 130% of the ionic radius of A, excluding A and Zn, or a mixed formulation of a plurality of elements having an average ionic radius of 70% to 130% of the ionic radius of A, excluding A,
   x is more than 0 and less than 1 (here, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1),
   y is 0 to 1,
   ε is 0 to 0.7, and
   δ is 0 to 1/2.
[10] A proton-conducting solid electrolyte represented by a general formula: BaA_{1-x-z}M1ₓM2_{z}O_{3-δ}H_{y}, in which z is more than 0 and less than 1, y is 0 to 1, and δ is 0 to 1/2,
   in which the proton-conducting solid electrolyte is any of the following (28) to (35),
   (28) a proton-conducting solid electrolyte represented by a general formula: BaSc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded),
   (29) a proton-conducting solid electrolyte represented by a general formula: BaSc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn,
   (30) a proton-conducting solid electrolyte represented by a general formula: BaSc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded),
   (31) a proton-conducting solid electrolyte represented by a general formula: BaSc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded),
   (32) a proton-conducting solid electrolyte represented by a general formula: BaSc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded),
   (33) a proton-conducting solid electrolyte represented by a general formula: BaSc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded),
   (34) a proton-conducting solid electrolyte represented by a general formula: BaSc_{1-x-z}CeₓM_{z}O_{3-δ}H_{y}, in which x is more than 0 and less than 1, and M is an element having an ionic radius of 70% to 130% of an ionic radius of Sc, excluding Sc, Ce, Zr, and Zn, or a mixed formulation of a plurality of elements having an average ionic radius of 70% to 130% of the ionic radius of Sc, excluding Sc, Ce, and Zn (here, in a case where z is 0, x is more than 0 and less than 0.2, in a case where M is Cr, Fe, Mn, Co, or Ni, a range of x = 0.01 to 0.02 is excluded, and in a case where M is Mo, Nb, Ta, V, W, or Sb, a range of z = 0.01 to 0.2 or a range of x = 0.74 to 0.84 is excluded), and
   (35) a proton-conducting solid electrolyte represented by a general formula: BaSc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded).
[11] A proton-conducting solid electrolyte represented by a general formula: Ba_{1-ε}A_{1-x-z}M1ₓM2_{z}O_{3-δ}H_{y}, in which z is more than 0 and less than 1, y is 0 to 1, ε is 0 to 0.7, and δ is 0 to 1/2,
   in which the proton-conducting solid electrolyte is any of the following (36) to (43),
   (36) a proton-conducting solid electrolyte represented by a general formula: Ba_{1-ε}Sc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded),
   (37) a proton-conducting solid electrolyte represented by a general formula: Ba_{1-ε}Sc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn,
   (38) a proton-conducting solid electrolyte represented by a general formula: Ba_{1-ε}Sc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded),
   (39) a proton-conducting solid electrolyte represented by a general formula: Ba_{1-ε}Sc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded),
   (40) a proton-conducting solid electrolyte represented by a general formula: Ba_{1-ε}Sc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded),
   (41) a proton-conducting solid electrolyte represented by a general formula: Ba_{1-ε}Sc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded),
   (42) a proton-conducting solid electrolyte represented by a general formula: Ba_{1-ε}Sc_{1-x-z}CeₓM_{z}O_{3-δ}H_{y}, in which x is more than 0 and less than 0.8, and M is an element having an ionic radius of 70% to 130% of an ionic radius of Sc, excluding Sc, Ce, and Zn (in a case where ε is 0, further excluding Zr), or a mixed formulation of a plurality of elements having an average ionic radius of 70% to 130% of the ionic radius of Sc, excluding Sc, Ce, and Zn (here, in a case where M is Cr, Fe, Mn, Co, or Ni, a range of ε = 0 to 0.2 or a range of x = 0.01 to 0.02 is excluded, and in a case where M is Mo, Nb, Ta, V, W, or Sb, a range of z = 0.01 to 0.2 or a range of x = 0.74 to 0.84 is excluded), and
   (43) a proton-conducting solid electrolyte represented by a general formula: Ba_{1-ε}Sc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded).
[12] A proton-conducting solid electrolyte represented by a general formula: Ba_{5-α}R₂₊ₓAl_{2+y}M_{1+z}O_{13+δ},
   in which α is 0 or more and 2 or less,
   x is -1 or more and 1 or less,
   y is -1 or more and 1 or less,
   z is -0.5 or more and 0.5 or less,
   δ is -1 or more and 1 or less,
   R in the general formula is a cation of one element selected from the group consisting of a rare earth element and Ga, and
   M in the general formula is a cation of one element selected from the group consisting of Hf, Sn, and Zr.
[13] The proton-conducting solid electrolyte according to [12],
   in which the proton-conducting solid electrolyte is represented by a general formula: Ba₅R₂Al₂MO₁₃, in which M is a cation of one element selected from the group consisting of Hf and Sn.
[14] The proton-conducting solid electrolyte according to [12] or [13],
   in which M in the general formula is Sn, and
   R in the general formula is Nd, Sm, Eu, Gd, Dy, Ho, Y, Er, Tm, or Yb.
[15] The proton-conducting solid electrolyte according to any one of [1] to [14],
   in which the proton-conducting solid electrolyte is used under temperature conditions of 100°C to 700°C.
[16] The proton-conducting solid electrolyte according to any one of [1] to [14],
   in which the proton-conducting solid electrolyte is used under temperature conditions of 200°C to 400°C.
[17] The proton-conducting solid electrolyte according to any one of [1] to [14],
   in which, in a case where a proton conductivity in a grain is measured, a temperature at which an electrical conductivity represented by log [σ(Scm⁻¹)] is more than -2.0 is 350°C or lower.
[18] The proton-conducting solid electrolyte according to any one of [1] to [14],
   in which the proton-conducting solid electrolyte is used for a solid oxide fuel cell (SOFC), a proton ceramic fuel cell (PCFC), a sensor, a battery, an electrode, an electrolyte, a hydrogen permeable membrane, a catalyst, a photocatalyst, an electrical, electronic, or communication apparatus, an energy or environment-related apparatus, or an optical apparatus.
[19] The proton-conducting solid electrolyte according to any one of [1] to [14],
   in which the proton-conducting solid electrolyte is used for a solid oxide fuel cell (SOFC), a proton ceramic fuel cell (PCFC), a sensor, or a hydrogen permeable membrane.
[20] An electrolyte layer containing:
   the proton-conducting solid electrolyte according to any one of [1] to [14].
[21] A battery including:
   the electrolyte layer according to [20].
[22] The battery according to [21],
   in which the battery is a solid oxide fuel cell (SOFC) or a proton ceramic fuel cell (PCFC).

In addition, the present invention also has the following aspects.
[1A] A proton-conducting solid electrolyte represented by a general formula: Ba_{1-α}Sc₁₋ₓMoₓO_{3-δ}H_{y}, in which α is -0.2 to 0.2, x is 0.1 to 0.3, y is 0 to 1 - 3x, and δ is 0 to 1/2 - 3x/2.
[2A] A proton-conducting solid electrolyte represented by a general formula: BaSc₁₋ₓGeₓO_{3-δ}H_{y}, in which x is 0.25 to 0.35, y is 0 to 1 - x, and δ is 0 to 1/2 - *x*/*2.*
[3A] A proton-conducting solid electrolyte represented by a general formula: BaSc₁₋ₓNbₓO_{3-δ}H_{y}, in which x is 0.2 to 0.4, y is 0 to 1 - 2x, and δ is 0 to 1/2 - x.
[4A] A proton-conducting solid electrolyte represented by a general formula: BaSc₁₋ₓTaₓO_{3-δ}H_{y}, in which x is 0.2 to 0.4, y is 0 to 1 - 2x, and δ is 0 to 1/2 - x.
[5A] A proton-conducting solid electrolyte represented by a general formula: BaSc₁₋ₓVₓO_{3-δ}H_{y}, in which x is 0.2 to 0.25, y is 0 to 1 - 2x, and δ is 0 to 1/2 - x.
[6A] A proton-conducting solid electrolyte represented by a general formula: BaSc₁₋ₓWₓO_{3-δ}H_{y}, in which x is 0.15 to 0.25, y is 0 to 1 - 3x, and δ is 0 to 1/2 - 3x/2.
[7A] A proton-conducting solid electrolyte represented by a general formula: BaSc₁₋ₓCeₓO_{3-δ}H_{y}, in which x is 0.35 to 0.45, y is 0 to 1 - x, and δ is 0 to 1/2 - *x*/*2.*
[8A] A proton-conducting solid electrolyte represented by a general formula: BaSc₁₋ₓSbₓO_{3-δ}H_{y}, in which x is 0.35 to 0.45, y is 0 to 1 - 2x, and δ is 0 to 1/2 - x.
[9A] A proton-conducting solid electrolyte represented by a general formula: BaSc₁₋ₓMoₓO_{3-δ}H_{y}, in which x is more than 0 and 1/3 or less, y is 0 to 1, and δ is 0 to 1/2.
[10A] A proton-conducting solid electrolyte represented by a general formula: BaSc₁₋ₓGeₓO_{3-δ}H_{y}, in which x is more than 0 and less than 1/2, y is 0 to 1, and δ is 0 to 1/2.
[11A] A proton-conducting solid electrolyte represented by a general formula: BaSc₁₋ₓNbₓO_{3-δ}H_{y}, in which x is more than 0 and 1/2 or less, y is 0 to 1, and δ is 0 to 1/2.
[12A] A proton-conducting solid electrolyte represented by a general formula: BaSc₁₋ₓTaₓO_{3-δ}H_{y}, in which x is more than 0 and 1/2 or less, y is 0 to 1, and δ is 0 to 1/2.
[13A] A proton-conducting solid electrolyte represented by a general formula: BaSc₁₋ₓVₓO_{3-δ}H_{y}, in which x is more than 0 and 1/2 or less, y is 0 to 1, and δ is 0 to 1/2.
[14A] A proton-conducting solid electrolyte represented by a general formula: BaSc₁₋ₓWₓO_{3-δ}H_{y}, in which x is more than 0 and 1/3 or less, y is 0 to 1, and δ is 0 to 1/2.
[15A] A proton-conducting solid electrolyte represented by a general formula: BaSc₁₋ₓSbₓO_{3-δ}H_{y}, in which x is more than 0 and 1/2 or less, y is 0 to 1, and δ is 0 to 1/2.
[16A] A proton-conducting solid electrolyte represented by a general formula: BaA₁₋ₓMₓO_{3-δ}H_{y}, in which A is an element having an ionic radius of 0.52 to 0.97 Å, excluding Ce, In, and Zr; M is an element having an ionic radius of 70% to 130% of the ionic radius of A, excluding A, Zr, and Ce, or a mixed formulation of a plurality of elements having an average ionic radius of 70% to 130% of the ionic radius of A, excluding A; x is more than 0 and less than 1 (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1); y is 0 to 1; and δ is 0 to 1/2.
[17A] A proton-conducting solid electrolyte represented by a general formula: BaSc₁₋ₓMₓO_{3-δ}H_{y}, in which M represents a mixed formulation of a plurality of elements excluding Sc, Zr, and Ce, in which the average ionic radius of M is 70% to 130% of an ionic radius of Sc; x is more than 0 and 1 or less (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1); y is 0 to 1; and δ is 0 to 1/2.
[18A] A proton-conducting solid electrolyte represented by a general formula: Ba_{1-ε}Sc₁₋ₓMoₓO_{3-δ}H_{y}, in which x is more than 0 and *1*/*3* or less, y is 0 to 1, ε is 0 to 0.7, and δ is 0 to 1/2.
[19A] A proton-conducting solid electrolyte represented by a general formula: Ba_{1-ε}Sc₁₋ₓGeₓO_{3-δ}H_{y}, in which x is more than 0 and less than 1/2, y is 0 to 1, ε is 0 to 0.7, and δ is 0 to 1/2.
[20A] A proton-conducting solid electrolyte represented by a general formula: Ba_{1-ε}Sc₁₋ₓNbₓO_{3-δ}H_{y}, in which x is more than 0 and 1/2 or less, y is 0 to 1, ε is 0 to 0.7, and δ is 0 to 1/2.
[21A] A proton-conducting solid electrolyte represented by a general formula: Ba_{1-ε}Sc₁₋ₓTaₓO_{3-δ}H_{y}, in which x is more than 0 and 1/2 or less, y is 0 to 1, ε is 0 to 0.7, and δ is 0 to 1/2.
[22A] A proton-conducting solid electrolyte represented by a general formula: Ba_{1-ε}Sc₁₋ₓVₓO_{3-δ}H_{y}, in which x is more than 0 and 1/2 or less, y is 0 to 1, ε is 0 to 0.7, and δ is 0 to 1/2.
[23A] A proton-conducting solid electrolyte represented by a general formula: Ba_{1-ε}Sc₁₋ₓWₓO_{3-δ}H_{y}, in which x is more than 0 and 1/3 or less, y is 0 to 1, ε is 0 to 0.7, and δ is 0 to 1/2.
[24A] A proton-conducting solid electrolyte represented by a general formula: Ba_{1-ε}Sc₁₋ₓCeₓO_{3-δ}H_{y}, in which x is more than 0 and less than 1, y is 0 to 1, ε is more than 0.05 to 0.7 (here, in a case where 0.05 < ε < 0.2, 0 < x < 0.5), and δ is 0 to 1/2.
[25A] A proton-conducting solid electrolyte represented by a general formula: Ba_{1-ε}Sc₁₋ₓSbₓO_{3-δ}H_{y}, in which x is more than 0 and 1/2 or less, y is 0 to 1, ε is 0 to 0.7, and δ is 0 to 1/2.
[26A] A proton-conducting solid electrolyte represented by a general formula: Ba_{1-ε}Sc₁₋ₓMₓO_{3-δ}H_{y}, in which M is an element having an ionic radius of 70% to 130% of an ionic radius of Sc, excluding Sc, or a mixed formulation of a plurality of elements excluding Sc, in which the average ionic radius is 70% to 130% of the ionic radius of Sc; x is more than 0 and 1 or less (here, in a case where M is Ti and ε is 0, x is more than 0 and less than 0.2, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1); y is 0 to 1; ε is 0 to 0.7; and δ is 0 to 1/2.
[27A] A proton-conducting solid electrolyte represented by a general formula: Ba_{1-ε}A₁₋ₓMₓO_{3-δ}H_{y}, in which A is an element having an ionic radius of 0.52 to 0.97 Å, excluding Ce, In, and Zr; M is an element having an ionic radius of 70% to 130% of the ionic radius of A, excluding A, or a mixed formulation of a plurality of elements having an average ionic radius of 70% to 130% of the ionic radius of A, excluding A; x is more than 0 and less than 1 (here, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1); y is 0 to 1; ε is 0 to 0.7; and δ is 0 to 1/2.
[28A] A proton-conducting solid electrolyte represented by a general formula: BaSc_{1-x-z}MoₓM_{z}O_{3-δ}H_{y}, in which x is more than 0 and 1/3 or less; z is more than 0 and less than 1; M is an element having an ionic radius of 70% to 130% of an ionic radius of Sc, excluding Sc and Mo, or a mixed formulation of a plurality of elements having an average ionic radius of 70% to 130% of the ionic radius of Sc, excluding Sc and Mo (here, in a case where M is Ce, a range of x = 0.01 to 0.2 or a range of z = 0.74 to 0.84 is excluded); y is 0 to 1; and δ is 0 to 1/2.
[29A] A proton-conducting solid electrolyte represented by a general formula: BaSc_{1-x-z}GeₓM_{z}O_{3-δ}H_{y}, in which x is more than 0 and less than 1; z is more than 0 and less than 1; M is an element having an ionic radius of 70% to 130% of an ionic radius of Sc, excluding Sc and Ge, or a mixed formulation of a plurality of elements having an average ionic radius of 70% to 130% of the ionic radius of Sc, excluding Sc and Ge; y is 0 to 1; and δ is 0 to 1/2.
[30A] A proton-conducting solid electrolyte represented by a general formula: BaSc_{1-x-z}NbₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Nb, or a mixed formulation of a plurality of elements having an average ionic radius of 70% to 130% of the ionic radius of Sc, excluding Sc and Nb (here, in a case where M is Ce, a range of x = 0.01 to 0.2 or a range of z = 0.74 to 0.84 is excluded); y is 0 to 1; and δ is 0 to 1/2.
[31A] A proton-conducting solid electrolyte represented by a general formula: BaSc_{1-x-z}TaₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Ta, or a mixed formulation of a plurality of elements having an average ionic radius of 70% to 130% of the ionic radius of Sc, excluding Sc and Ta (here, in a case where M is Ce, a range of x = 0.01 to 0.2 or a range of z = 0.74 to 0.84 is excluded); y is 0 to 1; and δ is 0 to 1/2.
[32A] A proton-conducting solid electrolyte represented by a general formula: BaSc_{1-x-z}VₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and V, or a mixed formulation of a plurality of elements having an average ionic radius of 70% to 130% of the ionic radius of Sc, excluding Sc and V (here, in a case where M is Ce, a range of x = 0.01 to 0.2 or a range of z = 0.74 to 0.84 is excluded); y is 0 to 1; and δ is 0 to 1/2.
[33A] A proton-conducting solid electrolyte represented by a general formula: BaSc_{1-x-z}WₓM_{z}O_{3-δ}H_{y}, in which x is more than 0 and 1/3 or less; z is more than 0 and less than 1; M is an element having an ionic radius of 70% to 130% of an ionic radius of Sc, excluding Sc and W, or a mixed formulation of a plurality of elements having an average ionic radius of 70% to 130% of the ionic radius of Sc, excluding Sc and W (here, in a case where M is Ce, a range of x = 0.01 to 0.2 or a range of z = 0.74 to 0.84 is excluded); y is 0 to 1; and δ is 0 to 1/2.
[34A] A proton-conducting solid electrolyte represented by a general formula: BaSc_{1-x-z}CeₓM_{z}O_{3-δ}H_{y}, in which x is more than 0 and less than 1; z is more than 0 and less than 1; M is an element having an ionic radius of 70% to 130% of an ionic radius of Sc, excluding Sc, Ce, and Zr, or a mixed formulation of a plurality of elements having an average ionic radius of 70% to 130% of the ionic radius of Sc, excluding Sc and Ce (here, in a case where z is 0, x is more than 0 and less than 0.2, in a case where M is Cr, Fe, Mn, Co, or Ni, a range of x = 0.01 to 0.02 is excluded, and in a case where M is Mo, Nb, Ta, V, W, or Sb, a range of z = 0.01 to 0.2 or a range of x = 0.74 to 0.84 is excluded); y is 0 to 1; and δ is 0 to 1/2.
[35A] A proton-conducting solid electrolyte represented by a general formula: BaSc_{1-x-z}SbₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Sb, or a mixed formulation of a plurality of elements having an average ionic radius of 70% to 130% of the ionic radius of Sc, excluding Sc and Sb (here, in a case where M is Ce, a range of x = 0.01 to 0.2 or a range of z = 0.74 to 0.84 is excluded); y is 0 to 1; and δ is 0 to 1/2.
[36A] A proton-conducting solid electrolyte represented by a general formula: Ba_{1-ε}Sc_{1-x-z}MoₓM_{z}O_{3-δ}H_{y}, in which x is more than 0 and 1/3 or less; z is more than 0 and less than 1; M is an element having an ionic radius of 70% to 130% of an ionic radius of Sc, excluding Sc and Mo, or a mixed formulation of a plurality of elements having an average ionic radius of 70% to 130% of the ionic radius of Sc, excluding Sc and Mo (here, in a case where M is Ce, a range of x = 0.01 to 0.2 or a range of z = 0.74 to 0.84 is excluded); y is 0 to 1; ε is 0 to 0.7; and δ is 0 to 1/2.
[37A] A proton-conducting solid electrolyte represented by a general formula: Ba_{1-ε}Sc_{1-x-z}GeₓM_{z}O_{3-δ}H_{y}, in which x is more than 0 and less than 1; z is more than 0 and less than 1; M is an element having an ionic radius of 70% to 130% of an ionic radius of Sc, excluding Sc and Ge, or a mixed formulation of a plurality of elements having an average ionic radius of 70% to 130% of the ionic radius of Sc, excluding Sc and Ge; y is 0 to 1; ε is 0 to 0.7; and δ is 0 to 1/2.
[38A] A proton-conducting solid electrolyte represented by a general formula: Ba_{1-ε}Sc_{1-x-z}NbₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Nb, or a mixed formulation of a plurality of elements having an average ionic radius of 70% to 130% of the ionic radius of Sc, excluding Sc and Nb (here, in a case where M is Ce, a range of x = 0.01 to 0.2 or a range of z = 0.74 to 0.84 is excluded); y is 0 to 1; ε is 0 to 0.7; and δ is 0 to 1/2.
[39A] A proton-conducting solid electrolyte represented by a general formula: Ba_{1-ε}Sc_{1-x-z}TaₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Ta, or a mixed formulation of a plurality of elements having an average ionic radius of 70% to 130% of the ionic radius of Sc, excluding Sc and Ta (here, in a case where M is Ce, a range of x = 0.01 to 0.2 or a range of z = 0.74 to 0.84 is excluded); y is 0 to 1; ε is 0 to 0.7; and δ is 0 to 1/2.
[40A] A proton-conducting solid electrolyte represented by a general formula: Ba_{1-ε}Sc_{1-x-z}VₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and V, or a mixed formulation of a plurality of elements having an average ionic radius of 70% to 130% of the ionic radius of Sc, excluding Sc and V (here, in a case where M is Ce, a range of x = 0.01 to 0.2 or a range of z = 0.74 to 0.84 is excluded); y is 0 to 1; ε is 0 to 0.7; and δ is 0 to 1/2.
[41A] A proton-conducting solid electrolyte represented by a general formula: Ba_{1-ε}Sc_{1-x-z}WₓM_{z}O_{3-δ}H_{y}, in which x is more than 0 and 1/3 or less; z is more than 0 and less than 1; M is an element having an ionic radius of 70% to 130% of an ionic radius of Sc, excluding Sc and W, or a mixed formulation of a plurality of elements having an average ionic radius of 70% to 130% of the ionic radius of Sc, excluding Sc and W (here, in a case where M is Ce, a range of x = 0.01 to 0.2 or a range of z = 0.74 to 0.84 is excluded); y is 0 to 1; ε is 0 to 0.7; and δ is 0 to 1/2.
[42A] A proton-conducting solid electrolyte represented by a general formula: Ba_{1-ε}Sc_{1-x-z}CeₓM_{z}O_{3-δ}H_{y}, in which x is more than 0 and less than 0.8; z is more than 0 and less than 1; M is an element having an ionic radius of 70% to 130% of an ionic radius of Sc, excluding Sc and Ce (in a case where ε is 0, further excluding Zr), or a mixed formulation of a plurality of elements having an average ionic radius of 70% to 130% of the ionic radius of Sc, excluding Sc and Ce (here, in a case where M is Cr, Fe, Mn, Co, or Ni, a range of ε = 0 to 0.2 or a range of x = 0.01 to 0.02 is excluded, and in a case where M is Mo, Nb, Ta, V, W, or Sb, a range of z = 0.01 to 0.2 or a range of x = 0.74 to 0.84 is excluded); y is 0 to 1; ε is 0 to 0.7; and δ is 0 to 1/2.
[43A] A proton-conducting solid electrolyte represented by a general formula: Ba_{1-ε}Sc_{1-x-z}SbₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Sb, or a mixed formulation of a plurality of elements having an average ionic radius of 70% to 130% of the ionic radius of Sc, excluding Sc and Sb (here, in a case where M is Ce, a range of x = 0.01 to 0.2 or a range of z = 0.74 to 0.84 is excluded); y is 0 to 1; ε is 0 to 0.7; and δ is 0 to 1/2.
[44A] A proton-conducting solid electrolyte represented by a general formula: Ba₅R₂Al₂MO₁₃, in which R in the general formula is a cation of one element selected from the group consisting of a rare earth element and Ga, and M in the general formula is a cation of one element selected from the group consisting of Hf and Sn.
[45A] The proton-conducting solid electrolyte according to [44A], in which M in the general formula is Sn, and R in the general formula is Nd, Sm, Eu, Gd, Dy, Ho, Y, Er, Tm, or Yb.
[46A] The proton-conducting solid electrolyte according to any one of [1A] to [45A], in which the proton-conducting solid electrolyte is used under temperature conditions of 100°C to 700°C.
[47A] The proton-conducting solid electrolyte according to any one of [1A] to [46A], in which the proton-conducting solid electrolyte is used under temperature conditions of 200°C to 400°C.
[48A] The proton-conducting solid electrolyte according to any one of [1A] to [47A], in which, in a case where a proton conductivity in a grain is measured, a temperature at which an electrical conductivity represented by log [σ(Scm⁻¹)] is more than -2.0 is 350°C or lower.
[49A] The proton-conducting solid electrolyte according to any one of [1A] to [48A], in which the proton-conducting solid electrolyte is used for a solid oxide fuel cell (SOFC), a proton ceramic fuel cell (PCFC), a sensor, a battery, an electrode, an electrolyte, a hydrogen permeable membrane, a catalyst, a photocatalyst, an electrical, electronic, or communication apparatus, an energy or environment-related apparatus, or an optical apparatus.
[50A] The proton-conducting solid electrolyte according to any one of [1A] to [49A], in which the proton-conducting solid electrolyte is used for a solid oxide fuel cell (SOFC), a proton ceramic fuel cell (PCFC), a sensor, or a hydrogen permeable membrane.
[51A] An electrolyte layer containing the proton-conducting solid electrolyte according to any one of [1A] to [50A].
[52A] A battery including the electrolyte layer according to Claim [51A].
[53A] The battery according to [52A], in which the battery is a solid oxide fuel cell (SOFC) or a proton ceramic fuel cell (PCFC).

### Advantageous Effects of Invention

According to the present invention, a proton-conducting solid electrolyte which can exhibit high proton conductivity and stability in a low-temperature range and a medium-temperature range, an electrolyte layer formed of the proton-conducting solid electrolyte, and a battery are provided.

### BRIEF DESCRIPTION OF DRAWINGS

[FIG. 1] A schematic view showing the crystal structure of a compound (A) according to the present embodiment.
[FIG. 2] A schematic view showing the crystal structure of a compound (B) according to the present embodiment.
[FIG. 3] Test Example 1: a graph showing results of an XRD measurement of BaSc_{0.8}Mo_{0.2}O_{3-δ}.
[FIG. 4] Test Example 2: a graph showing results of an XRD measurement of BaSc_{0.75}Mo_{0.25}O_{3-δ}.
[FIG. 5] Test Example 3: a graph showing results of an XRD measurement of BaSc_{0.85}Mo_{0.15}O_{3-δ}.
[FIG. 6] Test Example 4: a graph showing results of an XRD measurement of BaSc_{0.7}Ge_{0.3}O_{3-δ}.
[FIG. 7] Test Example 5: a graph showing results of an XRD measurement of BaSc_{0.75}Ge_{0.25}O_{3-δ}.
[FIG. 8] Test Example 6: a graph showing results of an XRD measurement of BaSc_{0.65}Ge_{0.35}O_{3-δ}.
[FIG. 9] Test Example 7: a graph showing results of an XRD measurement of BaSc_{0.8}Nb_{0.2}O_{3-δ}.
[FIG. 10] Test Example 8: a graph showing results of an XRD measurement of BaSc_{0.75}Nb_{0.25}O_{3-δ}.
[FIG. 11] Test Example 9: a graph showing results of an XRD measurement of BaSc_{0.7}Nb_{0.3}O_{3-δ}.
[FIG. 12] Test Example 10: a graph showing results of an XRD measurement of BaSc_{0.65}Nb_{0.35}O_{3-δ}.
[FIG. 13] Test Example 11: a graph showing results of an XRD measurement of BaSc_{0.6}Nb_{0.4}O_{3-δ}.
[FIG. 14] Test Example 12: a graph showing results of an XRD measurement of BaSc_{0.7}Ta_{0.3}O_{3-δ}.
[FIG. 15] Test Example 13: a graph showing results of an XRD measurement of BaSc_{0.8}V_{0.2}O_{3-δ}.
[FIG. 16] Test Example 14: a graph showing results of an XRD measurement of BaSc_{0.75}V_{0.25}O_{3-δ}.
[FIG. 17] Test Example 15: a graph showing results of an XRD measurement of BaSc_{0.8}W_{0.2}O_{3-δ}.
[FIG. 18] Test Example 16: a graph showing results of an XRD measurement of BaSc_{0.6}Ce_{0.4}O_{3-δ}.
[FIG. 19] Test Example 17: a graph showing results of an XRD measurement of BaSc_{0.6}Sb_{0.4}O_{3-δ}.
[FIG. 20] Test Example 1: a graph showing the total direct current electrical conductivity measured by cooling BaSc_{0.8}Mo_{0.2}O_{3-δ} in wet air (water vapor partial pressure: 0.02 atm at 18°C) and maintaining the temperature.
[FIG. 21] Test Example 2: a graph showing the total direct current electrical conductivity measured by cooling BaSc_{0.75}Mo_{0.25}O_{3-δ} in wet air (water vapor partial pressure: 0.02 atm at 18°C) and maintaining the temperature.
[FIG. 22] Test Example 3: a graph showing the total direct current electrical conductivity measured by cooling BaSc_{0.85}Mo_{0.15}O_{3-δ} in wet air (water vapor partial pressure: 0.02 atm at 18°C) and maintaining the temperature.
[FIG. 23] Test Example 4: a graph showing the total direct current electrical conductivity measured by cooling BaSc_{0.7}Ge_{0.3}O_{3-δ} in wet air (water vapor partial pressure: 0.02 atm at 18°C) and maintaining the temperature.
[FIG. 24] Test Example 5: a graph showing the total direct current electrical conductivity measured by cooling BaSc_{0.75}Ge_{0.25}O_{3-δ} in wet air (water vapor partial pressure: 0.02 atm at 18°C) and maintaining the temperature.
[FIG. 25] Test Example 6: a graph showing the total direct current electrical conductivity measured by cooling BaSc_{0.65}Ge_{0.35}O_{3-δ} in wet air (water vapor partial pressure: 0.02 atm at 18°C) and maintaining the temperature.
[FIG. 26] Test Example 7: a graph showing the bulk conductivity and the grain boundary conductivity, which are measured by cooling BaSc_{0.8}Nb_{0.2}O_{3-δ} in wet air (water vapor partial pressure: 0.02 atm at 18°C) and maintaining the temperature.
[FIG. 27] Test Example 8: a graph showing the total direct current electrical conductivity measured by cooling BaSc_{0.75}Nb_{0.25}O_{3-δ} in wet air (water vapor partial pressure: 0.02 atm at 18°C) and maintaining the temperature.
[FIG. 28] Test Example 9: a graph showing the total direct current electrical conductivity measured by cooling BaSc_{0.7}Nb_{0.3}O_{3-δ} in wet air (water vapor partial pressure: 0.02 atm at 18°C) and maintaining the temperature.
[FIG. 29] Test Example 10: a graph showing the total direct current electrical conductivity measured by cooling BaSc_{0.65}Nb_{0.35}O_{3-δ} in wet air (water vapor partial pressure: 0.02 atm at 18°C) and maintaining the temperature.
[FIG. 30] Test Example 11: a graph showing the total direct current electrical conductivity measured by cooling BaSc_{0.6}Nb_{0.4}O_{3-δ} in wet air (water vapor partial pressure: 0.02 atm at 18°C) and maintaining the temperature.
[FIG. 31] Test Example 12: a graph showing the total direct current electrical conductivity measured by cooling BaSc_{0.7}Ta_{0.3}O_{3-δ} in wet air (water vapor partial pressure: 0.02 atm at 18°C) and maintaining the temperature.
[FIG. 32] Test Example 13: a graph showing the total direct current electrical conductivity measured by cooling BaSc_{0.8}V_{0.2}O_{3-δ} in wet air (water vapor partial pressure: 0.02 atm at 18°C) and maintaining the temperature.
[FIG. 33] Test Example 14: a graph showing the total direct current electrical conductivity measured by cooling BaSc_{0.75}V_{0.25}O_{3-δ} in wet air (water vapor partial pressure: 0.02 atm at 18°C) and maintaining the temperature.
[FIG. 34] Test Example 15: a graph showing the total direct current electrical conductivity measured by cooling BaSc_{0.8}W_{0.2}O_{3-δ} in wet air (water vapor partial pressure: 0.02 atm at 18°C) and maintaining the temperature.
[FIG. 35] Test Example 16: a graph showing the total direct current electrical conductivity measured by cooling BaSc_{0.6}Ce_{0.4}O_{3-δ} in wet air (water vapor partial pressure: 0.02 atm at 18°C) and maintaining the temperature.
[FIG. 36] Test Example 17: a graph showing the total direct current electrical conductivity measured by cooling BaSc_{0.6}Sb_{0.4}O_{3-δ} in wet air (water vapor partial pressure: 0.02 atm at 18°C) and maintaining the temperature.
[FIG. 37] A graph showing an in-grain conductivity and the grain boundary conductivity of Test Example 1.
[FIG. 38] A graph showing a comparison of the electrical conductivity between Test Example 1 and the material in the related art for each temperature.
[FIG. 39] A graph showing time dependence of the electrical conductivity of Test Example 1 for each gas atmosphere.
[FIG. 40] A graph showing oxygen partial pressure dependence of the total direct current electrical conductivity of Test Example 1 in a dry atmosphere and a wet atmosphere.
[FIG. 41] A graph showing an Arrhenius plot of the total direct current electrical conductivity of Test Example 1 for each gas atmosphere.
[FIG. 42] A graph showing oxygen partial pressure dependence of the bulk conductivity for Test Example 1.
[FIG. 43] A graph showing results of thermogravimetric analysis of Test Example 1.
[FIG. 44] A graph showing temperature dependence of a proton concentration estimated from the results of thermogravimetric analysis of Test Example 1.
[FIG. 45] A graph showing an Arrhenius plot of a diffusion coefficient of Test Example 1.
[FIG. 46] A graph showing stability of Test Example 1 in an oxidizing atmosphere, in a reducing atmosphere, and in CO₂.
[FIG. 47] A graph showing results of XRD measurement for each of synthesis examples of Test Examples 18 to 27.
[FIG. 48] Test Example 18: a graph showing the total direct current electrical conductivity of Ba₅Nd₂Al₂SnO₁₃.
[FIG. 49] Test Example 19: a graph showing the total direct current electrical conductivity of Ba₅Sm₂Al₂SnO₁₃.
[FIG. 50] Test Example 20: a graph showing the total direct current electrical conductivity of Ba₅Gd₂Al₂SnO₁₃.
[FIG. 51] Test Example 21: a graph showing the total direct current electrical conductivity of Ba₅Dy₂Al₂SnO₁₃.
[FIG. 52] Test Example 22: a graph showing the total direct current electrical conductivity of Ba₅Ho₂Al₂SnO₁₃.
[FIG. 53] Test Example 23: a graph showing the total direct current electrical conductivity of Ba₅Er₂Al₂SnO₁₃.
[FIG. 54] Test Example 24: a graph showing the total direct current electrical conductivity of Ba₅Tm₂Al₂SnO₁₃.
[FIG. 55] Test Example 25: a graph showing the total direct current electrical conductivity of Ba₅Yb₂Al₂SnO₁₃.
[FIG. 56] Test Example 26: a graph showing the total direct current electrical conductivity of Ba₅Y₂Al₂SnO₁₃.
[FIG. 57] Test Example 27: a graph showing the total direct current electrical conductivity of Ba₅Eu₂Al₂SnO₁₃.
[FIG. 58] A graph showing a summary of the total direct current electrical conductivity of Test Examples 18 to 27.
[FIG. 59] Test Example 28: a graph showing results of an XRD measurement of BaSc_{0.775}Mo_{0.225}O_{3-δ}.
[FIG. 60] Test Example 28: a graph showing the bulk conductivity of BaSc_{0.775}Mo_{0.225}O_{3-δ} in wet air.
[FIG. 61] Test Example 29: a graph showing results of an XRD measurement of BaSc_{0.725}Mo_{0.275}O_{3-δ}.
[FIG. 62] Test Example 29: a graph showing the bulk conductivity of BaSc_{0.725}Mo_{0.275}O_{3-δ} in wet air.
[FIG. 63] Test Example 30: a graph showing results of an XRD measurement of BaSc_{0.7}W_{0.3}O_{3-δ}.
[FIG. 64] Test Example 31: a graph showing results of an XRD measurement of BaSc_{0.75}W_{0.25}O_{3-δ}.
[FIG. 65] Test Example 31: a graph showing the total direct current electrical conductivity of BaSc_{0.75}Mo_{0.25}O_{3-δ} in wet air.
[FIG. 66] Test Example 32: a graph showing results of an XRD measurement of BaSc_{0.8}W_{0.2}O_{3-δ}.
[FIG. 67] Test Example 32: a graph showing the total direct current electrical conductivity of BaSc_{0.8}Mo_{0.2}O_{3-δ} in wet air.
[FIG. 68] Test Example 23: a graph showing a comparison of the electrical conductivity between Ba₅Er₂Al₂SnO₁₃ and the material in the related art for each temperature.
[FIG. 69] Test Example 23: a graph showing oxygen partial pressure dependence of the total direct current electrical conductivity of Ba₅Er₂Al₂SnO₁₃ in a dry atmosphere and a wet atmosphere for each temperature.
[FIG. 70] A graph showing time dependence of the electrical conductivity of Ba₅Er₂At₂SnO₁₃ for each gas atmosphere.
[FIG. 71] Test Example 23: a graph showing results of thermogravimetric analysis of Ba₅Er₂Al₂SnO₁₃.
[FIG. 72] Test Example 33: a graph showing results of an XRD measurement of Ba₅Er₂Al₂Sn_{0.5}Zr_{0.5}O₁₃.
[FIG. 73] Test Example 33: a graph showing the total direct current electrical conductivity of Ba₅Er₂Al₂Sn_{0.5}Zr_{0.5}O₁₃ in wet air.
[FIG. 74] Test Example 34: a graph showing results of an XRD measurement of Ba₅Er_{1.9}Al_{2.1}SnO₁₃.
[FIG. 75] Test Example 35: a graph showing results of an XRD measurement of Ba₅Er₂Al_{2.1}Sn_{0.9}O_{12.95}.

### DESCRIPTION OF EMBODIMENTS

Hereinafter, the proton-conducting solid electrolyte, the electrolyte layer, and the battery according to the present invention will be described with reference to embodiments. However, the present invention is not limited to the following embodiments.

### (Proton-conducting solid electrolyte)

In the present embodiment, first, a solid electrolyte is a solid material in which ions are conducted, and includes a material in which both ions and electrons (or holes thereof) are conducted. Although the solid electrolyte includes a small amount of impurities in each of compounds, it is assumed that a substantially single phase solid electrolyte can be used.

The proton-conducting solid electrolyte is a solid electrolyte mainly containing a proton as a carrier. Here, the proton-conducting solid electrolyte also includes a proton-oxide ion mixed conducting solid electrolyte, a proton-oxide ion-hole mixed conducting solid electrolyte, a proton-oxide ion-electron mixed conducting solid electrolyte, and the like, which are carriers of not only protons but also oxide ions, electrons, or holes of electrons.

### (First embodiment)

### (Compound (A): Ba_{1-ε}A₁₋ₓMₓO_{3-δ}H_{y})

In general, one aspect of the compound according to the present embodiment is a compound represented by General Formula (A), which is a proton-conducting solid electrolyte; hereinafter, referred to as a compound (A).

Ba_{1-ε}A₁₋ₓMₓO_{3-δ}H_{y} ... (A)

[in Formula (A), A is Sc or an element selected from elements having an ionic radius of 70% to 130% of an ionic radius of Sc, and M is a metal element]

Here, the compound (A) is a so-called perovskite-type proton conductor. The perovskite-type proton conductor is a compound having a perovskite-type structure, a distorted perovskite-type structure, or a perovskite-related structure, which can carry out electrical conductivity by proton conduction as described later. The perovskite structure refers to a compound having a structure including a perovskite unit or a compound having a structure similar thereto.

In Formula (A), A is Sc or an element having an ionic radius of 70% to 130% of an ionic radius of Sc. A may be a mixed formulation of a plurality of elements excluding Sc. Specifically, A is an element having an ionic radius of approximately 0.52 to 0.97 Å or a mixed formulation having an average ionic radius of approximately 0.52 to 0.97 Å.

The compound represented by Formula (A) contained in the proton-conducting solid electrolyte according to the present embodiment is preferably a compound in which A is Sc, but can be suitably used as long as it is an element which forms the same crystal structure in a case of being used instead of Sc.

Here, examples of the element within the above-described range of the ionic radius include Al having an ionic radius of 0.535 Å; Li having an ionic radius of 0.76 Å; Mn having an ionic radius of 0.53, 0.58, 0.645, 0.67, or 0.83 Å; V having an ionic radius of 0.54, 0.58, 0.64, or 0.79 Å; Os having an ionic radius of 0.525, 0.545, 0.575, or 0.63 Å; Cd having an ionic radius of 0.95 Å; U having an ionic radius of 0.73 or 0.76 Å; Np having an ionic radius of 0.71, 0.72, 0.75, or 0.87 Å; I having an ionic radius of 0.53 or 0.95 Å; Pm having an ionic radius of 0.97 Å; and Te having an ionic radius of 0.56 or 0.97 Å.

In addition, in the compound contained in the proton-conducting solid electrolyte according to the present embodiment, M in the compound represented by Formula (A) is a metal element. M in the compound represented by Formula (A) is preferably Mo, Ge, Nb, Ta, V, W, Ce, or Sb; more preferably Mo or Ge; and particularly preferably Mo.

In addition, a formulation represented by M may be one kind of element or a mixed formulation of two kinds of elements of M1 and M2.

In addition, in the compound contained in the proton-conducting solid electrolyte according to the present embodiment, M in the compound represented by Formula (A) may be a mixed formulation of a plurality of elements. Here, the fact that M is a mixed formulation of a plurality of elements means that M is a virtual element in which the plurality of elements are mixed at a proportion; and for example, a formulation in which m kinds of elements of M1, M2, ..., and Mm are mixed at a proportion is represented by M.

That is, in the following formulae, M1 and M2 may be metal formulations of the same element, different elements, or a plurality of elements, and may mainly contain a metal element.

In Formula (A), the above-described specific values of x, y, σ, and ε will be described with a specific formulation described later.

Here, ε which is a loss amount of Ba (atom) in Formula (A) is referred to as an A site loss amount or a Ba loss amount; and x which is a substitution amount of the A element with the M element is also referred to as an A element substitution amount, an M element substitution amount, or a B site substitution amount.

The compound according to the present embodiment is a proton conductor. Since a proton conductivity of the proton conductor is relatively high at a low temperature, a proton-conducting solid electrolyte suitably used for a low-temperature operable fuel cell can be obtained.

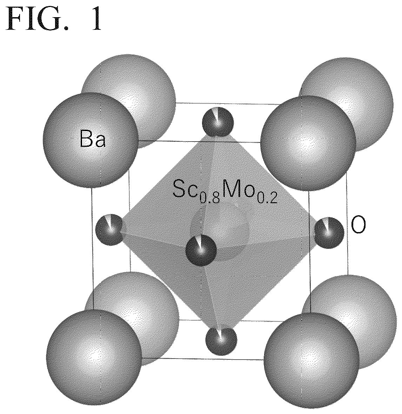

FIG. 1 shows a crystal structure of BaSc_{0.8}Mo_{0.2}O_{3-δ} among the compounds of Formula (A). Even in a case where an element having an ionic radius of 70% to 130% of the ionic radius of Sc is used instead of Sc for A in Formula (A), the crystal structure is almost the same.

The formulation of the compound according to the present embodiment can be determined by X-ray diffraction (XRD), X-ray fluorescence analysis (XRF), energy dispersive X-ray analysis (EDS), ICP emission analysis, or the like.

As a specific example of the present embodiment, the compound (A) may include compounds represented by the following [1] to [11].
[1] A proton-conducting solid electrolyte (1) represented by a general formula: Ba_{1-α}Sc₁₋ₓMoₓO_{3-δ}H_{y}, in which α is -0.2 to 0.2, x is 0.1 to 0.3, y is 0 to 1 - 3x, and δ is 0 to 1/2 - 3x/2.
[2] A proton-conducting solid electrolyte represented by a general formula: BaA₁₋ₓMₓO_{3-δ}H_{y}, in which A is an element having an ionic radius of 0.52 to 0.97 Å, excluding Ce, In, Zr, and Zn; M is an element having an ionic radius of 70% to 130% of the ionic radius of A, excluding A, Zr, Ce, and Zn, or a mixed formulation of a plurality of elements having an average ionic radius of 70% to 130% of the ionic radius of A, excluding A and Zn; x is more than 0 and less than 1 (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1); y is 0 to 1; and δ is 0 to 1/2.
[3] The proton-conducting solid electrolyte according to [2], in which A is Sc; M is Mo, Ge, Nb, Ta, V, W, or Sb; and in a case where M is Mo or W, x is more than 0 and 1/3 or less, in a case where M is Ge, x is more than 0 and less than 1/2, and in a case where M is Nb, Ta, V, or Sb, x is more than 0 and 1/2 or less.
[4] The proton-conducting solid electrolyte according to [2] or [3], in which the proton-conducting solid electrolyte is any of the following (2) to (8).
   (2) a proton-conducting solid electrolyte represented by a general formula: BaSc₁₋ₓGeₓO_{3-δ}H_{y}, in which x is 0.25 to 0.35, y is 0 to 1 - x, and δ is 0 to 1/2 - *x*/*2*
   (3) a proton-conducting solid electrolyte represented by a general formula: BaSc₁₋ₓNbₓO_{3-δ}H_{y}, in which x is 0.2 to 0.4, y is 0 to 1 - 2x, and δ is 0 to 1/2 - x
   (4) a proton-conducting solid electrolyte represented by a general formula: BaSc₁₋ₓTaₓO_{3-δ}H_{y}, in which x is 0.2 to 0.4, y is 0 to 1 - 2x, and δ is 0 to 1/2 - x
   (5) a proton-conducting solid electrolyte represented by a general formula: BaSc₁₋ₓVₓO_{3-δ}H_{y}, in which x is 0.2 to 0.25, y is 0 to 1 - 2x, and δ is 0 to 1/2 - x
   (6) a proton-conducting solid electrolyte represented by a general formula: BaSc₁₋ₓWₓO_{3-δ}H_{y}, in which x is 0.15 to 0.25, y is 0 to 1 - 3x, and δ is 0 to 1/2 - 3x/2
   (7) a proton-conducting solid electrolyte represented by a general formula: BaSc_{0.6}Ce_{0.4}O_{3-δ}
   (8) a proton-conducting solid electrolyte represented by a general formula: BaSc₁₋ₓSbₓO_{3-δ}H_{y}, in which x is 0.35 to 0.45, y is 0 to 1 - 2x, and δ is 0 to 1/2 - x
[5] A proton-conducting solid electrolyte represented by a general formula: BaSc₁₋ₓMₓO_{3-δ}H_{y}, in which M represents a mixed formulation of a plurality of elements excluding Sc, Zr, Ce, and Zn, in which the average ionic radius of M is 70% to 130% of an ionic radius of Sc; x is more than 0 and 1 or less (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1); y is 0 to 1; and δ is 0 to 1/2.
[6] A proton-conducting solid electrolyte represented by a general formula: Ba_{1-ε}Sc₁₋ₓMₓO_{3-δ}H_{y}, in which M is Mo, Ge, Nb, Ta, V, W, or Sb; y is 0 to 1; ε is 0 to 0.7; δ is 0 to 1/2; and in a case where M is Ge, x is more than 0 and less than 1/2, in a case where M is Nb, Ta, V, or Sb, x is more than 0 and 1/2 or less, and in a case where M is Mo or W, x is more than 0 and less than 1/3.
[7] A proton-conducting solid electrolyte represented by a general formula: Ba_{1-ε}Sc₁₋ₓCeₓO_{3-δ}H_{y}, in which x is more than 0 and less than 1; y is 0 to 1; ε is more than 0.05 to 0.7 (here, in a case where 0.05 < ε < 0.2, 0 < x < 0.5); and δ is 0 to 1/2.
[8] A proton-conducting solid electrolyte represented by a general formula: Ba_{1-ε}Sc₁₋ₓMₓO_{3-δ}H_{y}, in which M is an element having an ionic radius of 70% to 130% of an ionic radius of Sc, excluding Sc and Zn, or a mixed formulation of a plurality of elements excluding Sc and Zn, in which the average ionic radius is 70% to 130% of the ionic radius of Sc; x is more than 0 and 1 or less (here, in a case where M is Ti and ε is 0, x is more than 0 and less than 0.2, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1); y is 0 to 1; ε is 0 to 0.7; and δ is 0 to 1/2.
[9] A proton-conducting solid electrolyte represented by a general formula: Ba_{1-ε}A₁₋ₓMₓO_{3-δ}H_{y}, in which A is an element having an ionic radius of 0.52 to 0.97 Å, excluding Ce, In, Zr, and Zn; M is an element having an ionic radius of 70% to 130% of the ionic radius of A, excluding A and Zn, or a mixed formulation of a plurality of elements having an average ionic radius of 70% to 130% of the ionic radius of A, excluding A; x is more than 0 and less than 1 (here, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1); y is 0 to 1; ε is 0 to 0.7; and δ is 0 to 1/2.
[10] A proton-conducting solid electrolyte represented by a general formula: BaA_{1-x-z}M1ₓM2_{z}O_{3-δ}H_{y}, in which z is more than 0 and less than 1, y is 0 to 1, and δ is 0 to 1/2, in which the proton-conducting solid electrolyte is any of the following (28) to (35).
   (28) a proton-conducting solid electrolyte represented by a general formula: BaSc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded)
   (29) a proton-conducting solid electrolyte represented by a general formula: BaSc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn
   (30) a proton-conducting solid electrolyte represented by a general formula: BaSc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded)
   (31) a proton-conducting solid electrolyte represented by a general formula: BaSc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded)
   (32) a proton-conducting solid electrolyte represented by a general formula: BaSc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded)
   (33) a proton-conducting solid electrolyte represented by a general formula: BaSc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded)
   (34) a proton-conducting solid electrolyte represented by a general formula: BaSc_{1-x-z}CeₓM_{z}O_{3-δ}H_{y}, in which x is more than 0 and less than 1, and M is an element having an ionic radius of 70% to 130% of an ionic radius of Sc, excluding Sc, Ce, Zr, and Zn, or a mixed formulation of a plurality of elements having an average ionic radius of 70% to 130% of the ionic radius of Sc, excluding Sc, Ce, and Zn (here, in a case where z is 0, x is more than 0 and less than 0.2, in a case where M is Cr, Fe, Mn, Co, or Ni, a range of x = 0.01 to 0.02 is excluded, and in a case where M is Mo, Nb, Ta, V, W, or Sb, a range of z = 0.01 to 0.2 or a range of x = 0.74 to 0.84 is excluded)
   (35) a proton-conducting solid electrolyte represented by a general formula: BaSc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded)
[11] A proton-conducting solid electrolyte represented by a general formula: Ba_{1-ε}A_{1-x-z}M1ₓM2_{z}O_{3-δ}H_{y}, in which z is more than 0 and less than 1, y is 0 to 1, ε is 0 to 0.7, and δ is 0 to 1/2, in which the proton-conducting solid electrolyte is any of the following (36) to (43).
   (36) a proton-conducting solid electrolyte represented by a general formula: Ba_{1-ε}Sc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded)
   (37) a proton-conducting solid electrolyte represented by a general formula: Ba_{1-ε}Sc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn
   (38) a proton-conducting solid electrolyte represented by a general formula: Ba_{1-ε}Sc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded)
   (39) a proton-conducting solid electrolyte represented by a general formula: Ba_{1-ε}Sc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded)
   (40) a proton-conducting solid electrolyte represented by a general formula: Ba_{1-ε}Sc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded)
   (41) a proton-conducting solid electrolyte represented by a general formula: Ba_{1-ε}Sc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded)
   (42) a proton-conducting solid electrolyte represented by a general formula: Ba_{1-ε}Sc_{1-x-z}CeₓM_{z}O_{3-δ}H_{y}, in which x is more than 0 and less than 0.8, and M is an element having an ionic radius of 70% to 130% of an ionic radius of Sc, excluding Sc, Ce, and Zn (in a case where ε is 0, further excluding Zr), or a mixed formulation of a plurality of elements having an average ionic radius of 70% to 130% of the ionic radius of Sc, excluding Sc, Ce, and Zn (here, in a case where M is Cr, Fe, Mn, Co, or Ni, a range of ε = 0 to 0.2 or a range of x = 0.01 to 0.02 is excluded, and in a case where M is Mo, Nb, Ta, V, W, or Sb, a range of z = 0.01 to 0.2 or a range of x = 0.74 to 0.84 is excluded)
   (43) a proton-conducting solid electrolyte represented by a general formula: Ba_{1-ε}Sc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded)

In addition, as another aspect of the present embodiment, the compound (A) may include compounds represented by the following formulations 1 to 7.

### (Formulation 1)

The formulation 1 is a compound represented by a general formula: Ba_{1-α}A₁₋ₓMₓO_{3-δ}H_{y}.

Specifically, the formulation 1 may be, for example,
(1A) represented by a general formula: Ba_{1-α}Sc₁₋ₓMoₓO_{3-δ}H_{y}, in which α is -0.2 to 0.2, x is 0.1 to 0.3, y is 0 to 1 - 3x, and δ is 0 to 1/2 - 3x/2;
(2A) represented by a general formula: BaSc₁₋ₓGeₓO_{3-δ}H_{y}, in which x is 0.25 to 0.35, y is 0 to 1 - x, and δ is 0 to 1/2 - x/2;
(3A) represented by a general formula: BaSc₁₋ₓNbₓO_{3-δ}H_{y}, in which x is 0.2 to 0.4, y is 0 to 1 - 2x, and δ is 0 to 112 - x;
(4A) represented by a general formula: BaSc₁₋ₓTaₓO_{3-δ}H_{y}, in which x is 0.2 to 0.4, y is 0 to 1 - 2x, and δ is 0 to 112 - x;
(5A) represented by a general formula: BaSc₁₋ₓVₓO_{3-δ}H_{y}, in which x is 0.2 to 0.25, y is 0 to 1 - 2x, and δ is 0 to 1/2 - x;
(6A) represented by a general formula: BaSc₁₋ₓWₓO_{3-δ}H_{y}, in which x is 0.15 to 0.25, y is 0 to 1 - 3x, and δ is 0 to 1/2 - 3x/2;
(7A) represented by a general formula: BaSc_{0.6}Ce_{0.4}O_{3-δ}; or
(8A) represented by a general formula: BaSc₁₋ₓSbₓO_{3-δ}H_{y}, in which x is 0.35 to 0.45, y is 0 to 1 - 2x, and δ is 0 to 1/2 - x.

### (Formulation 2)

The formulation 2 is a compound represented by a general formula: BaA₁₋ₓMₓO_{3-δ}H_{y}.

Specifically, the formulation 2 may be, for example,
(9A) represented by a general formula: BaSc₁₋ₓMoₓO_{3-δ}H_{y}, in which x is more than 0 and *1*/*3* or less, y is 0 to 1, and δ is 0 to 1/2;
(10A) represented by a general formula: BaSc₁₋ₓGeₓO_{3-δ}H_{y}, in which x is more than 0 and less than 1/2, y is 0 to 1, and δ is 0 to 1/2;
(11A) represented by a general formula: BaSc₁₋ₓNbₓO_{3-δ}H_{y}, in which x is more than 0 and 1/2 or less, y is 0 to 1, and δ is 0 to 1/2;
(12A) represented by a general formula: BaSc₁₋ₓTaₓO_{3-δ}H_{y}, in which x is more than 0 and 1/2 or less, y is 0 to 1, and δ is 0 to 1/2;
(13A) represented by a general formula: BaSc₁₋ₓVₓO_{3-δ}H_{y}, in which x is more than 0 and 1/2 or less, y is 0 to 1, and δ is 0 to 1/2;
(14A) represented by a general formula: BaSc₁₋ₓWₓO_{3-δ}H_{y}, in which x is more than 0 and *1*/*3* or less, y is 0 to 1, and δ is 0 to 1/2; or
(15A) represented by a general formula: BaSc₁₋ₓSbₓO_{3-δ}H_{y}, in which x is more than 0 and 1/2 or less, y is 0 to 1, and δ is 0 to 1/2.

### (Formulation 3)

The formulation 3 is a compound represented by a general formula: BaA₁₋ₓMₓO_{3-δ}H_{y}. In general, the formulation 3 is an aspect in which M of the formulation 2 is expanded to various elements.

Specifically, the formulation 3 may be, for example,
(16A) represented by a general formula: BaA₁₋ₓMₓO_{3-δ}H_{y}, in which A is an element having an ionic radius of 0.52 to 0.97 Å, excluding Ce, In, and Zr, M is an element having an ionic radius of 70% to 130% of the ionic radius of A, excluding A, Zr, and Ce, or a mixed formulation of a plurality of elements having an average ionic radius of 70% to 130% of the ionic radius of A, excluding A, x is more than 0 and less than 1 (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1), y is 0 to 1, and δ is 0 to 1/2, here, the element having an ionic radius of 70% to 130% of the ionic radius of Sc can be selected from the above-described elements; or
(17A) represented by a general formula: BaSc₁₋ₓMₓO_{3-δ}H_{y}, in which M represents a mixed formulation of a plurality of elements excluding Sc, Zr, and Ce, in which an average ionic radius of M is 70% to 130% of an ionic radius of Sc; x is more than 0 and 1 or less (here, in a case where M is Ge, Sn, or Hf, x is more than 0 and less than 0.95, and in a case where M is a mixed element including Ti and any of Cr, Fe, Mn, Co, or Ni, the ratio of Cr, Fe, Mn, Co, or Ni in M is more than 0.2 and less than 1 or x is more than 0.2 and less than 1); y is 0 to 1; and δ is 0 to 1/2.

### (Formulation 4)

The formulation 4 is a compound represented by a general formula: Ba_{1-ε}Sc₁₋ₓMₓO_{3-δ}H_{y}. In general, the formulation 4 is a formulation in which Ba is adopted as a defect (A-site defect) in the formulation 2.

Specifically, the formulation 4 may be, for example,
(18A) represented by a general formula: Ba_{1-ε}Sc₁₋ₓMoₓO_{3-δ}H_{y}, in which x is more than 0 and 1/3 or less, y is 0 to 1, ε is 0 to 0.7, and δ is 0 to 1/2;
(19A) represented by a general formula: Ba_{1-ε}Sc₁₋ₓGeₓO_{3-δ}H_{y}, in which x is more than 0 and less than 1, y is 0 to 1, ε is 0 to 0.7, and δ is 0 to 1/2;
(20A) represented by a general formula: Ba_{1-ε}Sc₁₋ₓNbₓO_{3-δ}H_{y}, in which x is more than 0 and 1/2 or less, y is 0 to 1, ε is 0 to 0.7, and δ is 0 to 1/2;
(21A) represented by a general formula: Ba_{1-ε}Sc₁₋ₓTaₓO_{3-δ}H_{y}, in which x is more than 0 and 1/2 or less, y is 0 to 1, ε is 0 to 0.7, and δ is 0 to 1/2;
(22A) represented by a general formula: Ba_{1-ε}Sc₁₋ₓVₓO_{3-δ}H_{y}, in which x is more than 0 and 1/2 or less, y is 0 to 1, ε is 0 to 0.7, and δ is 0 to 1/2;
(23A) represented by a general formula: Ba_{1-ε}Sc₁₋ₓWₓO_{3-δ}H_{y}, in which x is more than 0 and *1*/*3* or less, y is 0 to 1, ε is 0 to 0.7, and δ is 0 to 1/2;
(24A) represented by a general formula: Ba_{1-ε}Sc₁₋ₓCeₓO_{3-δ}H_{y}, in which x is more than 0 and less than 1, y is 0 to 1, ε is 0 to 0.7, and δ is 0 to 1/2, here, in a case where ε = 0, x is more than 0 and less than 0.8; or
(25A) represented by a general formula: Ba_{1-ε}Sc₁₋ₓSbₓO_{3-δ}H_{y}, in which x is more than 0 and 1/2 or less, y is 0 to 1, ε is 0 to 0.7, and δ is 0 to 1/2.

### (Formulation 5)

The formulation 5 is a compound represented by a general formula: Ba_{1-ε}Sc₁₋ₓMₓO_{3-δ}H_{y}. In general, the formulation 5 is an aspect in which M of the formulation 4 is expanded to various elements.

Specifically, the formulation 5 may be, for example,
(26A) represented by a general formula: Ba_{1-ε}Sc₁₋ₓMₓO_{3-δ}H_{y}, in which M is an element having an ionic radius of 70% to 130% of an ionic radius of Sc, excluding Sc, or a mixed formulation of a plurality of elements excluding Sc, in which the average ionic radius is 70% to 130% of the ionic radius of Sc, x is more than 0 and 1 or less (here, in a case where M is Ti and ε is 0, x is more than 0 and less than 0.2, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1), y is 0 to 1, ε is 0 to 0.7, and δ is 0 to 1/2, here, the element having an ionic radius of 70% to 130% of the ionic radius of Sc can be selected from the above-described elements; or
(27A) represented by a general formula: Ba_{1-ε}A₁₋ₓMₓO_{3-δ}H_{y}, in which A is an element having an ionic radius of 0.52 to 0.97 Å, excluding Ce, In, and Zr, M is an element having an ionic radius of 70% to 130% of the ionic radius of A, excluding A, or a mixed formulation of a plurality of elements having an average ionic radius of 70% to 130% of the ionic radius of A, excluding A, x is more than 0 and less than 1 (here, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, the ratio of Cr, Fe, Mn, Co, or Ni in M is more than 0.2 and less than 1, ε is more than 0.2, or x is more than 0.2 and less than 1), y is 0 to 1, ε is 0 to 0.7, and δ is 0 to 1/2.

### (Formulation 6)

The formulation 6 is a compound represented by a general formula: BaA_{1-x-z}M1ₓM2_{z}O_{3-δ}H_{y}.

Specifically, the formulation 6 may be, for example,
(28A) represented by a general formula: BaSc_{1-x-z}MoₓM_{z}O_{3-δ}H_{y}, in which x is more than 0 and 1/3 or less, z is more than 0 and less than 1, M is an element having an ionic radius of 70% to 130% of an ionic radius of Sc, excluding Sc and Mo, or a mixed formulation of a plurality of elements excluding Sc and Mo, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2;
(29A) represented by a general formula: BaSc_{1-x-z}GeₓM_{z}O_{3-δ}H_{y}, in which x is more than 0 and less than 1, z is more than 0 and less than 1, M is an element having an ionic radius of 70% to 130% of an ionic radius of Sc, excluding Sc and Ge, or a mixed formulation of a plurality of elements excluding Sc and Ge, in which the average ionic radius is 70% to 130% of the ionic radius of Sc, y is 0 to 1, and δ is 0 to 1/2;
(30A) represented by a general formula: BaSc_{1-x-z}NbₓM_{z}O_{3-δ}H_{y}, in which x is more than 0 and 1/2 or less; z is more than 0 and less than 1; M is an element having an ionic radius of 70% to 130% of an ionic radius of Sc, excluding Sc and Nb, or a mixed formulation of a plurality of elements excluding Sc and Nb, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2;
(31A) represented by a general formula: BaSc_{1-x-z}TaₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and Ta, or a mixed formulation of a plurality of elements excluding Sc and Ta, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2;
(32A) represented by a general formula: BaSc_{1-x-z}VₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and V, or a mixed formulation of a plurality of elements excluding Sc and V, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2;
(33A) represented by a general formula: BaSc_{1-x-z}WₓM_{z}O_{3-δ}H_{y}, in which x is more than 0 and 1/3 or less, z is more than 0 and less than 1, M is an element having an ionic radius of 70% to 130% of an ionic radius of Sc, excluding Sc and W, or a mixed formulation of a plurality of elements excluding Sc and W, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2;
(34A) represented by a general formula: BaSc_{1-x-z}CeₓM_{z}O_{3-δ}H_{y}, in which x is more than 0 and less than 1, z is more than 0 and less than 1, M is an element having an ionic radius of 70% to 130% of an ionic radius of Sc, excluding Sc, Ce, and Zr, or a mixed formulation of a plurality of elements having the average ionic radius of 70% to 130% of the ionic radius of Sc, excluding Sc and Ce (here, in a case where z is 0, x is more than 0 and less than 0.2, in a case where M is Cr, Fe, Mn, Co, or Ni, a range of x = 0.01 to 0.02 is excluded, and in a case where M is Mo, Nb, Ta, V, W, or Sb, a range of z = 0.01 to 0.2 or a range of x = 0.74 to 0.84 is excluded), y is 0 to 1, and δ is 0 to 1/2; or
(35A) represented by a general formula: BaSc_{1-x-z}SbₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and Sb, or a mixed formulation of a plurality of elements excluding Sc and Sb, in which the average ionic radius is 70% to 130% of the ionic radius of Sc (here, in a case where M is Ce, a range of x = 0.01 to 0.2 or a range of z = 0.74 to 0.84 is excluded), y is 0 to 1, and δ is 0 to 1/2.

### (Formulation 7)

The formulation 7 is a compound represented by a general formula: Ba_{1-ε}A_{1-x-z}M1ₓM2_{z}O_{3-δ}H_{y}. In general, the formulation 7 is a formulation in which Ba is adopted as a defect (A-site defect) in the formulation 6.

Specifically, the formulation 7 may be, for example,
(36A) represented by a general formula: Ba_{1-ε}Sc_{1-x-z}MoₓM_{z}O_{3-δ}H_{y}, in which x is more than 0 and 1/3 or less, z is more than 0 and less than 1, M is an element having an ionic radius of 70% to 130% of an ionic radius of Sc, excluding Sc and Mo, or a mixed formulation of a plurality of elements excluding Sc and Mo, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2;
(37A) represented by a general formula: Ba_{1-ε}Sc_{1-x-z}GeₓM_{z}O_{3-δ}H_{y}, in which x is more than 0 and less than 1, z is more than 0 and less than 1, M is an element having an ionic radius of 70% to 130% of an ionic radius of Sc, excluding Sc and Ge, or a mixed formulation of a plurality of elements excluding Sc and Ge, in which the average ionic radius is 70% to 130% of the ionic radius of Sc, y is 0 to 1, ε is 0 to 0.7, and δ is 0 to 1/2;
(38A) represented by a general formula: Ba_{1-ε}Sc_{1-x-z}NbₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and Nb, or a mixed formulation of a plurality of elements excluding Sc and Nb, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2;
(39A) represented by a general formula: Ba_{1-ε}Sc_{1-x-z}TaₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and Ta, or a mixed formulation of a plurality of elements excluding Sc and Ta, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2;
(40A) represented by a general formula: Ba_{1-ε}Sc_{1-x-z}VₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and V, or a mixed formulation of a plurality of elements excluding Sc and V, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2;
(41A) represented by a general formula: Ba_{1-ε}Sc_{1-x-z}WₓM_{z}O_{3-δ}H_{y}, in which x is more than 0 and 1/3 or less, z is more than 0 and less than 1, M is an element having an ionic radius of 70% to 130% of an ionic radius of Sc, excluding Sc and W, or a mixed formulation of a plurality of elements excluding Sc and W, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2;
(42A) represented by a general formula: Ba_{1-ε}Sc_{1-x-z}CeₓM_{z}O_{3-δ}H_{y}, in which x is more than 0 and less than 0.8, z is more than 0 and less than 1, M is an element having an ionic radius of 70% to 130% of an ionic radius of Sc, excluding Sc and Ce (in a case where ε is 0, further excluding Zr), or a mixed formulation of a plurality of elements having an average ionic radius of 70% to 130% of the ionic radius of Sc, excluding Sc and Ce (here, in a case where M is Cr, Fe, Mn, Co, or Ni, a range of ε = 0 to 0.2 or a range of x = 0.01 to 0.02 is excluded, and in a case where M is Mo, Nb, Ta, V, W, or Sb, a range of z = 0.01 to 0.2 or a range of x = 0.74 to 0.84 is excluded), y is 0 to 1, ε is 0 to 0.7, and δ is 0 to 1/2; or
(43A) represented by a general formula: Ba_{1-ε}Sc_{1-x-z}SbₓM_{z}O_{3-δ}H_{y}, in which x is more than 0 and 1/2 or less, z is more than 0 and less than 1, M is an element having an ionic radius of 70% to 130% of an ionic radius of Sc, excluding Sc and Sb, or a mixed formulation of a plurality of elements excluding Sc and Sb, in which the average ionic radius is 70% to 130% of the ionic radius of Sc (here, in a case where M is Ce, a range of x = 0.01 to 0.2 or a range of z = 0.74 to 0.84 is excluded), y is 0 to 1, ε is 0 to 0.7, and δ is 0 to 1/2.

### (Effect of present embodiment)

The proton-conducting solid electrolyte containing the compound according to the present embodiment has a high proton conductivity in a low- to medium-temperature range.

As the related art, an oxide in which Zr of barium zirconate is replaced with a dopant such as Sc, Y, and lanthanoid is known, and it is attempted to increase the proton concentration by increasing the substitution rate with the dopant such as Sc. In addition, in Patent Document 3, it is attempted to increase the proton conductivity by increasing the proportion of Sc and the proportion of protons.

On the other hand, in the present embodiment, a configuration has been found in which the proton conductivity can be further increased by a similar crystal structure using Sc-Mo instead of Zr-Sc of Patent Document 3 and using elements having an ionic radius close to these elements.

The compound according to the present embodiment has a proton conductivity which greatly exceeds that of 20Y:BZ, which is a proton conductor in the related art. In the related art, as the proton conductor, BaZr₁₋ₓMₓO_{3-δ} and BaCe₁₋ₓMₓO_{3-δ} (in both, M is mainly Y, Sc, or the like) have been used. In the compound according to the present embodiment, Sr or an element having an ionic radius close to that of Sr is used instead of Zr or Ce, and Mo, Ge, or the like is used as M. In particular, in a case where M = Mo is used, it is possible to obtain a proton conductivity which is generally one digit higher than that in the related art.

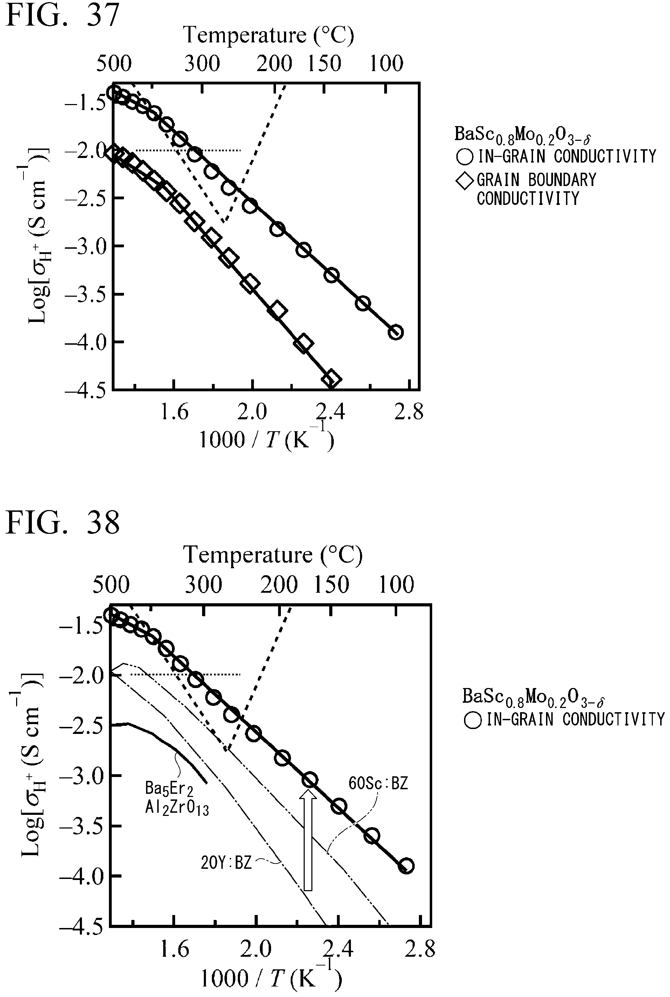

In particular, the compound according to the present embodiment has a proton conductivity which greatly exceeds that of 20Y:BZ, which is a proton conductor in the related art. Specifically, BaSc_{0.8}Mo_{0.2}O_{3-δ} at 175°C exhibits a value approximately 10 times the in-grain conductivity of 20Y:BZ at the same temperature (arrow in FIG. 38).

In addition, in a wide oxygen partial pressure range of 10⁻²⁵ to approximately 0 atm, the total electrical conductivity is almost independent of the oxygen partial pressure, is almost constant, and the stability is also high. It is suggested that the compound according to the present embodiment is dominated by the proton conduction.

### (Second embodiment)

### (Compound (B): Ba_{5-α}R₂₊ₓAl_{2+y}M_{1+z}O_{13+δ})

One aspect of the compound according to the present embodiment is a compound represented by General Formula (B), which is a proton-conducting solid electrolyte; hereinafter, referred to as a compound (B).

Ba_{5-α}R₂₊ₓAl_{2+y}M_{1+z}O_{13+δ} ... (B)

[in Formula (B), α is 0 or more and 2 or less, x is -1 or more and 1 or less, y is -1 or more and 1 or less, z is -0.5 or more and 0.5 or less, δ is -1 or more and 1 or less, R in the general formula is a cation of one element selected from the group consisting of a rare earth element and Ga, and M in the general formula is a cation of one element selected from the group consisting of Hf, Sn, and Zr]

The compound represented by Formula (B) is a kind of so-called hexagonal perovskite-related compound. The hexagonal perovskite-related compound in the present embodiment is a compound having a layered structure including a hexagonal perovskite unit or a compound having a similar structure.

In addition, in the compound contained in the proton-conducting solid electrolyte according to the present embodiment, R in the compound of Formula (B) is a cation of one element selected from the group consisting of a rare earth element and Ga. R in the compound of Formula (B) is preferably Nd, Sm, Eu, Gd, Dy, Ho, Y, Er, Tm, or Yb.

In addition, in the compound contained in the proton-conducting solid electrolyte according to the present embodiment, M in the compound of Formula (B) is Hf, Sn, or Zr. Among these, M is preferably Sn. In addition, the formulation represented by M in the compound of Formula (B) may be one kind of the element or a mixed formulation of a plurality of elements such as Sn, Hf, and Zr.

In the compound contained in the proton-conducting solid electrolyte according to the present embodiment, it is more preferable that M in the general formula is Sn and R is Nd, Sm, Eu, Gd, Dy, Ho, Y, Er, Tm, or Yb.

More specific examples of the compound of Formula (B) include Ba₅Er₂Al₂Sn₁₋ₓZrₓO₁₃, Ba₅Er₂₋ₓAl₂₊ₓSnO₁₃, and Ba₅Er₂₊ₓAl₂Sn₁₋ₓO_{13-x/2}.

### (Compound (B1): Ba₅R₂Al₂MO₁₃)

In addition, as a specific example of the compound included in the compound (B), one aspect of the compound according to the present embodiment may be a compound represented by General Formula (B1), which is a proton-conducting solid electrolyte; hereinafter, referred to as a compound (B1).

Ba₅R₂Al₂MO₁₃ ... (B1)

[in Formula (B1), R is a cation of one element selected from the group consisting of a rare earth element, In, and Ga, and M is a cation of one element selected from the group consisting of Hf and Sn]

R is more preferably a cation of one element selected from the group consisting of a rare earth element and Ga.

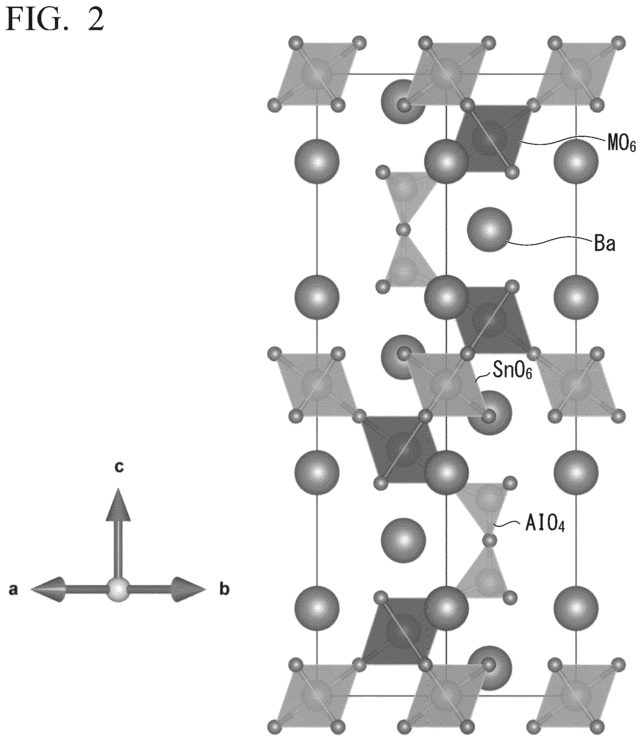

FIG. 2 shows a crystal structure of Ba₅Nd₂Al₂SnO₁₃ among the compounds of Formula (B1). Even in a case where R in Formula (B1) is Nd, Sm, Eu, Gd, Dy, Ho, Y, Er, Tm, or Yb, the crystal structure is almost the same.

In the related art, Ba₅Nd₂Al₂ZrOl₃ and the like have been known as a proton conductor. The compound (B1) according to the present embodiment can exhibit a more excellent proton conductivity in a low- to medium-temperature range by using Sn or Hf instead of Zr of the above-described compound in the related art.

### (Proton conducting properties of compound according to present embodiment)

In the present embodiment, it is considered that the compound having each of the above-described requirements of the compounds (A) and (B) has properties as various ion conductors. In particular, it is assumed that the above-described compound can obtain an effective electrical conductivity in a case of being used as a proton conductor. The proton conductor is a compound in which electricity is conducted by conduction (movement) of protons (hydrogen ions, H+). In addition, the proton-conducting solid electrolyte using the compound according to the present embodiment is preferably used under temperature conditions of 200°C to 1,200°C, more preferably used under temperature conditions of 200°C to 1,000°C, still more preferably used at 200°C or higher and lower than 700°C, and particularly preferably used at 200°C to 600°C. Under the temperature condition, the fuel cell can be stably operated in a wider temperature range than the fuel cell in the related art. Therefore, the constraints such as the devices and the disposition required for the operation are small, and a wide application range can be obtained.

The proton-conducting solid electrolyte using the compound according to the present embodiment can also be operated at a temperature higher than 600°C, which is an operating temperature of a solid oxide fuel cell (SOFC), for example.

In the proton-conducting solid electrolyte according to the present embodiment, it is preferable that, in a case where a proton conductivity in a grain is measured, a temperature at which an electrical conductivity represented by log [σ(Scm⁻¹)] is more than -2.0 is 350°C or lower. In addition, the above-described temperature is more preferably 320°C or lower. Since the electrical conductivity at 350°C or lower is sufficiently high, the electrical conductivity is high at a low temperature, and thus the proton-conducting solid electrolyte can be particularly preferably used for a battery or other devices operating at a low temperature.

The proton-conducting solid electrolyte may be used in a form obtained by molding a crystal of a powder into a film shape, a layered shape (sheet shape or plate shape), or the like. In addition, the proton-conducting solid electrolyte may be used as a powder.

The proton-conducting solid electrolyte may contain one or two or more kinds of compounds corresponding to the above-described compound (A) or (B). The proton-conducting solid electrolyte may contain a compound other than the above-described compound (A) or (B). For example, another proton-conducting compound may be contained. However, in a case where the electrolyte is processed into a material having a film shape, a layered shape, or the like, in order to obtain a uniform material, it is preferable that a content proportion of the compound corresponding to the compound (A) or (B) is high, and the proton-conducting solid electrolyte may be composed of only the compound.

In a case where the proton-conducting solid electrolyte according to the present embodiment is a powder, the proton-conducting solid electrolyte may be a single crystal or may be an aggregate of a plurality of crystal grains. In addition, the above-described aggregate may be a polycrystal.

It is also preferable that the average grain size of the crystal grains is 3 µm or more. In a case where the average grain size of the crystal grains is within the above-described range, electric resistance due to grain boundary conduction in the proton-conducting solid electrolyte can be suppressed, and the proton conductivity can be further improved. In addition, in the proton-conducting solid electrolyte, it is still more preferable that the average grain size of the crystal grains is 6 to 7 µm. In a case where the average grain size of the crystal grains is within the above-described range, an increase in the electric resistance due to the grain boundary conduction in the proton-conducting solid electrolyte can be suppressed, and the proton conductivity can be further improved.

### (Proton-conducting solid electrolyte layer)

The proton-conducting solid electrolyte according to the present embodiment can be used as a proton-conducting solid electrolyte layer by being formed in a layered shape or formed to be included in a layered structure. The proton-conducting solid electrolyte layer may include other ion conductors in addition to the proton-conducting solid electrolyte according to the present embodiment. In order for a battery or the like using the proton-conducting solid electrolyte according to the present embodiment to exhibit high electrical conductivity and to be effectively operated as a low-temperature operation battery described later, for example, it is preferable to contain the proton-conducting solid electrolyte containing the compound according to the present embodiment by 50% by mass or more, more preferably 70% by mass or more of the proton-conducting solid electrolyte layer.

### (Battery including proton-conducting solid electrolyte or proton-conducting solid electrolyte layer)

The proton-conducting solid electrolyte according to the present embodiment or the electrolyte layer containing the proton-conducting solid electrolyte can be used in a battery containing these materials. The proton-conducting solid electrolyte according to the present embodiment can be particularly suitably used for a fuel cell as described above.

The battery using the proton-conducting solid electrolyte according to the present embodiment or the electrolyte layer containing the proton-conducting solid electrolyte can be particularly suitably used for a low-temperature operation battery. In the present embodiment, the low-temperature operation battery is a battery which operates at 200°C to 1,200°C, preferably 200°C to 1,000°C, more preferably 200°C or higher and lower than 700°C, and particularly preferably 200°C to 600°C, as described above.

The battery according to the present embodiment includes, for example, an anode, a cathode, and the above-described proton-conducting solid electrolyte layer interposed therebetween. The cathode and the proton-conducting solid electrolyte may form an integrated cathode-proton-conducting solid electrolyte layer.

### (Other uses of proton-conducting solid electrolyte)

In the related art, since the proton-conducting solid electrolyte containing a compound having a perovskite-type structure, a distorted perovskite-type structure, or a perovskite-related structure, or containing a hexagonal perovskite-related compound exhibits high ion conductivity, the proton-conducting solid electrolyte has been widely used for a battery, a sensor, a film used for ion concentration, ion separation, permeation, or the like, a catalyst, and the like. The proton-conducting solid electrolyte according to the present embodiment can be used in the same manner as the above-described applications. For example, in addition to the fuel cell, the proton-conducting solid electrolyte according to the present embodiment can be used for other batteries, sensors, electrodes, electrolytes, hydrogen concentrators, hydrogen separation membranes, hydrogen permeable membranes, hydrogen pumps, catalysts, photocatalysts, electrical, electronic, or communication apparatuses, energy or environment-related apparatuses, optical apparatuses, and the like.

The above-described proton-conducting solid electrolyte layer according to the present embodiment can be particularly suitably used for a fuel cell, a sensor, or the like. Examples of the fuel cell include a solid oxide fuel cell (SOFC) and a proton ceramic fuel cell (PCFC).

The proton-conducting solid electrolyte according to the present embodiment can be used as an electrolyte for a gas sensor or the like, for example. The gas sensor, gas detector, or the like can be constituted by attaching a sensitive electrode corresponding to the gas to be detected on the electrolyte. For example, a hydrogen sensor, a carbon dioxide gas sensor in a case where a sensitive electrode containing carbonate is used, an NOx sensor in a case where a sensitive electrode containing nitrate is used, and an SOx sensor in a case where a sensitive electrode containing sulfate is used can be obtained. In addition, by assembling with an electrolytic cell, a collecting device or a decomposing device for NOx and/or SOx contained in exhaust gas can be constituted.

The proton-conducting solid electrolyte according to the present embodiment can be used as an adsorbent or an adsorption-separation agent for ions or the like, various catalysts, or the like.

In the proton-conducting solid electrolyte according to the present embodiment, various rare earths in the ion conductor may also act as an activator which forms a luminescence center (color center). In this case, it can be used as a wavelength changing material or the like.

The proton-conducting solid electrolyte according to the present embodiment may also be formed into a superconductor by doping an electron carrier or a hole carrier.

The proton-conducting solid electrolyte according to the present embodiment can also be used to manufacture an all-solid-state electrochromic element by using the proton-conducting solid electrolyte as an ion conductor, attaching an inorganic compound or the like, which is colored or discolored by insertion or extraction of a conductive ion, to a surface of the ion conductor, and further forming a translucent electrode such as ITO thereon. By using the all-solid-state electrochromic element, it is possible to provide an electrochromic display having memory characteristics with reduced power consumption.

### (Method of producing proton-conducting solid electrolyte)

In a method of producing the proton-conducting solid electrolyte according to the present embodiment, the above-described compound is produced by a solid phase reaction method.

The solid phase reaction method can be carried out by a conventionally known step. For example, starting raw materials are mixed such that a molar ratio of elements of the starting raw materials is a target chemical formulation, pressurized to be molded into a pellet, and sintered to obtain a perovskite-type compound or a hexagonal perovskite-related compound.

First, a starting raw material containing an element of a desired chemical formulation is prepared. The starting raw material may be dried in advance. The drying can be carried out at 200°C to 1,000°C for 5 to 20 hours using an electric furnace or the like.

Next, the starting raw materials are mixed such that the molar ratio of elements is a target chemical formulation.

In the formulation of the molar ratio, the molar ratio of the cation can be used as a guide. The mixing and grinding can be appropriately carried out, but for example, the mixing and grinding can be repeatedly carried out for 0.5 to 2 hours using a dry mixing and grinding and a wet mixing and grinding using ethanol in combination, for example, using an agate mortar.

The obtained mixture is pressurized to be molded into a pellet. The molding can be carried out by pressurizing the above-described mixture after pre-sintering. The pre-sintering can be carried out at 300°C to 1,100°C for 5 to 24 hours using an electric furnace or the like. After the pre-sintering, pulverization and the above-described mixing and grinding may be carried out again. The mixture is molded into a pellet at 62 to 150 MPa.

The formed pellet is subjected to sintering (baking). The sintering is carried out at 1,400°C to 1,700°C for 3 to 24 hours in the atmosphere. It is more preferable that the sintering is carried out at 1,450°C to 1,600°C for 8 to 13 hours.

The compound according to the present embodiment can be effectively produced by these production methods, synthetic methods, and sintering conditions. Examples

Hereinafter, the present embodiment will be described with reference to Examples, but the present invention is not limited to the following examples.

### [Test Examples 1 to 17: synthesis and analysis of compound (A) and BaA₁₋ₓMₓO_{3-δ}]

### (Synthesis of BaSc_{0.8}Mo_{0.2}O_{3-δ})

A sample was synthesized by a solid phase reaction method. BaCO₃, Sc₂O₃, and MoO₃ were used as starting raw materials. The starting raw materials were dried in advance at 300°C for 12 hours, and weighed with an electronic balance. Using an agate mortar, dry mixing and grinding and wet mixing and grinding using ethanol was repeatedly carried out for 30 to 60 minutes. The obtained mixture was preliminarily sintered at 900°C for 12 hours in the atmosphere using an electric furnace. The mixture which had been preliminarily sintered was repeatedly subjected to wet mixing and grinding using ethanol and dry mixing and grinding for 30 to 60 minutes in an agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,500°C for 12 hours. As a result, a pellet as a sintered body was obtained.

### (Synthesis of other formulations of compound (A))

Other compounds corresponding to BaA₁₋ₓMₓO_{3-δ}, other than BaSc_{0.8}Mo_{0.2}O_{3-δ}, were also synthesized by the same method as described above and the following steps.

A sample was synthesized by a solid phase reaction method. BaCO₃, Sc₂O₃, MoO₃, GeO₂, Nb₂O₅, Ta₂O₅, WO₃, V₂O₅, CeO₂, and Sb₂O₃ were used as starting raw materials. The starting raw materials were dried in advance at 300°C for 12 hours, and weighed with an electronic balance. Using an agate mortar, dry mixing and grinding and wet mixing and grinding using ethanol was repeatedly carried out for 30 to 60 minutes.

### (Regarding Ba-Sc-Mo-O System)

The obtained mixture was preliminarily sintered at 900°C for 12 hours in the atmosphere using an electric furnace. The mixture which had been preliminarily sintered was repeatedly subjected to wet mixing and grinding using ethanol and dry mixing and grinding for 30 to 60 minutes in a agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,500°C for 12 hours.

### (Regarding Ba-Sc-Ge-O System)

The obtained mixture was preliminarily sintered at 900°C for 12 hours in the atmosphere using an electric furnace. The mixture which had been preliminarily sintered was repeatedly subjected to wet mixing and grinding using ethanol and dry mixing and grinding for 30 to 60 minutes in a agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,600°C for 12 hours.

### (Regarding Ba-Sc-Nb-O System)

The obtained mixture was preliminarily sintered at 900°C for 12 hours in the atmosphere using an electric furnace. The mixture which had been preliminarily sintered was repeatedly subjected to wet mixing and grinding using ethanol and dry mixing and grinding for 30 to 60 minutes in a agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,600°C for 12 hours.

### (Regarding Ba-Sc-Ta-O System)

The obtained mixture was preliminarily sintered at 900°C for 12 hours in the atmosphere using an electric furnace. The mixture which had been preliminarily sintered was repeatedly subjected to wet mixing and grinding using ethanol and dry mixing and grinding for 30 to 60 minutes in a agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,600°C for 12 hours.

### (Regarding Ba-Sc-W-O System)

The obtained mixture was preliminarily sintered at 1,000°C for 12 hours in the atmosphere using an electric furnace. The mixture which had been preliminarily sintered was repeatedly subjected to wet mixing and grinding using ethanol and dry mixing and grinding for 30 to 60 minutes in an agate mortar. The mixture was molded into a pellet shape having a diameter of 20 mm by pressurizing the mixture at 150 MPa using a uniaxial press machine.

The obtained pellet was placed in an electric furnace and sintered in the atmosphere at 1,600°C for 12 hours.

### (Regarding Ba-Sc-V-O System)

The obtained mixture was preliminarily sintered at 1,000°C for 12 hours in the atmosphere using an electric furnace. The mixture which had been preliminarily sintered was repeatedly subjected to wet mixing and grinding using ethanol and dry mixing and grinding for 30 to 60 minutes in an agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,450°C for 12 hours.

### (Regarding Ba-Sc-Ce-O System)

The obtained mixture was preliminarily sintered at 1,000°C for 12 hours in the atmosphere using an electric furnace. The mixture which had been preliminarily sintered was repeatedly subjected to wet mixing and grinding using ethanol and dry mixing and grinding for 30 to 60 minutes in an agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,600°C for 12 hours.

### (Regarding Ba-Sc-Sb-O System)

The obtained mixture was preliminarily sintered at 1,000°C for 12 hours in the atmosphere using an electric furnace. The mixture which had been preliminarily sintered was repeatedly subjected to wet mixing and grinding using ethanol and dry mixing and grinding for 30 to 60 minutes in an agate mortar. The mixture was molded into a pellet shape having a diameter of 20 mm by pressurizing the mixture at 150 MPa using a uniaxial press machine. The obtained pellet was placed in an electric furnace and sintered in the atmosphere at 1,500°C for 12 hours.

### (XRD Measurement)

In order to evaluate a formed phase of the obtained sintered body by X-ray diffraction (XRD), the sintered body was pulverized and ground with an agate mortar for 30 to 60 minutes. XRD measurement was performed for each test example using a diffractometer Rigaku MiniFlex. A lattice constant was determined by a Rietveld refinement of the obtained XRD data.

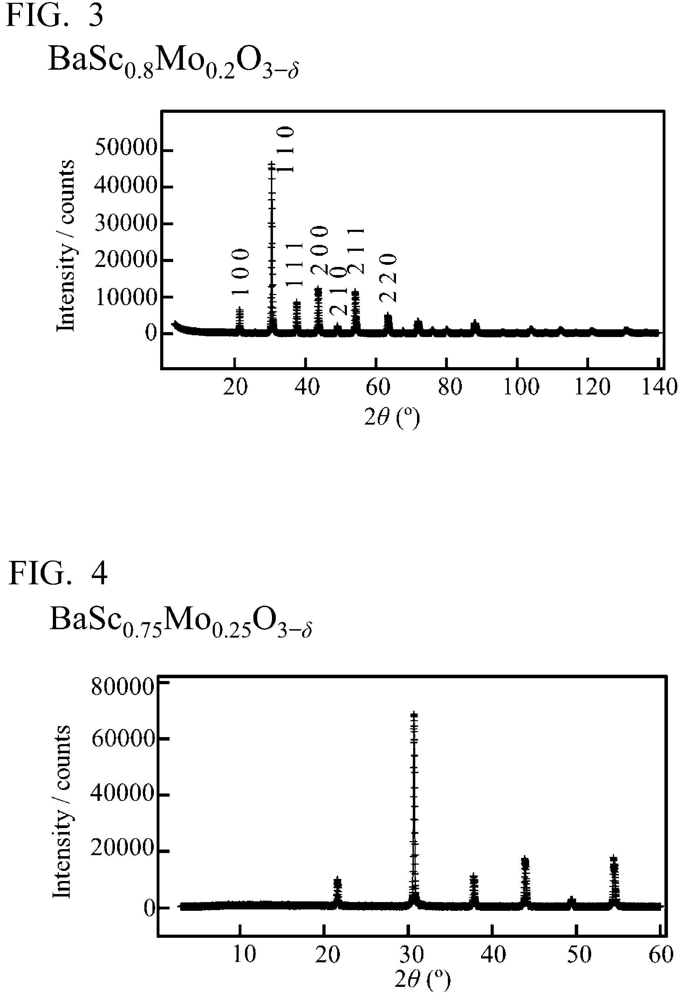

FIG. 3 shows the results of the XRD measurement of Test Example 1: BaSc_{0.8}Mo_{0.2}O_{3-δ};
FIG. 4 shows the results of the XRD measurement of Test Example 2: BaSc_{0.75}Mo_{0.25}O_{3-δ};

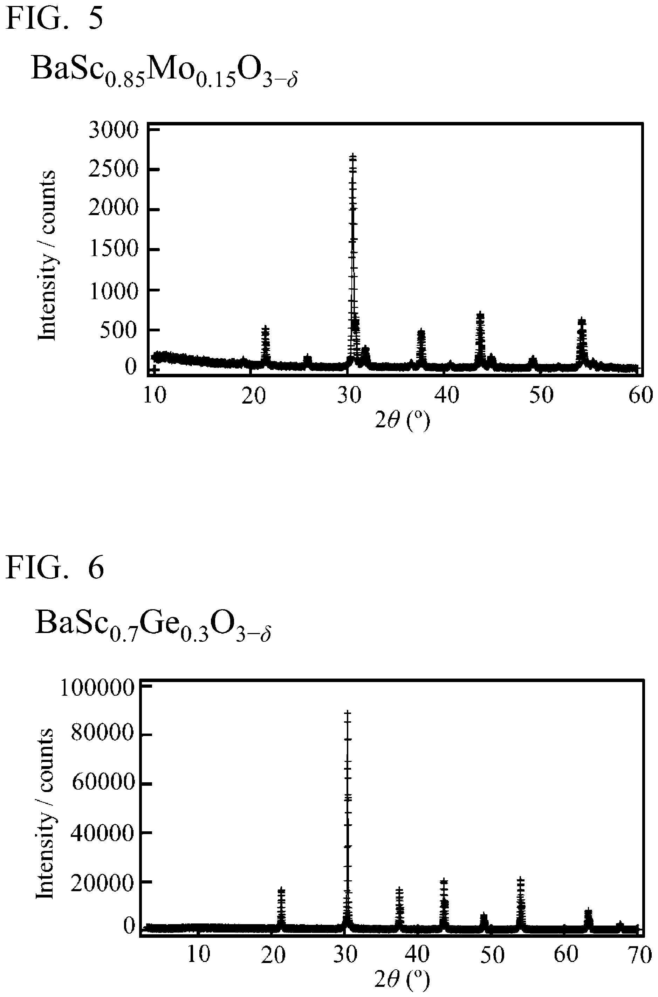

FIG. 5 shows the results of the XRD measurement of Test Example 3: BaSc_{0.85}Mo_{0.15}O_{3-δ};
FIG. 6 shows the results of the XRD measurement of Test Example 4: BaSc_{0.7}Ge_{0.3}O_{3-δ};

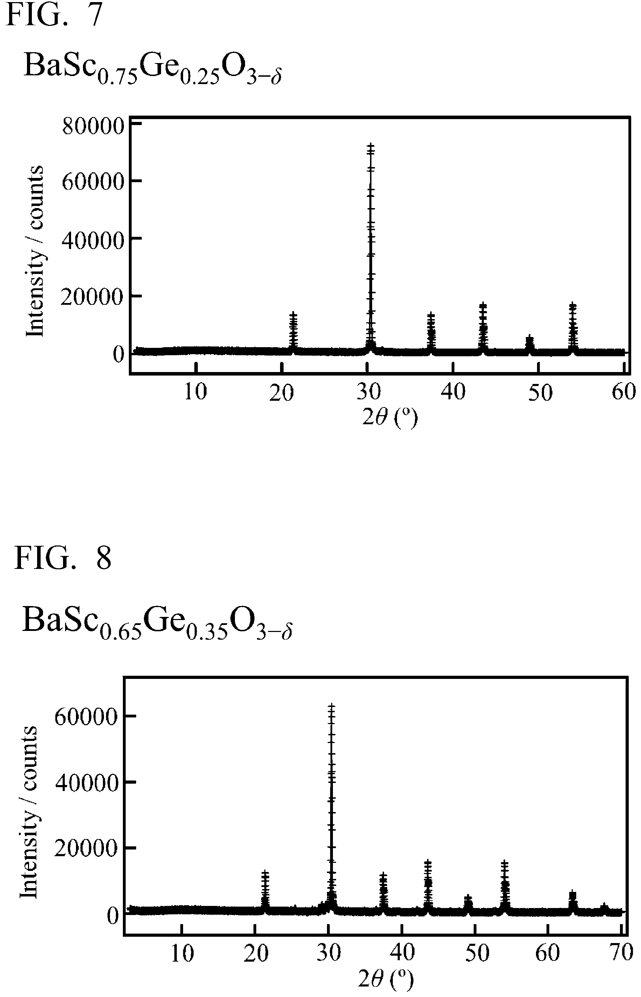

FIG. 7 shows the results of the XRD measurement of Test Example 5: BaSc_{0.75}Ge_{0.25}O_{3-δ};
FIG. 8 shows the results of the XRD measurement of Test Example 6: BaSc_{0.65}Ge_{0.35}O_{3-δ};

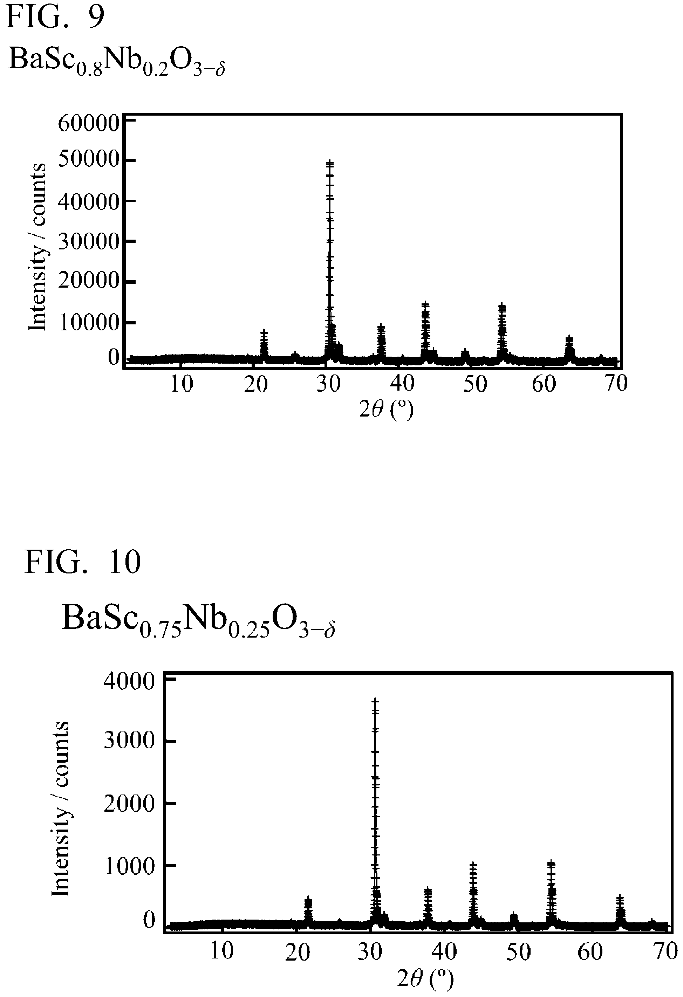

FIG. 9 shows the results of the XRD measurement of Test Example 7: BaSc_{0.8}Nb_{0.2}O_{3-δ};
FIG. 10 shows the results of the XRD measurement of Test Example 8: BaSc_{0.75}Nb_{0.25}O_{3-δ};

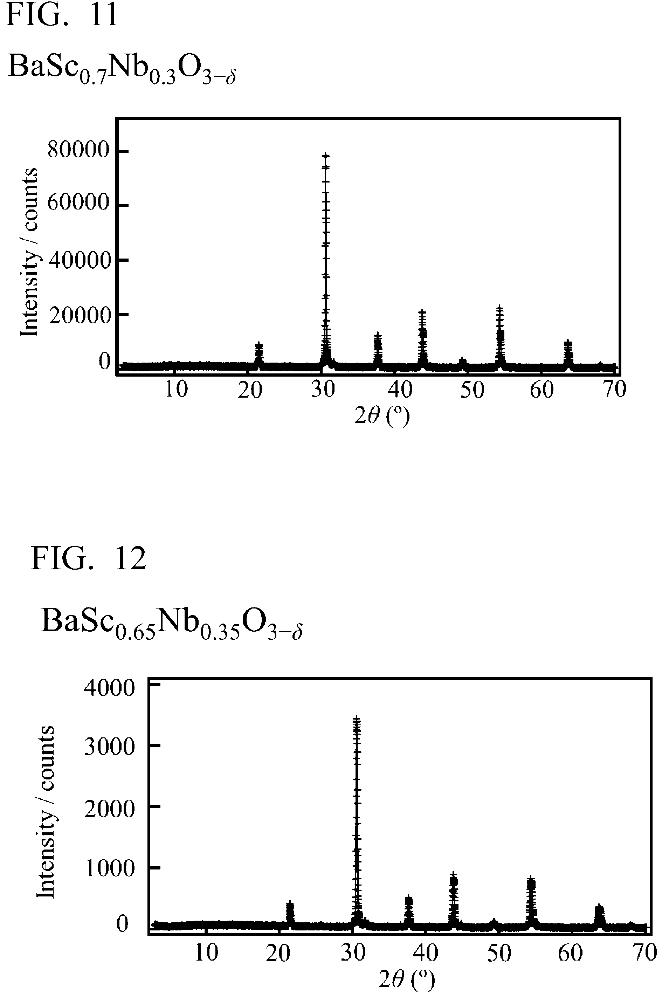

FIG. 11 shows the results of the XRD measurement of Test Example 9: BaSc_{0.7}Nb_{0.3}O_{3-δ};
FIG. 12 shows the results of the XRD measurement of Test Example 10: BaSc_{0.65}Nb_{0.35}O_{3-δ};

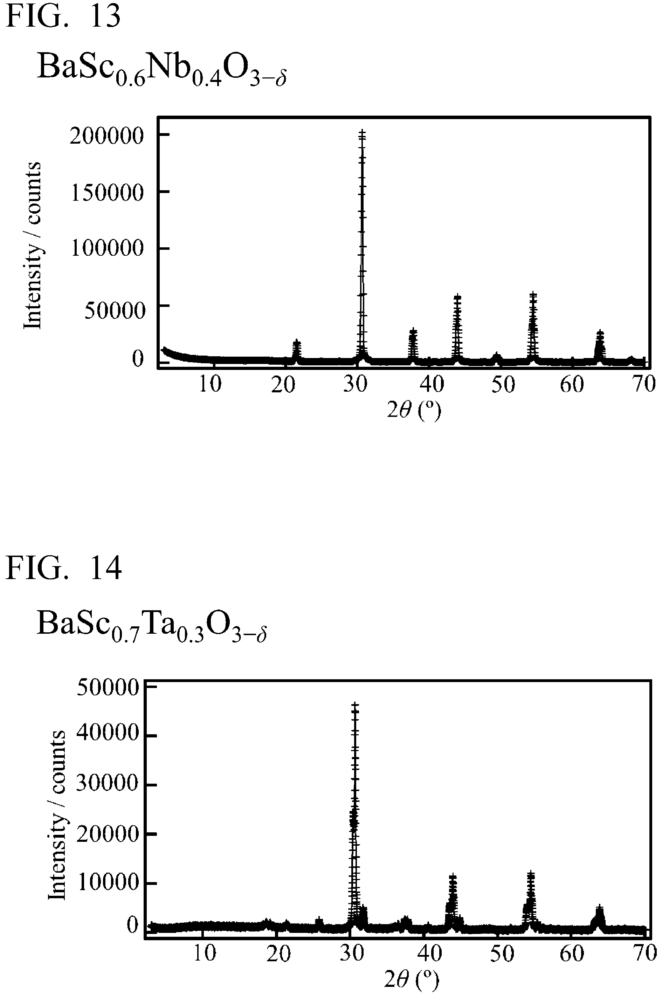

FIG. 13 shows the results of the XRD measurement of Test Example 11: BaSc_{0.6}Nb_{0.4}O_{3-δ};
FIG. 14 shows the results of the XRD measurement of Test Example 12: BaSc_{0.7}Ta_{0.3}O_{3-δ};

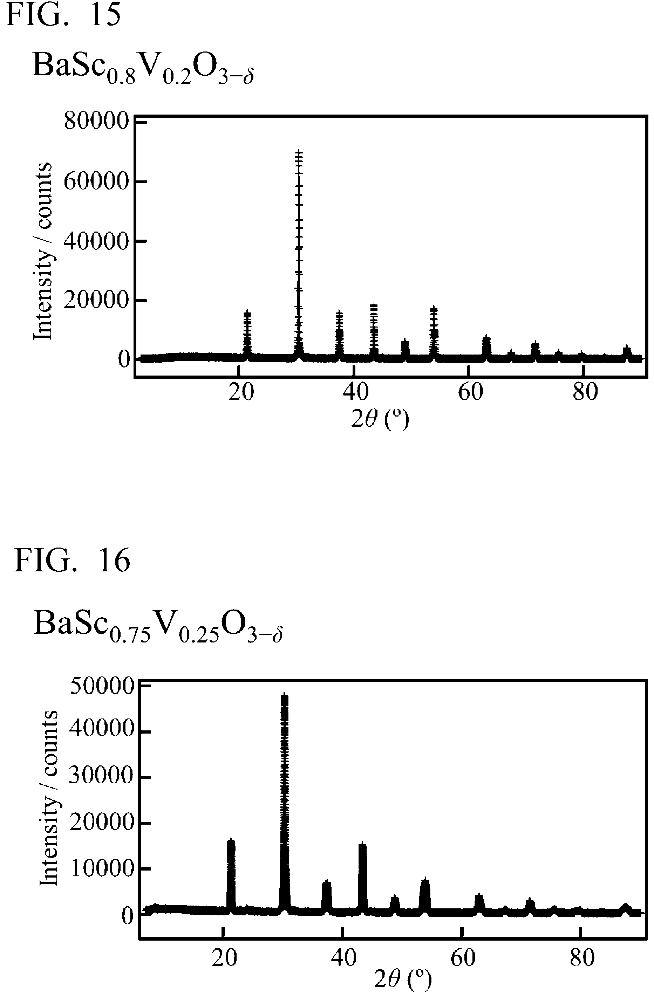

FIG. 15 shows the results of the XRD measurement of Test Example 13: BaSc_{0.8}V_{0.2}O_{3-δ};
FIG. 16 shows the results of the XRD measurement of Test Example 14: BaSc_{0.75}V_{0.25}O_{3-δ};

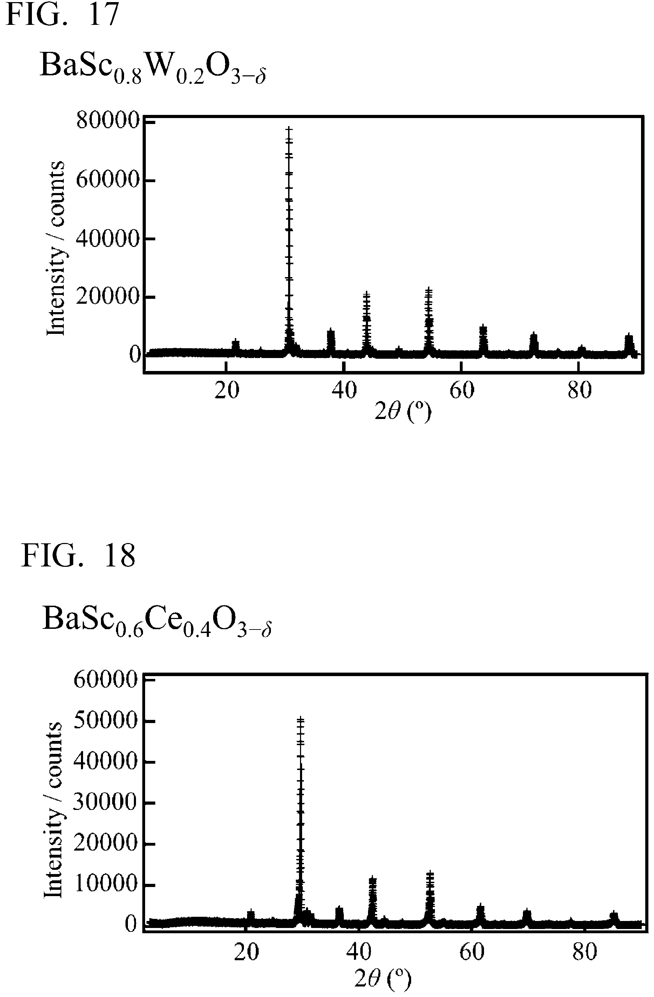

FIG. 17 shows the results of the XRD measurement of Test Example 15: BaSc_{0.8}W_{0.2}O_{3-δ};
FIG. 18 shows the results of the XRD measurement of Test Example 16: BaSc_{0.6}Ce_{0.4}O_{3-δ}; and

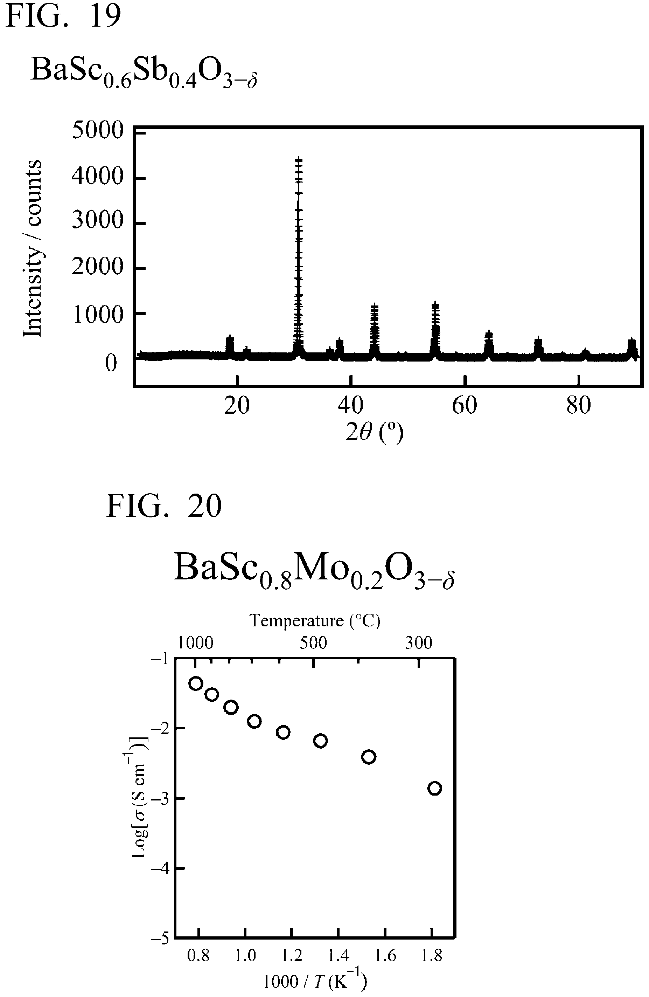

FIG. 19 shows the results of the XRD measurement of Test Example 17: BaSc_{0.6}Sb_{0.4}O_{3-δ}.

In addition, the lattice constants are shown in Tables 1 and 2. The lattice constants in Tables 1 and 2 are values obtained by structural optimization by density functional theory calculation described later.

Table 1 and Table 2 show lattice constants a (Å) of Ba_{1-α}A₁₋ₓMₓO_{3-δ} estimated by structural optimization by DFT calculation. a = b = c and α = β = γ = 90°.

**[Table 1]**

| Formulation | Lattice constant a (Å) |
|---|---|
| BaSc_{0.75}Li_{0.25}O_{3-δ} | 4.124532 |
| BaSc_{0.75}Na_{0.25}O_{3-δ} | 4.160889 |
| BaSc_{0.75}Be_{0.25}O_{3-δ} | 4.091084 |
| BaSc_{0.75}Ca_{0.25}O_{3-δ} | 4.208637 |
| BaSc_{0.75}Al_{0.25}O_{3-δ} | 4.104726 |
| BaSc_{0.75}Nd_{0.25}O_{3-δ} | 4.295019 |
| BaSc_{0.75}Mn_{0.25}O_{3-δ} | 4.106429 |
| BaSc_{0.75}Te_{0.25}O_{3-δ} | 4.177972 |
| BaSc_{0.75}As_{0.25}O_{3-δ} | 4.131929 |
| BaSc_{0.75}I_{0.25}O_{3-δ} | 4.188417 |
| BaSc_{0.75}Cr_{0.25}O_{3-δ} | 4.15881 |
| BaSc_{0.75}U_{0.25}O_{3-δ} | 4.280552 |
| BaSc_{0.75}Mn_{0.25}O_{3-δ} | 4.128669 |
| BaSc_{0.75}Np_{0.25}O_{3-δ} | 4.236705 |
| BaSc_{0.75}Mg_{0.25}O_{3-δ} | 4.1364405 |
| BaSc_{0.75}Zn_{0.25}O_{3-δ} | 4.1371865 |
| BaSc_{0.75}Fe_{0.25}O_{3-δ} | 4.1001455 |
| BaSc_{0.75}Ga_{0.25}O_{3-δ} | 4.1284195 |
| BaSC_{0.75}In_{0.25}O_{3-δ} | 4.188807 |
| BaSc_{0.75}Ti_{0.25}O_{3-δ} | 4.1307345 |
| BaSc_{0.75}Sn_{0.25}O_{3-δ} | 4.1713055 |
| BaSc_{0.75}Hf_{0.25}O_{3-δ} | 4.1721365 |
| BaSc_{0.75}Sb_{0.25}O_{3-δ} | 4.1615685 |
| BaSc_{0.75}Ta_{0.25}O_{3-δ} | 4.152607 |
| BaSc_{0.75}Te_{0.25}O_{3-δ} | 4.1763465 |
| BaSc_{0.75}Re_{0.25}O_{3-δ} | 4.132664 |
| Ba_{0.875}Sc_{0.75}Mo_{0.25}O_{3-δ} | 4.117096 |
| BaSc_{0.75}Mo_{0.125}O_{3-δ} | 4.131121 |
| BaAl_{0.75}Mo_{0.25}O_{3-δ} | 3.967742 |
| BaNd_{0.75}Mo_{0.25}O_{3-δ} | 4.429746 |
| BaAl_{0.375}Nd_{0.375}Mo_{0.25}O_{3-δ} | 4.233707 |
| BaGa_{0.75}Mo_{0.25}O_{3-δ} | 4.0322155 |
| BaIn_{0.75}Mo_{0.25}O_{3-δ} | 4.2005305 |

**[Table 2]**

| Formulation | Lattice constant a (Å) |
|---|---|
| Ba_{0.75}Bi_{0.25}Sc_{0.75}Mo_{0.25}O_{3-δ} | 4.114768 |
| Ba_{0.75}Cs_{0.25}Sc_{0.75}Mo_{0.25}O_{3-δ} | 4.151237 |
| Ba_{0.73}La_{0.23}Sc_{0.73}Mo_{0.23}O_{3-δ} | 4.113049 |
| Ba_{0.75}Li_{0.25}Sc_{0.75}Mo_{0.25}O_{3-δ} | 4.097275 |
| Ba_{0.73}Lu_{0.23}Sc_{0.75}Mo_{0.25}O_{3-δ} | 4.093136 |
| Ba_{0.875}Mg_{0.125}Sc_{0.75}Mo_{0.25}O_{3-δ} | 4.113915 |
| Ba_{0.875}Pb_{0.125}Sc_{0.75}Mo_{0.25}O_{3-δ} | 4.126879 |
| Ba_{0.75}Na_{0.25}Sc_{0.75}Mo_{0.25}O_{3-δ} | 4.1035955 |
| Ba_{0.75}K_{0.25}Sc_{0.75}Mo_{0.25}O_{3-δ} | 4.118425 |
| Ba_{0.75}Rb_{0.25}Sc_{0.75}Mo_{0.25}O_{3-δ} | 4.1295045 |
| Ba_{0.875}Co_{0.125}Sc_{0.75}Mo_{0.25}O_{3-δ} | 4.130191 |
| Ba_{0.875}Ca_{0.125}Sc_{0.75}Mo_{0.25}O_{3-δ} | 4.1187 |
| Ba_{0.875}Sr_{0.125}SC_{0.75}Mo_{0.25}O_{3-δ} | 4.124572 |
| Ba_{0.75}Sc_{0.25}Sc_{0.75}Mo_{0.25}O_{3-δ} | 4.0925825 |
| Ba_{0.875}Hf_{0.125}Sc_{0.75}Mo_{0.25}O_{3-δ} | 4.111117 |
| Ba_{0.875}Ce_{0.125}Sc_{0.75}Mo_{0.25}O_{3-δ} | 4.15881 |
| Ba_{0.875}Te_{0.125}Sc_{0.75}Mo_{0.25}O_{3-δ} | 4.12857 |
| Ba_{0.875}Tb_{0.125}Sc_{0.75}Mo_{0.25}O_{3-δ} | 4.15881 |
| Ba_{0.875}Ra_{0.125}Sc_{0.75}Mo_{0.25}O_{3-δ} | 4.140425 |
| BaSc_{0.75}Cd_{0.25}O_{3-δ} | 4.1943845 |
| BaSc_{0.75}Os_{0.25}O_{3-δ} | 4.164645 |
| BaSc_{0.75}Os_{0.25}O_{3-δ} | 4.1376175 |
| BaSc_{0.75}Pm_{0.25}O_{3-δ} | 4.2819735 |

### (Measurement of total electrical conductivity)

An electrical conductivity of each of Test Examples was measured by a direct current four-terminal sensing method. Proton conductivity was evaluated by measuring an electrical conductivity in a wet atmosphere with a water vapor partial pressure P (H₂O) = 0.02 atm at 18°C and in a dry atmosphere with a water vapor partial pressure P (H₂O) < 1.5 × 10⁻⁴ atm at -40°C.

In addition, the proton conductivity was evaluated not only in a wet atmosphere of light water (H₂O) but also in a wet atmosphere of heavy water (D₂O). The synthesized sample was molded into a pellet having a diameter of 5 mmφ by uniaxial pressing, and sintered again at 1,500°C for 12 hours in the atmosphere to produce a sample for measuring conductivity. Four platinum wires were wound around the sintered body, and a platinum paste was applied to the platinum wires in order to closely attach the sample to the platinum wires. In order to remove organic components contained in the platinum paste, the platinum paste was heated at 900°C for 1 hour using an electric furnace.
FIG. 20 shows an Arrhenius plot of the total direct current electrical conductivity of Test Example 1: BaSc_{0.8}Mo_{0.2}O_{3-δ};

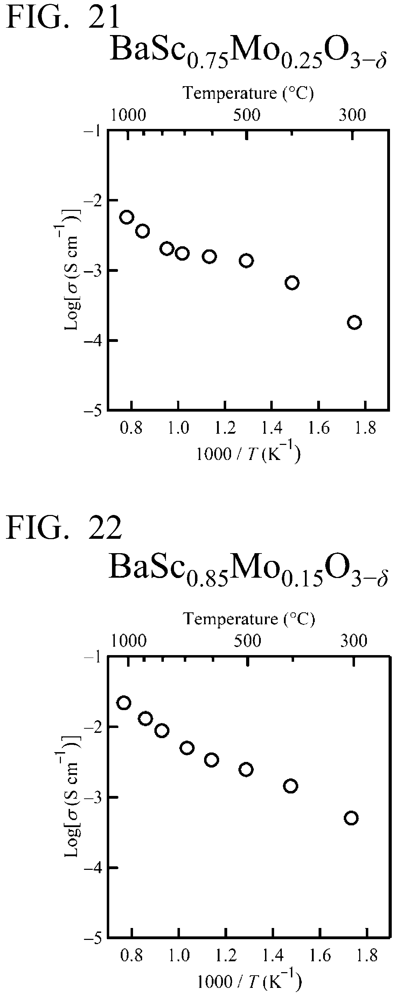

FIG. 21 shows an Arrhenius plot of the total direct current electrical conductivity of Test Example 2: BaSc_{0.75}Mo_{0.25}O_{3-δ};
FIG. 22 shows an Arrhenius plot of the total direct current electrical conductivity of Test Example 3: BaSc_{0.85}Mo_{0.15}O_{3-δ};

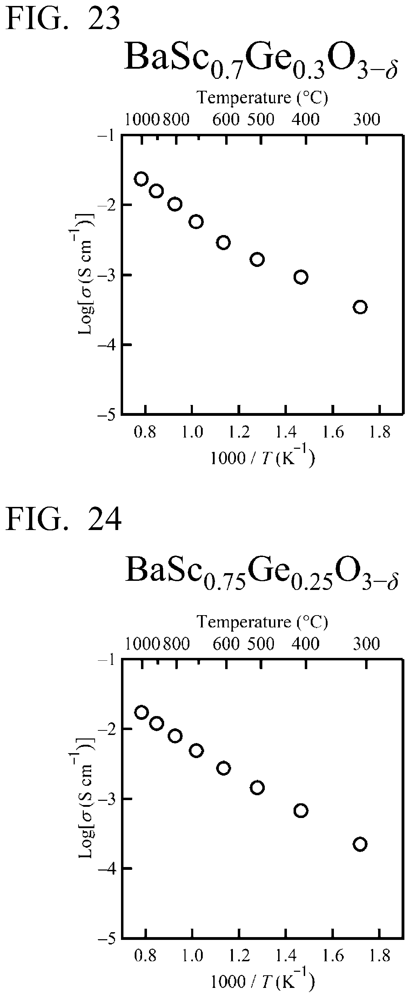

FIG. 23 shows an Arrhenius plot of the total direct current electrical conductivity of Test Example 4: BaSc_{0.7}Ge_{0.3}O_{3-δ};
FIG. 24 shows an Arrhenius plot of the total direct current electrical conductivity of Test Example 5: BaSc_{0.75}Ge_{0.25}O_{3-δ};

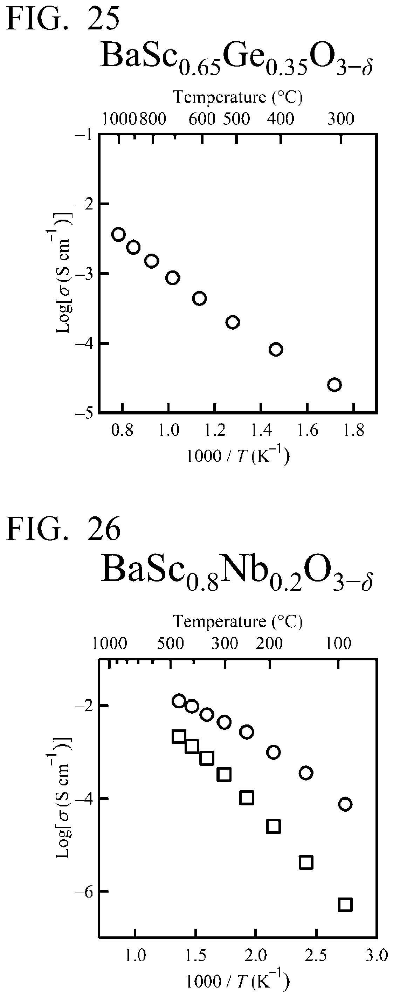

FIG. 25 shows an Arrhenius plot of the total direct current electrical conductivity of Test Example 6: BaSc_{0.65}Ge_{0.35}O_{3-δ};
FIG. 26 shows an Arrhenius plot of the total direct current electrical conductivity of Test Example 7: BaSc_{0.8}Nb_{0.2}O_{3-δ};

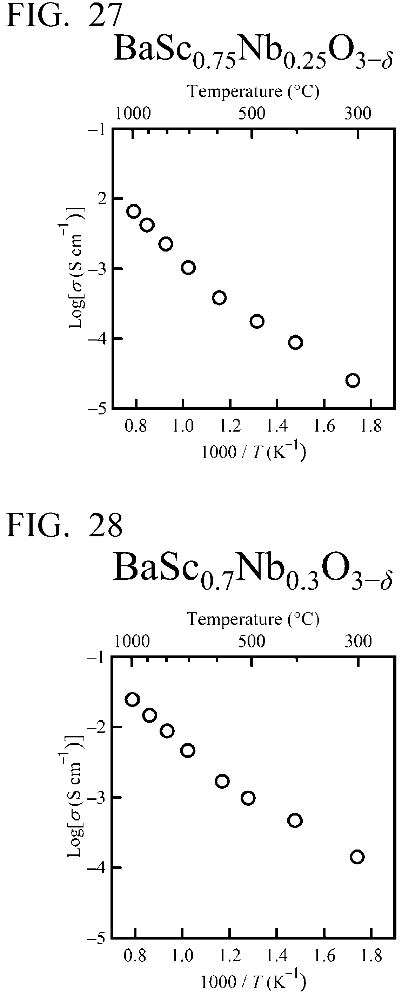

FIG. 27 shows an Arrhenius plot of the total direct current electrical conductivity of Test Example 8: BaSc_{0.75}Nb_{0.25}O_{3-δ};
FIG. 28 shows an Arrhenius plot of the total direct current electrical conductivity of Test Example 9: BaSc_{0.7}Nb_{0.3}O_{3-δ};

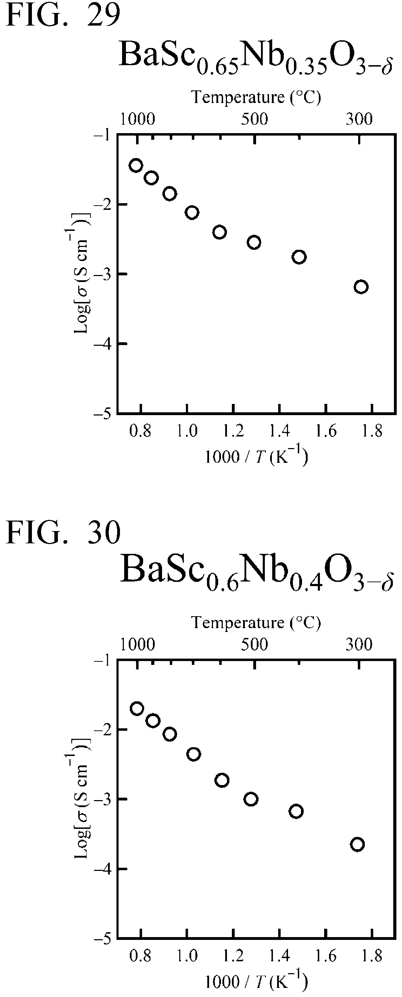

FIG. 29 shows an Arrhenius plot of the total direct current electrical conductivity of Test Example 10: BaSc_{0.65}Nb_{0.35}O_{3-δ};
FIG. 30 shows an Arrhenius plot of the total direct current electrical conductivity of Test Example 11: BaSc_{0.6}Nb_{0.4}O_{3-δ};

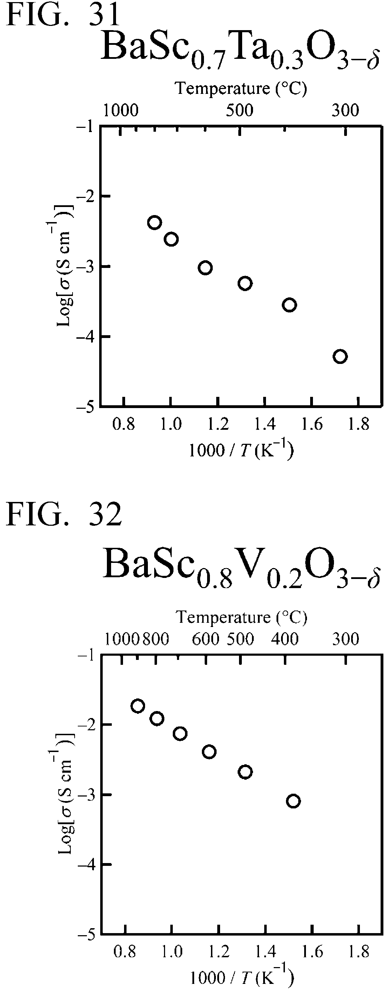

FIG. 31 shows an Arrhenius plot of the total direct current electrical conductivity of Test Example 12: BaSc_{0.7}Ta_{0.3}O_{3-δ};
FIG. 32 shows an Arrhenius plot of the total direct current electrical conductivity of Test Example 13: BaSc_{0.8}V_{0.2}O_{3-δ};

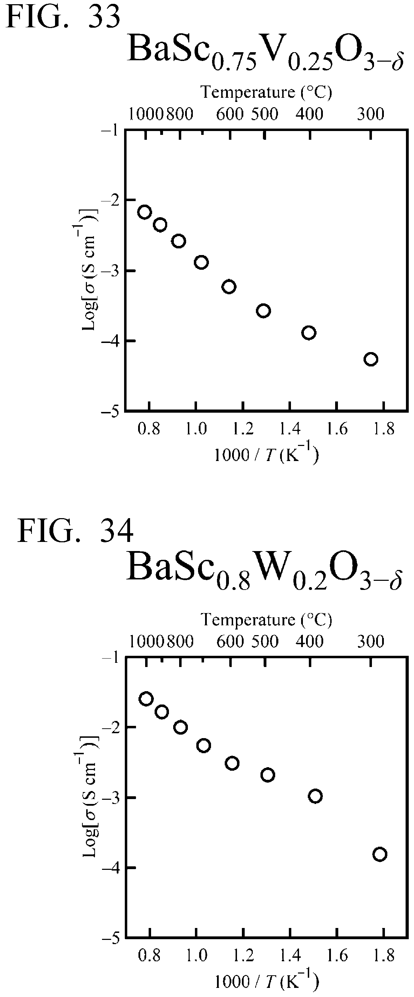

FIG. 33 shows an Arrhenius plot of the total direct current electrical conductivity of Test Example 14: BaSc_{0.75}V_{0.25}O_{3-δ};
FIG. 34 shows an Arrhenius plot of the total direct current electrical conductivity of Test Example 15: BaSc_{0.8}W_{0.2}O_{3-δ};

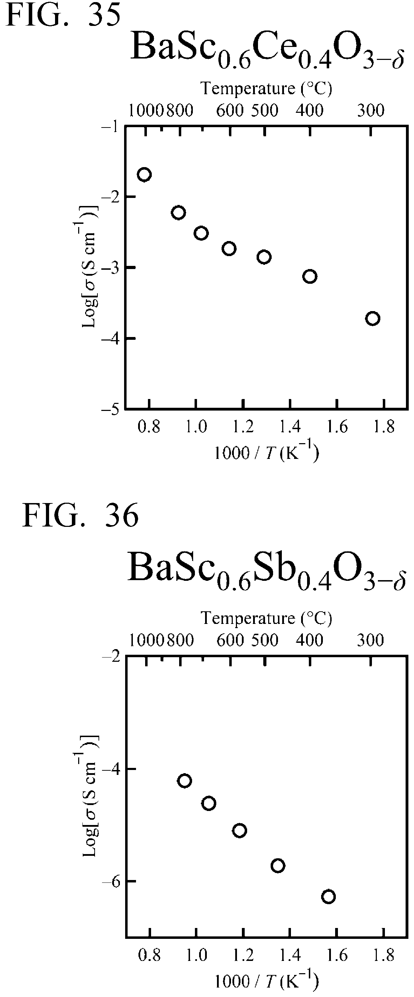

FIG. 35 shows an Arrhenius plot of the total direct current electrical conductivity of Test Example 16: BaSc_{0.6}Ce_{0.4}O_{3-δ}; and
FIG. 36 shows an Arrhenius plot of the total direct current electrical conductivity of Test Example 17: BaSc_{0.6}Sb_{0.4}O_{3-δ}, the total direct current electrical conductivity being measured by cooling the sample in a wet air and retaining the sample at a constant temperature.

In FIG. 26, a bulk conductivity (∘) and the grain boundary conductivity (□) are shown.

FIG. 37 shows an Arrhenius plot of the in-grain conductivity and the grain boundary conductivity of Test Example 1: BaSc_{0.8}Mo_{0.2}O_{3-δ}.

In FIG. 37, a broken line indicates Norby gap, and a dotted line indicates a proton conductivity of 0.01 S/cm.

FIG. 38 shows a comparison of the Arrhenius plot of the electrical conductivity between Test Example 1: BaSc_{0.8}Mo_{0.2}O_{3-δ} and the material in the related art. The results of Test Example 1 are the same as those in FIG. 37. 60Sc:BZ, 20Y:BZ, and Ba₅Er₂Al₂ZrO₁₃ are shown as the material in the related art.

As the material in the related art, 60Sc:BZ, that is, BaZr_{0.4}Sc_{0.6}O_{3-δ} was the most high-performance proton conductor, but Test Example 1 exhibited a higher proton conductivity than that. In addition, particularly, a material close to practical use, which is currently being applied, was 20Y:BZ, that is, BaZr_{0.8}Y_{0.2}O_{3-δ}, but the proton conductivity thereof was approximately 10 times higher in Test Example 1. That is, it can be said that Test Example 1 was a novel substance as expected.

In addition, it is generally considered that the proton conductivity reaches 0.01 Scm⁻¹ (log [σ(Scm⁻¹)] = -2.0) is required for practical use. In the proton conductor of the related art, the proton conductivity does not reach 0.01 Scm⁻¹ unless the temperature is high, and 20Y:BZ is reached at 534°C and 60Sc:BZ is reached at 396°C. On the other hand, the compound of Test Example 1 is reached at 320°C from FIGS. 37 and 38. That is, it is shown that the proton conductivity required for practical use is achieved at a temperature lower by 214°C than that of the material for which practical use is in progress, 20Y:BZ.

In addition, the problems required for practical use are shown by a V-shaped line of the broken line in FIGS. 37 and 38, and it is said that the graph reaches a portion above the Norby Gap. In the related art, 60Sc:BZ only reaches in a slight temperature range of around 280°C. On the other hand, the compound of Test Example 1 reaches the Norby Gap in a wide temperature range of approximately 250°C to 400°C, and thus high practicality is expected.

### (Oxygen partial pressure dependence of total electrical conductivity)

Oxygen partial pressure dependence of the total electrical conductivity was measured by a direct current four-terminal sensing method. A sample was prepared in the same manner as in the measurement of the total electrical conductivity described above, and an oxygen partial pressure was controlled using oxygen gas, nitrogen gas, and a nitrogen-hydrogen mixed gas. The oxygen partial pressure was monitored using an oxygen sensor installed downstream of the device.

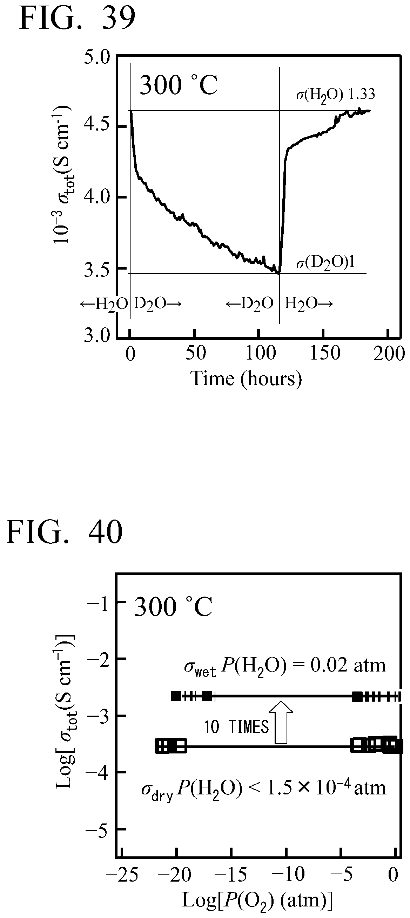

FIG. 39 shows a graph of the time dependence of the electrical conductivity, that is, the relaxation process in Test Example 1 in a case where the wet air was replaced from light water (H₂O) to heavy water (D₂O) and then replaced to light water (H₂O) again. As shown in the figure, the total electrical conductivity decreased in a case where the atmosphere was replaced to the D₂O atmosphere, and the ratio of the conductivity in the H₂O air to the conductivity in the D₂O air was 1.33, which is close to the ideal value of 1.41 in the classical theory of proton conduction, so that it was found that the proton conduction was dominant.

FIG. 40 shows a graph of the oxygen partial pressure dependence in a dry atmosphere and in a wet atmosphere at 300°C for Test Example 1. The total electrical conductivity in a wet atmosphere was 10 times higher than the total electrical conductivity in a dry atmosphere, and furthermore, the total electrical conductivity hardly depended on the oxygen partial pressure, which indicates that protons were dominant conduction species.

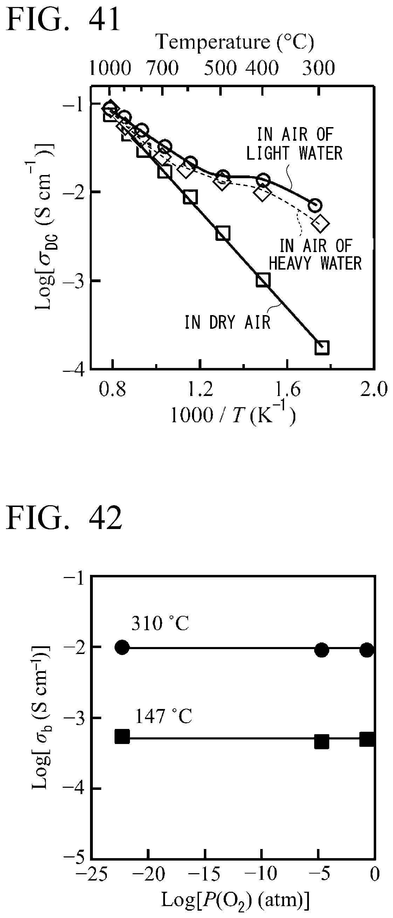

FIG. 41 shows a graph of another Arrhenius plot of the total direct current electrical conductivity of Test Example 1 for each gas atmosphere.

The total electrical conductivity in dry air was almost on a linear straight line, but the total electrical conductivity in a wet atmosphere was non-linear. The total electrical conductivity in the air of light water H₂O was higher than the total electrical conductivity in the dry air, and was particularly 40 times higher at 300°C. This result strongly suggests the proton conduction. In addition, the conductivity in the air of light water H₂O was 1.1 to 1.6 times higher than the conductivity in the air of heavy water D₂O, and this result also strongly suggests that the proton conduction was dominant.

### (Evaluation of bulk conductivity)

The bulk conductivity was determined by an alternating current impedance method. The atmosphere was controlled using oxygen gas, nitrogen gas, and a nitrogen-hydrogen mixed gas. The oxygen partial pressure was monitored using an oxygen sensor installed downstream of the device.

FIG. 42 shows a graph of the oxygen partial pressure dependence of the bulk conductivity for Test Example 1. The figure shows the oxygen partial pressure dependence of the bulk conductivity at 310°C and 147°C in a wet atmosphere. It was found that the bulk conductivity did not depend on the oxygen partial pressure, and chemical stability and electrical stability were high on the oxidized side and the reduced side.

### (Thermogravimetric analysis)

The proton concentration was measured using a thermogravimetric analyzer (manufactured by NETZSCH Japan K.K., product name: STA449F3 Jupiter). After heating at 1,000°C for 160 minutes in a dry nitrogen atmosphere, the temperature was gradually lowered in wet nitrogen while maintaining equilibrium. Assuming that a mass increase amount observed in the operation was due to hydration, the proton concentration at each temperature was determined.

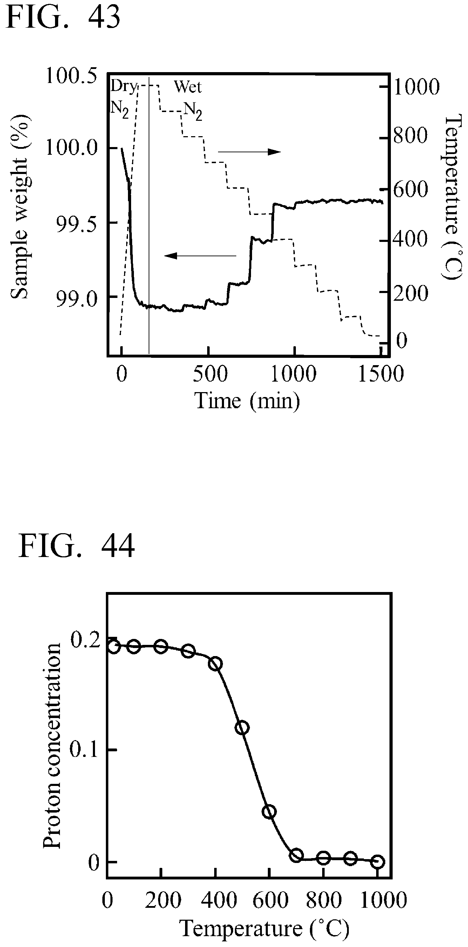

FIG. 43 shows a graph of the thermogravimetric (TG) analysis result of Test Example 1.

FIG. 44 shows a graph of the temperature dependence of the proton concentration estimated from the results of thermogravimetric analysis of Test Example 1.

### (Calculation of diffusion coefficient)

Temperature dependence of the proton diffusion coefficient was calculated using the bulk proton conductivity measured by the alternating current impedance method and the proton concentration measured by the thermogravimetric analysis. Specifically, the calculation was performed based on the Nernst-Einstein equation.

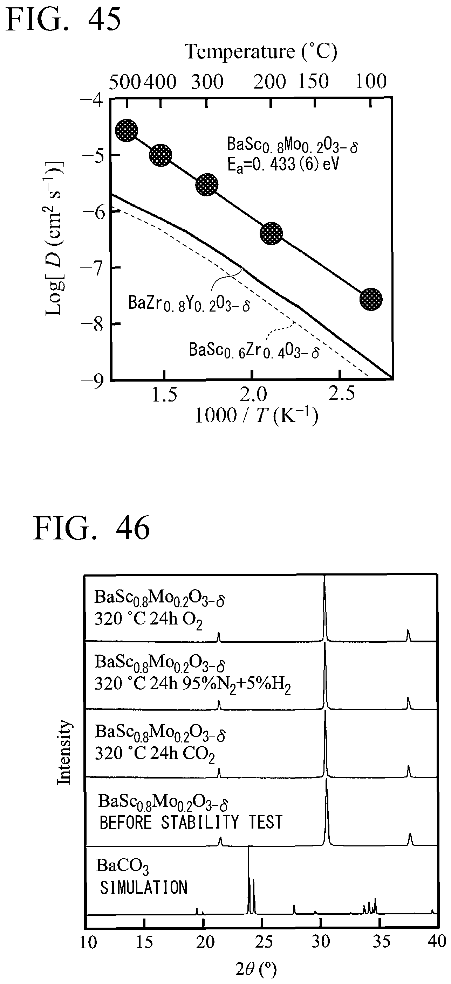

FIG. 45 shows a graph of an Arrhenius plot of the diffusion coefficient of Test Example 1. In the figure, Test Example 1, and the materials in the related art, BaZr_{0.8}Y_{0.2}O_{3-δ} and BaSc_{0.6}Zr_{0.4}O_{3-δ}, were compared.

From the figure, it was found that Test Example 1 exhibited a proton diffusion coefficient approximately 10 times higher than that of the material in the related art. It is considered that the high proton conductivity of Test Example 1 was due to the high diffusion coefficient.

### (Chemical stability)

The present material exhibits a high proton conductivity of 10 mS/cm at 320°C or higher, and can be used as a proton-conducting solid electrolyte for a fuel cell. Therefore, the stability in a carbon dioxide stream, in a nitrogen-5% hydrogen mixed gas, and in an oxygen gas was evaluated at 320°C. After measuring the X-ray diffraction data of the sample before testing the stability, the same powder sample was annealed in a tubular furnace at 320°C for 24 hours in a carbon dioxide gas, a nitrogen-hydrogen mixed gas, and an oxygen gas. The X-ray diffraction data was collected for the powder sample after the annealing, and the chemical stability was evaluated.

FIG. 46 shows a graph of the stability of Test Example 1 in an oxidizing atmosphere, in a reducing atmosphere, and in CO₂. The sample in a powder state was annealed under each condition (O₂, N₂ + H₂, CO₂, and pre-test) in the figure, and the chemical stability thereof was evaluated. The simulation results for BaCO₃ are also shown.

In Test Example 1, there was no change in the XRD pattern before and after the stability test, and excellent chemical stability was exhibited in O₂ (oxidizing atmosphere), 95% N₂ + 5% H₂ (reducing atmosphere), and CO₂.

### [Synthesis and analysis of compound (B) and Ba₅R₂Al₂SnO₁₃]

A sample was synthesized by a solid phase reaction method. BaCO₃, SnO₂, Al₂O₃, Sm₂O₃, Eu₂O₃, Gd₂O₃, Dy₂O₃, Ho₂O₃, Er₂O₃, Tm₂O₃, Yb₂O₃, Y₂O₃, and Nd₂O₃ were used as starting raw materials. The starting raw materials were dried in advance at 300°C for 12 hours. In addition, Nd₂O₃ was dried at 1,000°C for 12 hours. The starting raw materials were weighed, and using an agate mortar, dry mixing and grinding and wet mixing and grinding using ethanol was repeatedly carried out for 30 to 60 minutes.

### (Synthesis of Ba₅Nd₂Al₂SnO₁₃, Ba₅Sm₂Al₂SnO₁₃, Ba₅Eu₂Al₂SnO₁₃, Ba₅Gd₂Al₂SnO₁₃, Ba₅Dy₂Al₂SnO₁₃, and Ba₅Y₂Al₂SnO₁₃)

The obtained mixture was preliminarily sintered at 1,000°C for 12 hours in the atmosphere using an electric furnace. The sintered mixture was dry-mixed and crushed with an agate mortar for 30 to 60 minutes. The mixture was molded into a pellet shape having a diameter of 20 mm using a uniaxial press machine, and pressurized at 200 MPa with a cold isotropic processing device (CIP). The obtained pellet was placed in an electric furnace and sintered in the atmosphere at 1,400°C for 12 hours.

### (Synthesis of Ba₅Ho₂Al₂SnO₁₃, Ba₅Er₂Al₂SnO₁₃, Ba₅Tm₂Al₂SnO₁₃, and Ba₅Yb₂Al₂SnO₁₃)

The obtained mixture was preliminarily sintered at 1,000°C for 12 hours in the atmosphere using an electric furnace. The sintered mixture was dry-crushed with an agate mortar for 30 to 60 minutes. The mixture was molded into a pellet shape having a diameter of 20 mm using a uniaxial press machine, and pressurized at 200 MPa using a cold isotropic processing device (CIP). The obtained pellet was placed in an electric furnace and sintered in the atmosphere at 1,500°C for 12 hours.

### (X-ray diffraction measurement)

In order to evaluate a formed phase of the obtained sintered body by X-ray diffraction (XRD), the sintered body was pulverized, and wet-crushed using ethanol and dry-crushed with an agate mortar for 30 to 60 minutes. XRD measurement was performed using a X-ray diffractometer Rigaku MiniFlex. A lattice constant of the perovskite-type oxide was determined by a Rietveld refinement of the obtained XRD data.

Table 3 shows the lattice constants of Ba₅R₂Al₂MO₁₃ estimated by structural optimization by DFT calculation.

Table 4 shows the lattice constants of the perovskite-type oxides synthesized in the above test examples, which were refined by the Rietveld refinement of the XRD data. In Table 4, the lattice constant a of the perovskite-type proton conductor obtained by the Rietveld refinement of the XRD data at room temperature is shown. a = b = c and α = β = γ = 90°. The number in parentheses is a standard deviation esd estimated in a case of performing the precision, and is a number of the last digit of the lattice constant. For example, esd of 4.1463(2) is 0.0002.

**[Table 3]**

| Formulation | *a* (Å) | *b* (Å) | *c* (Å) | α (°) | β (°) | γ (°) |
|---|---|---|---|---|---|---|
| Ba₅Yb₂Al₂HfO₁₃ | 6.0293 | 6.0293 | 24.988 | 90 | 90 | 120 |
| Ba₃Y₂Al₂HfO₁₃ | 6.0286 | 6.0286 | 24.986 | 90 | 90 | 120 |
| Ba₅Tm₂Al₂HfO₁₃ | 6.0003 | 6.0003 | 24.868 | 90 | 90 | 120 |
| Ba₅Tb₂Al₂HfO₁₃ | 6.045 | 6.045 | 25.053 | 90 | 90 | 120 |
| Ba₅Sm₂Al₂HfO₁₃ | 6.0914 | 6.0914 | 25.246 | 90 | 90 | 120 |
| Ba₅Sc₂Al₂HfO₁₃ | 5.9229 | 5.9229 | 24.547 | 90 | 90 | 120 |
| Ba₅Pr₂Al₂HfO₁₃ | 6.1506 | 6.1506 | 25.491 | 90 | 90 | 120 |
| Ba₅Pm₂Al₂HfO₁₃ | 6.1072 | 6.1072 | 25.311 | 90 | 90 | 120 |
| Ba₅Nd₂Al₂HfO₁₃ | 6.127 | 6.127 | 25.393 | 90 | 90 | 120 |
| Ba₅Lu₂Al₂HfO₁₃ | 5.9811 | 5.9811 | 24.789 | 90 | 90 | 120 |
| Ba₅La₂Al₂HfO₁₃ | 6.1666 | 6.1666 | 25.557 | 90 | 90 | 120 |
| Ba₅In₂Al₂HfO₁₃ | 5.959 | 5.959 | 24.697 | 90 | 90 | 120 |
| Ba₅Ho₂Al₂HfO₁₃ | 6.0219 | 6.0219 | 24.958 | 90 | 90 | 120 |
| Ba₅Gd₂Al₂HfO₁₃ | 6.0579 | 6.0579 | 25.107 | 90 | 90 | 120 |
| Ba₅Ga₂Al₂HfO₁₃ | 5.8611 | 5.8611 | 24.291 | 90 | 90 | 120 |
| Ba₅Eu₂Al₂HfO₁₃ | 6.093 | 6.093 | 25.252 | 90 | 90 | 120 |
| Ba₅Er₂Al₂HfO₁₃ | 6.0118 | 6.0118 | 24.916 | 90 | 90 | 120 |
| Ba₅Dy₂Al₂HfO₁₃ | 6.0325 | 6.0325 | 25.002 | 90 | 90 | 120 |
| Ba₅Ce₂Al₂HfO₁₃ | 6.1005 | 6.1005 | 25.283 | 90 | 90 | 120 |
| Ba₅Tb₂Al₂SnO₁₃ | 6.0392 | 6.0392 | 25.029 | 90 | 90 | 120 |
| Ba₅Sc₂Al₂SnO₁₃ | 5.9171 | 5.9171 | 24.523 | 90 | 90 | 120 |
| Ba₅Pr₂Al₂SnO₁₃ | 5.9579 | 5.9579 | 24.692 | 90 | 90 | 120 |
| Ba₅Pm₂Al₂SnO₁₃ | 6.1025 | 6.1025 | 25.292 | 90 | 90 | 120 |
| Ba₅Lu₂Al₂SnO₁₃ | 5.9744 | 5.9744 | 24.761 | 90 | 90 | 120 |
| Ba₅La₂Al₂SnO₁₃ | 5.9579 | 5.9579 | 24.692 | 90 | 90 | 120 |
| Ba₅In₂Al₂SnO₁₃ | 5.9575 | 5.9575 | 24.691 | 90 | 90 | 120 |
| Ba₅Ga₂Al₂SnO₁₃ | 5.9579 | 5.9579 | 24.692 | 90 | 90 | 120 |
| Ba₅Ce₂Al₂SnO₁₃ | 6.1259 | 6.1259 | 25.389 | 90 | 90 | 120 |

**[Table 4]**

| Formulation | Lattice constant a (Å) |
|---|---|
| BaSc_{0.8}Mo_{0.2}O_{3-δ} | 4.1463 (2) |
| BaSc_{0.75}Mo_{0.25}O_{3-δ} | 4.1266 (17) |
| BaSc_{0.85}Mo_{0.15}O_{3-δ} | 4.128 (2) |
| BaSc_{0.7}Ge_{0.3}O_{3-δ} | 4.150464 (11) |
| BaSc_{0.75}Ge_{0.25}O_{3-δ} | 4.1571 (5) |
| BaSc_{0.65}Ge_{0.35}O_{3-δ} | 4.1478 (17) |
| BaSc_{0.8}Nb_{0.2}O_{3-δ} | 4.126 (4) |
| BaSc_{0.75}Nb_{0.25}O_{3-δ} | 4.116 (4) |
| BaSc_{0.7}Nb_{0.3}O_{3-δ} | 4.1175 (10) |
| BaSc_{0.65}Nb_{0.35}O_{3-δ} | 4.115 (5) |
| BaSc_{0.6}Nb_{0.4}O_{3-δ} | 4.11333 (4) |
| BaSc_{0.7}Ta_{0.3}O_{3-δ} | 4.1276 (13) |
| BaSc_{0.8}V_{0.2}O_{3-δ} | 4.1756 (4) |
| BaSc_{0.75}V_{0.25}O_{3-δ} | 4.1801 (16) |
| BaSc_{0.8}W_{0.2}O_{3-δ} | 4.1252 (4) |
| BaSc_{0.6}Ce_{0.4}O_{3-δ} | 4.2734 (9) |
| BaSc_{0.6}Sb_{0.4}O_{3-δ} | 4.114 (2) |

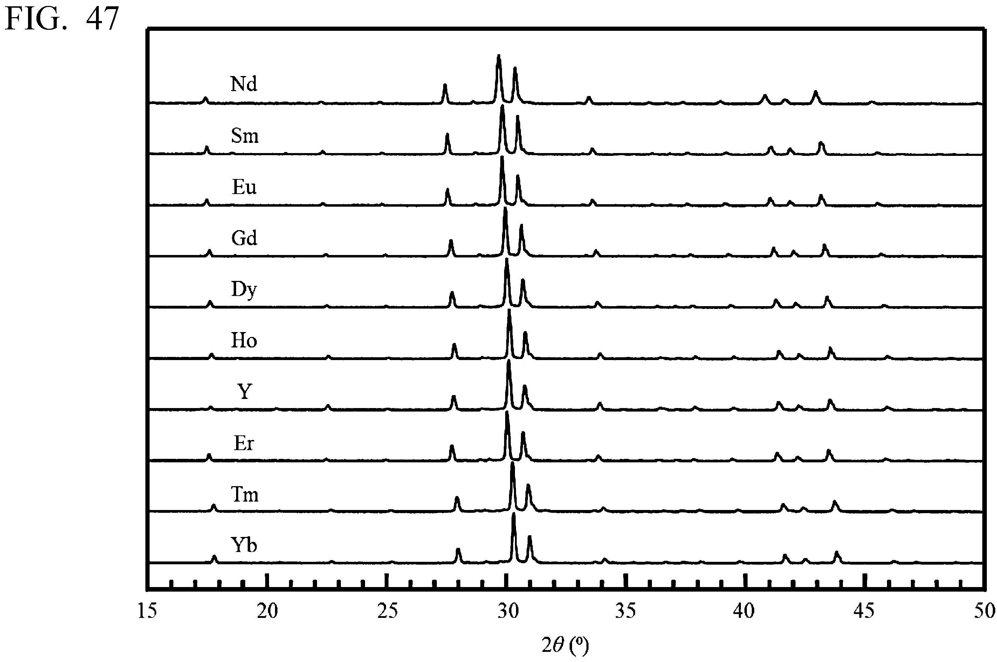

FIG. 47 shows the results of the XRD measurement for each of Synthesis Examples of R = Nd, Sm, Eu, Gd, Dy, Ho, Y, Er, Tm, and Yb.

### (Measurement of total electrical conductivity)

### (Measurement of Ba₅Nd₂Al₂SnO₁₃, Ba₅Sm₂Al₂SnO₁₃, Ba₅Eu₂Al₂SnO₁₃, Ba₅Gd₂Al₂SnO₁₃, Ba₅Dy₂Al₂SnO₁₃, and Ba₅Y₂Al₂SnO₁₃)

An electrical conductivity of each of Test Examples was measured by a direct current four-terminal sensing method. The synthesized sample was molded into a pellet having a diameter of 5 mmφ by cold isotropic processing, and sintered at 1,400°C for 12 hours to produce a sample for measuring conductivity. Four platinum wires were wound around the sintered body for measuring total electrical conductivity by the direct current four-terminal sensing method, and platinum paste was applied on the platinum wires in order to bring the sample and the platinum wires into close contact with each other. In order to remove organic components contained in the platinum paste, the platinum paste was heated at 1,000°C for 1 hour using an electric furnace.

### (Measurement of Ba₅Ho₂Al₂SnO₁₃, Ba₅Er₂Al₂SnO₁₃, Ba₅Tm₂Al₂SnO₁₃, and Ba₅Yb₂Al₂SnO₁₃)

An electrical conductivity of each of Test Examples was measured by a direct current four-terminal sensing method. The synthesized sample was molded into a pellet having a diameter of 5 mmφ by cold isotropic processing, and sintered at 1,500°C for 12 hours to produce a sample for measuring conductivity. Four platinum wires were wound around the sintered body for measuring total electrical conductivity by the direct current four-terminal sensing method, and platinum paste was applied on the platinum wires in order to bring the sample and the platinum wires into close contact with each other. In order to remove organic components contained in the platinum paste, the platinum paste was heated at 1,000°C for 1 hour using an electric furnace.

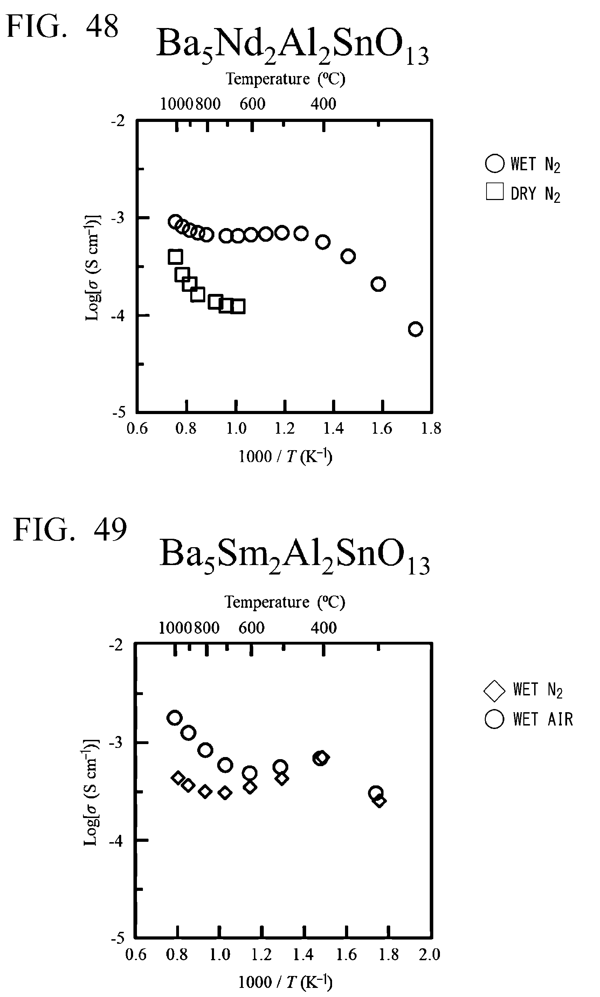

FIG. 48 shows a graph of the total direct current electrical conductivity of Test Example 18: Ba₅Nd₂Al₂SnO₁₃;
FIG. 49 shows a graph of the total direct current electrical conductivity of Test Example 19: Ba₅Sm₂Al₂SnO₁₃;

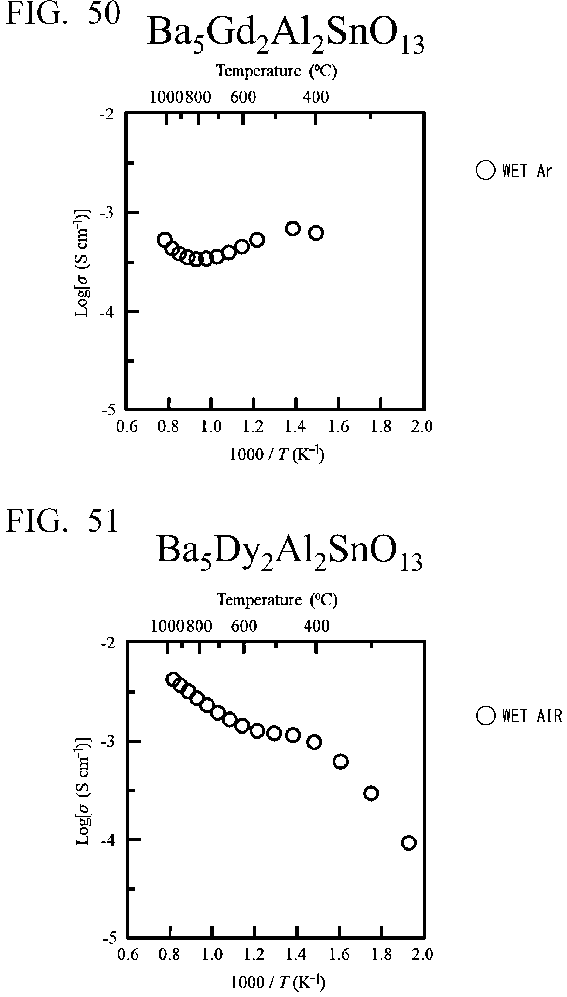

FIG. 50 shows a graph of the total direct current electrical conductivity of Test Example 20: Ba₅Gd₂Al₂SnO₁₃;
FIG. 51 shows a graph of the total direct current electrical conductivity of Test Example 21: Ba₅Dy₂Al₂SnO₁₃;

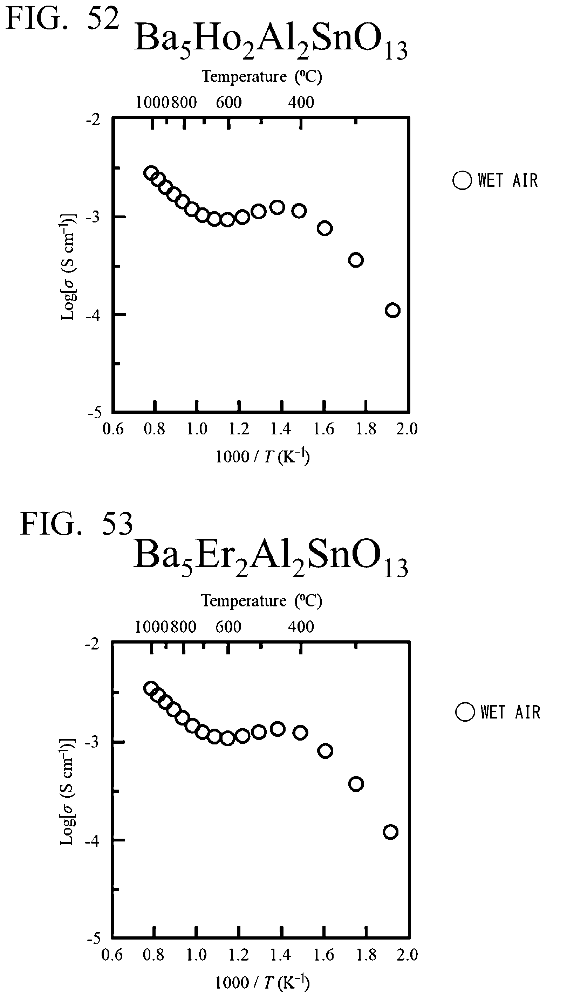

FIG. 52 shows a graph of the total direct current electrical conductivity of Test Example 22: Ba₅Ho₂Al₂SnO₁₃;
FIG. 53 shows a graph of the total direct current electrical conductivity of Test Example 23: Ba₅Er₂Al₂SnO₁₃;

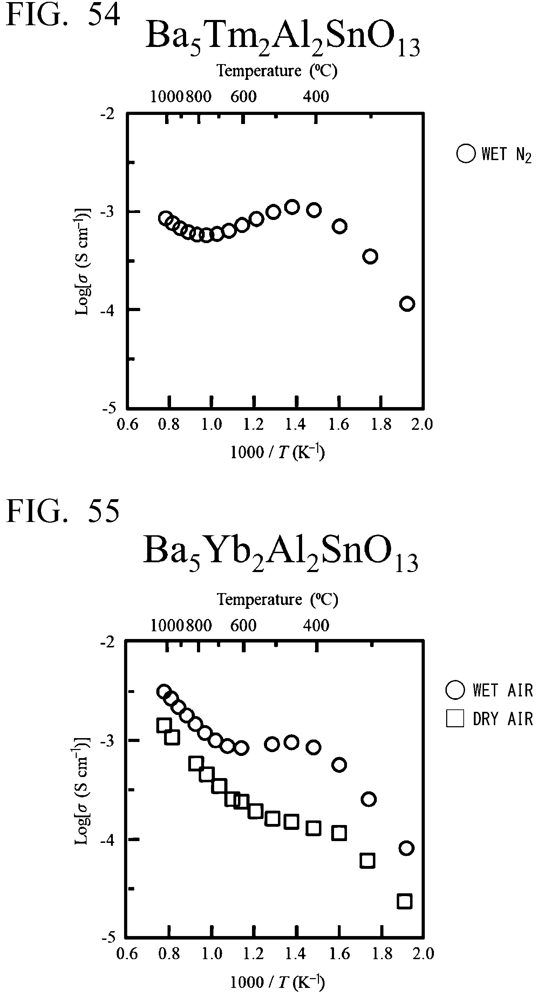

FIG. 54 shows a graph of the total direct current electrical conductivity of Test Example 24: Ba₅Tm₂Al₂SnO₁₃;
FIG. 55 shows a graph of the total direct current electrical conductivity of Test Example 25: Ba₅Yb₂Al₂SnO₁₃;

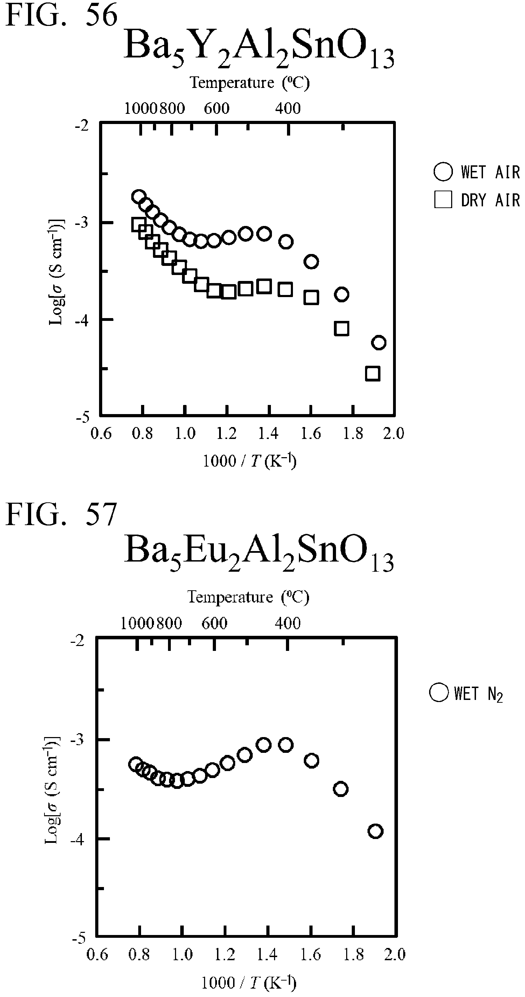

FIG. 56 shows a graph of the total direct current electrical conductivity of Test Example 26: Ba₅Y₂Al₂SnO₁₃; and
FIG. 57 shows a graph of the total direct current electrical conductivity of Test Example 27: Ba₅Eu₂Al₂SnO₁₃.

Each of the atmosphere conditions is shown in each figure.

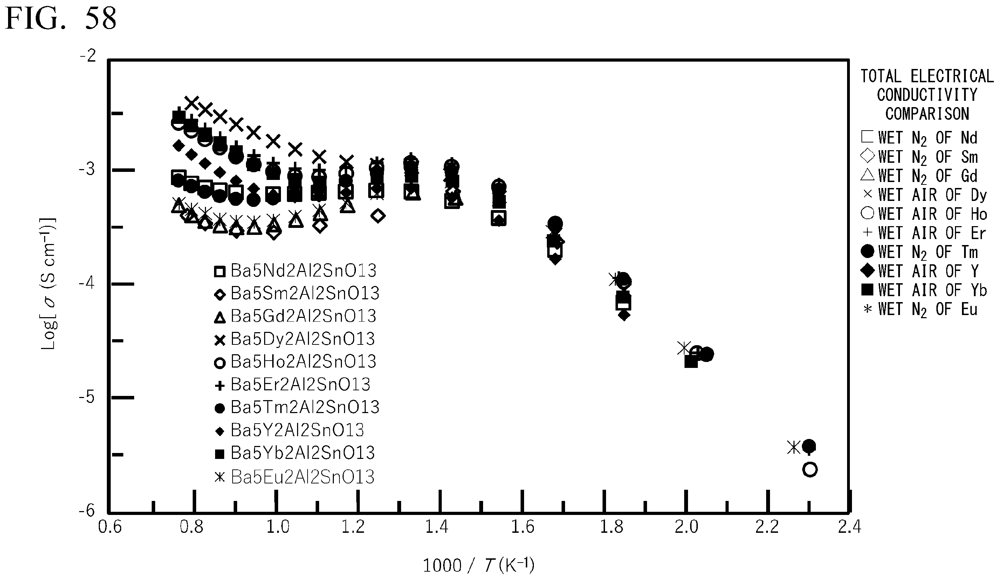

FIG. 58 shows a summary graph of the electrical conductivity of Test Examples 18 to 27.

In any of Test Examples, the result of log [σ(Scm⁻¹)] was approximately -3 at 1000/T (K⁻¹) of approximately 1.2 as a standard, and it was expected that the solid electrolyte could be used for a proton-conducting solid electrolyte having high practicality.

### [Structure optimization calculation]

A structure optimization calculation based on density functional theory was carried out to obtain lattice constants obtained by the structure optimization.

Density functional theory calculation using generalized gradient approximation and PBE functional was performed using the program VASP. The results of the lattice constants are shown in Tables 1 and 2.

The optimized structures of all the formulations retain the crystal structures of the compounds according to the present embodiment, which indicates the possibility of synthesizing these formulations. It is also considered that these compounds also exhibit proton conduction.

### [Test Example 28: synthesis and analysis of BaSc_{0.775}Mo_{0.225}O_{3-δ}]

As an example of a compound represented by a general formula: Ba_{1-α}Sc₁₋ₓMoₓO_{3-δ}H_{y}, BaSc_{0.775}Mo_{0.225}O_{3-δ} was synthesized in the same manner as in Test Examples 1 to 17.

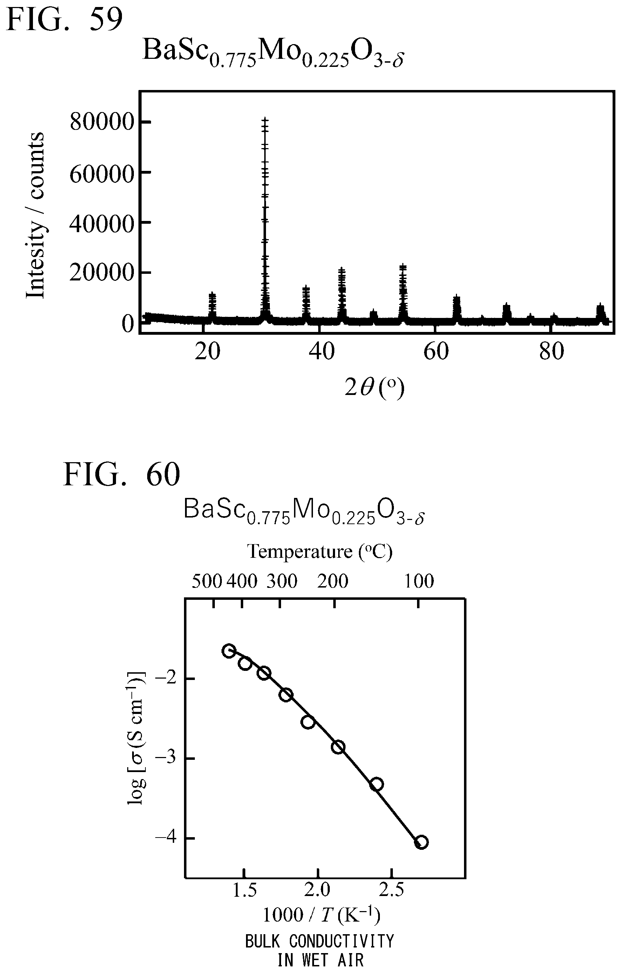

FIG. 59 shows the results of the XRD measurement of Test Example 28: BaSc_{0.775}Mo_{0.225}O_{3-δ}.

The electrical conductivity of the obtained compound of Test Example 28 was measured in the same manner as in Test Examples 1 to 17.

FIG. 60 shows the bulk conductivity of Test Example 28, which was measured by cooling BaSc_{0.775}Mo_{0.225}O_{3-δ} in wet air (water vapor partial pressure: 0.02 atm at 18°C) and maintaining the temperature.

### [Test Example 29: synthesis and analysis of BaSc_{0.725}Mo_{0.275}O_{3-δ}]

As an example of a compound represented by a general formula: Ba_{1-α}Sc₁₋ₓMoₓO_{3-δ}H_{y}, BaSc_{0.725}Mo_{0.275}O_{3-δ} was synthesized in the same manner as in Test Examples 1 to 17.

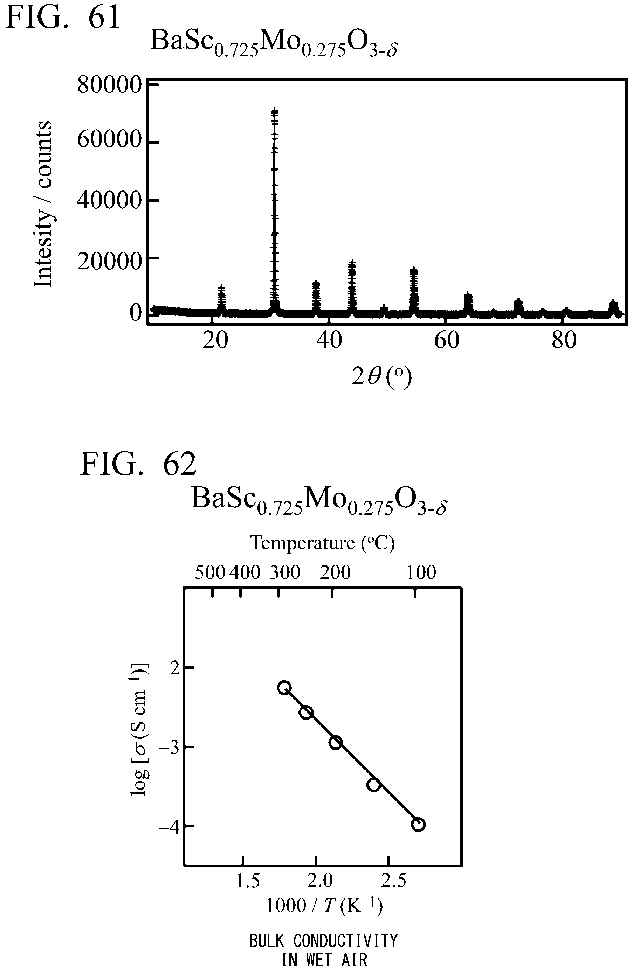

FIG. 61 shows the results of the XRD measurement of Test Example 29: BaSc_{0.725}Mo_{0.275}O_{3-δ}.

The electrical conductivity of the obtained compound of Test Example 29 was measured in the same manner as in Test Examples 1 to 17.

FIG. 62 shows the bulk conductivity of Test Example 29, which was measured by cooling BaSc_{0.725}Mo_{0.275}O_{3-δ} in wet air (water vapor partial pressure: 0.02 atm at 18°C) and maintaining the temperature.

### [Test Example 30: synthesis and analysis of BaSc_{0.7}W_{0.3}O_{3-δ}]

As an example of a compound represented by a general formula: BaSc₁₋ₓWₓO_{3-δ}H_{y}, BaSc_{0.7}W_{0.3}O_{3-δ} was synthesized in the same manner as in Test Examples 1 to 17.

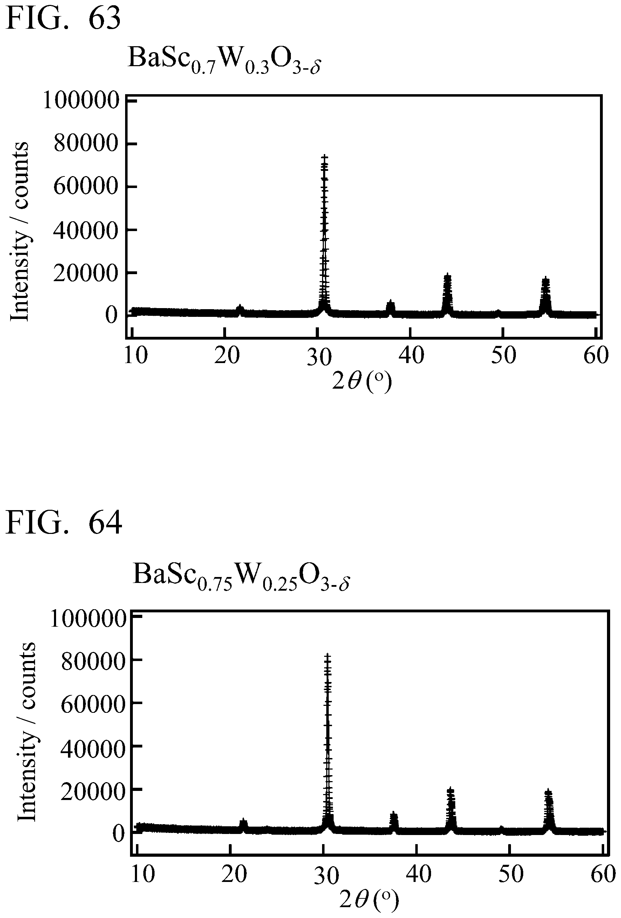

FIG. 63 shows the results of the XRD measurement of Test Example 30: BaSc_{0.7}W_{0.3}O_{3-δ}.

### [Test Example 31: synthesis and analysis of BaSc_{0.75}W_{0.25}O_{3-δ}]

As an example of a compound represented by a general formula: BaSc₁₋ₓWₓO_{3-δ}H_{y}, BaSc_{0.75}W_{0.25}O_{3-δ} was synthesized in the same manner as in Test Examples 1 to 17.

FIG. 64 shows the results of the XRD measurement of Test Example 31: BaSc_{0.75}W_{0.25}O_{3-δ}.

The electrical conductivity of the obtained compound of Test Example 31 was measured in the same manner as in Test Examples 1 to 17.

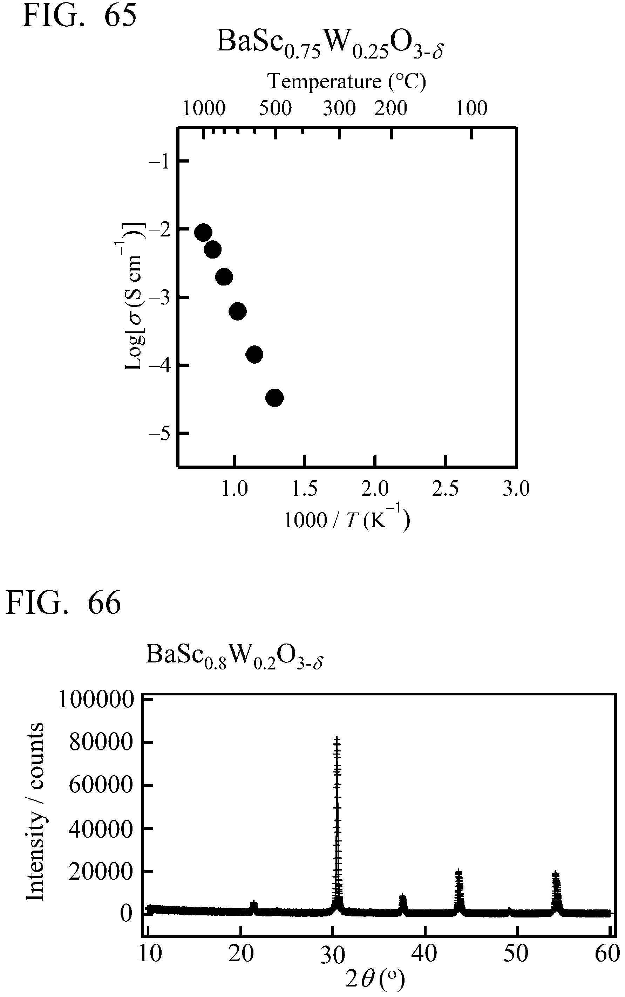

FIG. 65 shows the total direct current electrical conductivity of Test Example 31, which was measured by cooling BaSc_{0.75}W_{0.25}O_{3-δ} in wet air (water vapor partial pressure: 0.02 atm at 18°C) and maintaining the temperature.

### [Test Example 32: synthesis and analysis of BaSc_{0.8}W_{0.2}O_{3-δ}]

As an example of a compound represented by a general formula: BaSc₁₋ₓWₓO_{3-δ}H_{y}, BaSc_{0.8}W_{0.2}O_{3-δ} was synthesized in the same manner as in Test Examples 1 to 17 (the same as in Test Example 15, but re-synthesis and measurement were performed).

FIG. 66 shows the results of the XRD measurement of Test Example 32: BaSc_{0.8}W_{0.2}O_{3-δ}.

The electrical conductivity of the obtained compound of Test Example 32 was measured in the same manner as in Test Examples 1 to 17.

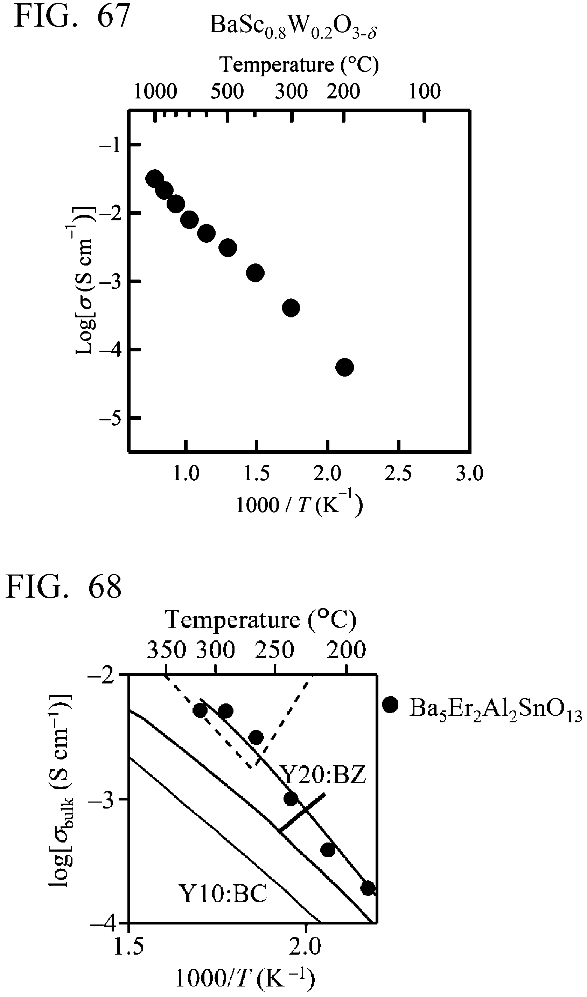

FIG. 67 shows the total direct current electrical conductivity of Test Example 32, which was measured by cooling BaSc_{0.8}W_{0.2}O_{3-δ} in wet air (water vapor partial pressure: 0.02 atm at 18°C) and maintaining the temperature.

### [Analysis of compound of Test Example 23]

The compound of Test Example 23: Ba₅Er₂Al₂SnO₁₃ was further analyzed.

FIG. 68 is a graph showing a comparison of the electrical conductivity between Test Example 23: Ba₅Er₂Al₂SnO₁₃ and the material in the related art for each temperature. In the figure, a broken line indicates the Norby gap, and the figure is a comparison diagram of the bulk (in grain) conductivity.

As shown in the figure, the bulk conductivity of the compound of Test Example 23 was higher than that of Y10:BC and Y20:BZ (BaZr_{0.8}Y_{0.2}O_{3-δ}) which are materials used in the related art, at any of 200°C to 350°C.

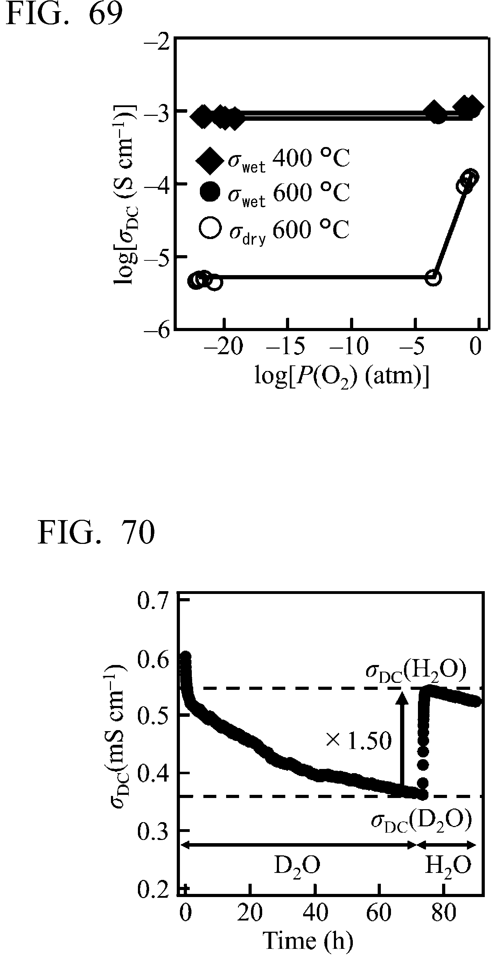

FIG. 69 is a graph showing the oxygen partial pressure dependence of the total direct current electrical conductivity of Test Example 23: Ba₅Er₂Al₂SnO₁₃ in a dry atmosphere and a wet atmosphere for each temperature.

As shown in the figure, the electrolyte region which did not depend on the oxygen partial pressure P(O₂) suggests ion conduction. The conductivity in a wet atmosphere was higher than that in a dry atmosphere, which suggests proton conduction.

FIG. 70 is a graph showing time dependence of the electrical conductivity of Test Example 23: Ba₅Er₂Al₂SnO₁₃ for each gas atmosphere.

As shown in the figure, the conductivity in the H₂O atmosphere was about 1.5 times higher than that in the D₂O atmosphere, which suggests proton conduction.

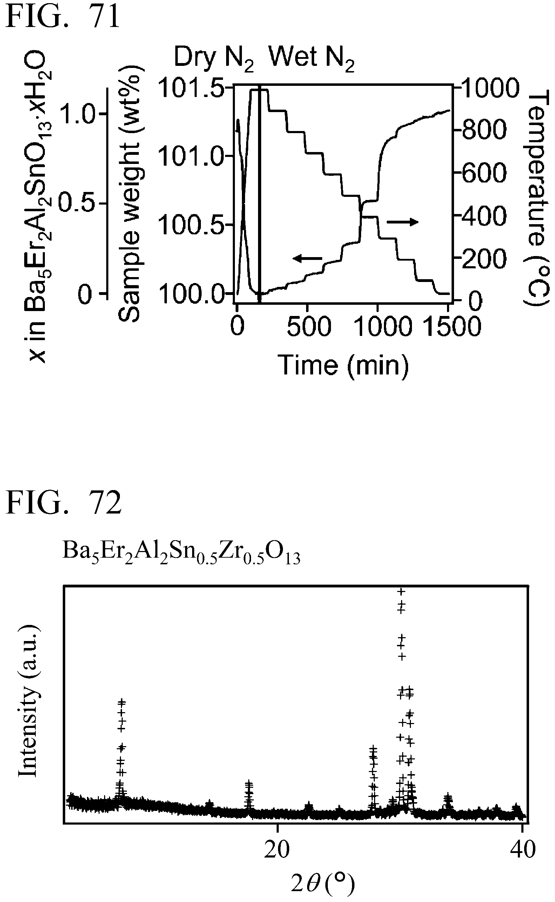

FIG. 71 is a graph showing results of thermogravimetric analysis of Test Example 23: Ba₅Er₂Al₂SnO₁₃.

The vertical axis of the figure indicates a water absorption amount x of the sample. The figure shows that x increases with cooling.

From these results, it can be said that Test Example 23 was a novel substance as expected.

### [Test Examples 33 to 35: synthesis and analysis of compound of Ba_{5-α}R₂₊ₓAl_{2+y}M_{1+z}O_{13+δ}]

A compound belonging to Ba_{5-α}R₂₊ₓAl_{2+y}M_{1+z}O_{13+δ} was synthesized and analyzed.
Test Example 33: Ba₅Er₂Al₂Sn_{0.5}Zr_{0.5}O₁₃,
Test Example 34: Ba₅Er_{1.9}Al_{2.1}SnO₁₃, and
Test Example 35: Ba₅Er₂Al_{2.1}Sn_{0.9}O_{12.95}
were each synthesized in the same manner as in Test Example 23. XRD measurement was performed in the same manner as in Test Example 23 described above.

FIG. 72 shows the results of the XRD measurement of Test Example 33: Ba₅Er₂Al₂Sn_{0.5}Zr_{0.5}O₁₃.

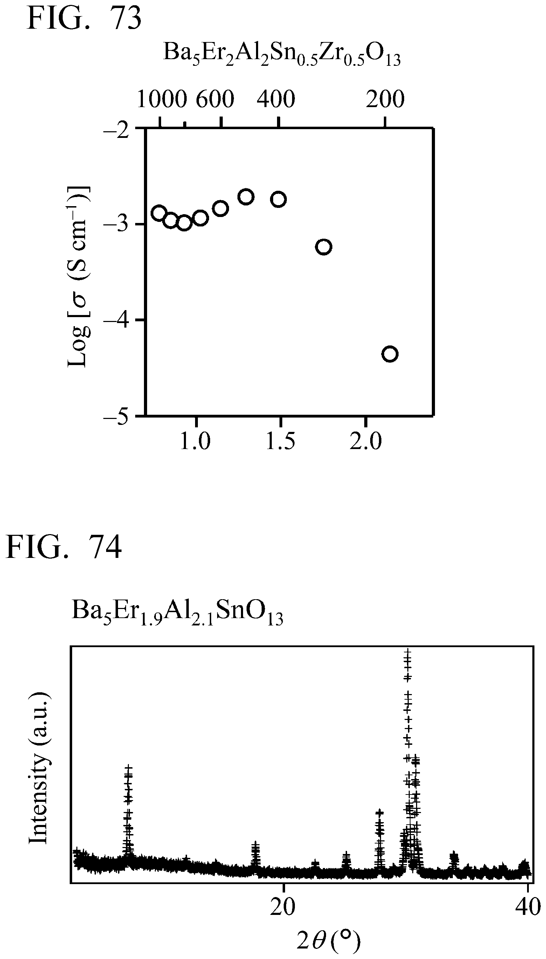

FIG. 73 shows the total direct current electrical conductivity of Test Example 33, which was measured by cooling Ba₅Er₂Al₂Sn_{0.5}Zr_{0.5}O₁₃ in wet air (water vapor partial pressure: 0.02 atm at 18°C) and maintaining the temperature.

FIG. 74 shows the results of the XRD measurement of Test Example 34: Ba₅Er_{1.9}Al_{2.1}SnO₁₃.

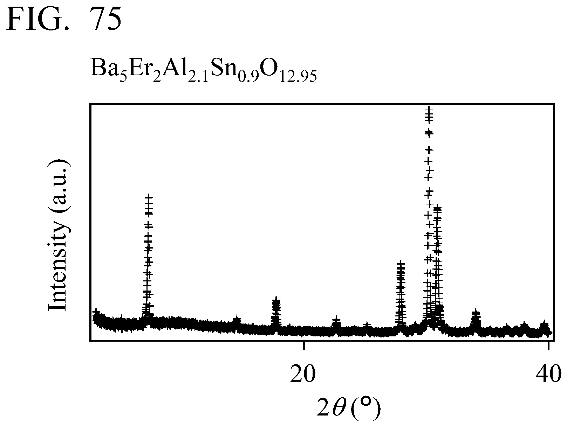

FIG. 75 shows the results of the XRD measurement of Test Example 35: Ba₅Er₂Al_{2.1}Sn_{0.9}O_{12.95}.

It is expected that these compounds are also useful electrolytes and can also be applied to a battery in the same manner as in Test Example 23.

### INDUSTRIAL APPLICABILITY

With the proton-conducting solid electrolyte, the electrolyte layer, and the battery according to the embodiments of the present invention, a proton-conducting solid electrolyte which can exhibit high proton conductivity and stability in a low-temperature range and a medium-temperature range, an electrolyte layer formed of the proton-conducting solid electrolyte, and a battery are obtained.

In addition, the proton-conducting solid electrolyte, the electrolyte layer, and the battery according to the embodiments of the present invention can be used for a solid oxide fuel cell (SOFC), a proton ceramic fuel cell (PCFC), a sensor, a battery, an electrode, an electrolyte, a hydrogen permeable membrane, a catalyst, a photocatalyst, an electrical, electronic, or communication apparatus, an energy or environment-related apparatus, or an optical apparatus.

## Claims

1. A proton-conducting solid electrolyte (1) represented by a general formula:
Ba_{1-α}Sc₁₋ₓMoₓO_{3-δ}H_{y},
wherein α is -0.2 to 0.2,
x is 0.1 to 0.3,
y is 0 to 1 - 3x, and
δ is 0 to 1/2 - 3x/2.

2. A proton-conducting solid electrolyte represented by a general formula:
BaA₁₋ₓMₓO_{3-δ}H_{y},
wherein A is an element having an ionic radius of 0.52 to 0.97 Å, excluding Ce, In, Zr, and Zn,
M is an element having an ionic radius of 70% to 130% of the ionic radius of A, excluding A, Zr, Ce, and Zn, or a mixed formulation of a plurality of elements having an average ionic radius of 70% to 130% of the ionic radius of A, excluding A and Zn,
x is more than 0 and less than 1 (here, in a case where M is Ge, Sn, or Hf, x is more than 0 and less than 0.95, and in a case where M is a mixed element including Ti and any of Cr, Fe, Mn, Co, or Ni, a ratio of Cr, Fe, Mn, Co, or Ni in M is more than 0.2 and less than 1 or x is more than 0.2 and less than 1),
y is 0 to 1, and
δ is 0 to 1/2.

3. The proton-conducting solid electrolyte according to Claim 2,
wherein A is Sc,
M is Mo, Ge, Nb, Ta, V, W, or Sb, and
in a case where M is Mo or W, x is more than 0 and 1/3 or less, in a case where M is Ge, x is more than 0 and less than 1/2, and in a case where M is Nb, Ta, V, or Sb, x is more than 0 and 1/2 or less.

4. The proton-conducting solid electrolyte according to Claim 2 or 3,
wherein the proton-conducting solid electrolyte is any of the following (2) to (8),
(2) a proton-conducting solid electrolyte represented by a general formula: BaSc₁₋ₓGeₓO_{3-δ}H_{y}, in which x is 0.25 to 0.35, y is 0 to 1 - x, and δ is 0 to 1/2 - x/2,
(3) a proton-conducting solid electrolyte represented by a general formula: BaSc₁₋ₓNbₓO_{3-δ}H_{y}, in which x is 0.2 to 0.4, y is 0 to 1 - 2x, and δ is 0 to 1/2 - x,
(4) a proton-conducting solid electrolyte represented by a general formula: BaSc₁₋ₓTaₓO_{3-δ}H_{y}, in which x is 0.2 to 0.4, y is 0 to 1 - 2x, and δ is 0 to 1/2 - x,
(5) a proton-conducting solid electrolyte represented by a general formula: BaSc₁₋ₓVₓO_{3-δ}H_{y}, in which x is 0.2 to 0.25, y is 0 to 1 - 2x, and δ is 0 to 1/2 - x,
(6) a proton-conducting solid electrolyte represented by a general formula: BaSc₁₋ₓWₓO_{3-δ}H_{y}, in which x is 0.15 to 0.25, y is 0 to 1 - 3x, and δ is 0 to 1/2 - 3x/2,
(7) a proton-conducting solid electrolyte represented by a general formula: BaSc_{0.6}Ce_{0.4}O_{3-δ}, and
(8) a proton-conducting solid electrolyte represented by a general formula: BaSc₁₋ₓSbₓO_{3-δ}H_{y}, in which x is 0.35 to 0.45, y is 0 to 1 - 2x, and δ is 0 to 1/2 - x.

5. A proton-conducting solid electrolyte represented by a general formula:
BaSc₁₋ₓMₓO_{3-δ}H_{y},
wherein M represents a mixed formulation of a plurality of elements excluding Sc, Zr, Ce, and Zn, in which an average ionic radius of M is 70% to 130% of an ionic radius of Sc,
x is more than 0 and 1 or less (here, in a case where M is Ge, Sn, or Hf, x is more than 0 and less than 0.95, and in a case where M is a mixed element including Ti and any of Cr, Fe, Mn, Co, or Ni, a ratio of Cr, Fe, Mn, Co, or Ni in M is more than 0.2 and less than 1 or x is more than 0.2 and less than 1),
y is 0 to 1, and
δ is 0 to 1/2.

6. A proton-conducting solid electrolyte represented by a general formula: Ba₁₋ₛSc₁₋ₓMₓO_{3-δ}H_{y},
wherein M is Mo, Ge, Nb, Ta, V, W, or Sb,
y is 0 to 1,
ε is 0 to 0.7,
δ is 0 to 1/2, and
in a case where M is Ge, x is more than 0 and less than 1/2, in a case where M is Nb, Ta, V, or Sb, x is more than 0 and 1/2 or less, and in a case where M is Mo or W, x is more than 0 and less than 1/3.

7. A proton-conducting solid electrolyte represented by a general formula: Ba_{1-ε}Sc₁₋ₓCeₓO_{3-δ}H_{y},
wherein x is more than 0 and less than 1,
y is 0 to 1,
ε is more than 0.05 to 0.7 (here, in a case where 0.05 < ε < 0.2, 0 < x < 0.5), and
δ is 0 to 1/2.

8. A proton-conducting solid electrolyte represented by a general formula: Ba₁₋ₛSc₁₋ₓMₓO_{3-δ}H_{y},
wherein M is an element having an ionic radius of 70% to 130% of an ionic radius of Sc, excluding Sc and Zn, or a mixed formulation of a plurality of elements excluding Sc and Zn, in which an average ionic radius is 70% to 130% of the ionic radius of Sc,
x is more than 0 and 1 or less (here, in a case where M is Ti and ε is 0, x is more than 0 and less than 0.2, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, a ratio of Cr, Fe, Mn, Co, or Ni in M is more than 0.2 and less than 1, ε is more than 0.2, or x is more than 0.2 and less than 1),
y is 0 to 1,
ε is 0 to 0.7, and
δ is 0 to 1/2.

9. A proton-conducting solid electrolyte represented by a general formula: Ba_{1-ε}A₁₋ₓMₓO_{3-δ}H_{y},
wherein A is an element having an ionic radius of 0.52 to 0.97 Å, excluding Ce, In, Zr, and Zn,
M is an element having an ionic radius of 70% to 130% of the ionic radius of A, excluding A and Zn, or a mixed formulation of a plurality of elements having an average ionic radius of 70% to 130% of the ionic radius of A, excluding A,
x is more than 0 and less than 1 (here, in a case where M is a Ge, Sn, or Hf, x is more than 0 and less than 0.95, in a case where M is Zr or Ce, ε is more than 0.05, and in a case where M is a mixed element including any of Ti, Zr, or Ce and any of Cr, Fe, Mn, Co, or Ni, a ratio of Cr, Fe, Mn, Co, or Ni in M is more than 0.2 and less than 1, ε is more than 0.2, or x is more than 0.2 and less than 1),
y is 0 to 1,
ε is 0 to 0.7, and
δ is 0 to 1/2.

10. A proton-conducting solid electrolyte represented by a general formula: BaA_{1-x-z}M1ₓM2_{z}O_{3-δ}H_{y}, in which z is more than 0 and less than 1, y is 0 to 1, and δ is 0 to 1/2,
wherein the proton-conducting solid electrolyte is any of the following (28) to (35),
(28) a proton-conducting solid electrolyte represented by a general formula: BaSc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded),
(29) a proton-conducting solid electrolyte represented by a general formula: BaSc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn,
(30) a proton-conducting solid electrolyte represented by a general formula: BaSc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded),
(31) a proton-conducting solid electrolyte represented by a general formula: BaSc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded),
(32) a proton-conducting solid electrolyte represented by a general formula: BaSc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded),
(33) a proton-conducting solid electrolyte represented by a general formula: BaSc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded),
(34) a proton-conducting solid electrolyte represented by a general formula: BaSc_{1-x-z}CeₓM_{z}O_{3-δ}H_{y}, in which x is more than 0 and less than 1, and M is an element having an ionic radius of 70% to 130% of an ionic radius of Sc, excluding Sc, Ce, Zr, and Zn, or a mixed formulation of a plurality of elements having an average ionic radius of 70% to 130% of the ionic radius of Sc, excluding Sc, Ce, and Zn (here, in a case where z is 0, x is more than 0 and less than 0.2, in a case where M is Cr, Fe, Mn, Co, or Ni, a range of x = 0.01 to 0.02 is excluded, and in a case where M is Mo, Nb, Ta, V, W, or Sb, a range of z = 0.01 to 0.2 or a range of x = 0.74 to 0.84 is excluded), and
(35) a proton-conducting solid electrolyte represented by a general formula: BaSc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded).

11. A proton-conducting solid electrolyte represented by a general formula: Ba_{1-ε}A_{1-x-z}M1ₓM2_{z}O_{3-δ}H_{y}, in which z is more than 0 and less than 1, y is 0 to 1, ε is 0 to 0.7, and δ is 0 to 1/2,
wherein the proton-conducting solid electrolyte is any of the following (36) to (43),
(36) a proton-conducting solid electrolyte represented by a general formula: Ba_{1-ε}Sc_{1-x-z}MoₓM_{z}O_{3-δ}H_{y}, in which x is more than 0 and 1/3 or less, and M is an element having an ionic radius of 70% to 130% of an ionic radius of Sc, excluding Sc, Mo, and Zn, or a mixed formulation of a plurality of elements having an average ionic radius of 70% to 130% of the ionic radius of Sc, excluding Sc, Mo, and Zn (here, in a case where M is Ce, a range of x = 0.01 to 0.2 or a range of z = 0.74 to 0.84 is excluded),
(37) a proton-conducting solid electrolyte represented by a general formula: Ba_{1-ε}Sc_{1-x-z}GeₓM_{z}O_{3-δ}H_{y}, in which x is more than 0 and less than 1, and M is an element having an ionic radius of 70% to 130% of an ionic radius of Sc, excluding Sc, Ge, and Zn, or a mixed formulation of a plurality of elements having an average ionic radius of 70% to 130% of the ionic radius of Sc, excluding Sc, Ge, and Zn,
(38) a proton-conducting solid electrolyte represented by a general formula: Ba₁₋ₛSc_{1-x-z}NbₓM_{z}O_{3-δ}H_{y}, in which x is more than 0 and 1/2 or less, and M is an element having an ionic radius of 70% to 130% of an ionic radius of Sc, excluding Sc, Nb, and Zn, or a mixed formulation of a plurality of elements having an average ionic radius of 70% to 130% of the ionic radius of Sc, excluding Sc, Nb, and Zn (here, in a case where M is Ce, a range of x = 0.01 to 0.2 or a range of z = 0.74 to 0.84 is excluded),
(39) a proton-conducting solid electrolyte represented by a general formula: Ba₁₋ₛSc_{1-x-z}TaₓM_{z}O_{3-δ}H_{y}, in which x is more than 0 and 1/2 or less, and M is an element having an ionic radius of 70% to 130% of an ionic radius of Sc, excluding Sc, Ta, and Zn, or a mixed formulation of a plurality of elements having an average ionic radius of 70% to 130% of the ionic radius of Sc, excluding Sc, Ta, and Zn (here, in a case where M is Ce, a range of x = 0.01 to 0.2 or a range of z = 0.74 to 0.84 is excluded),
(40) a proton-conducting solid electrolyte represented by a general formula: Ba_{1-ε}Sc_{1-x-z}VₓM_{z}O_{3-δ}H_{y}, in which x is more than 0 and 1/2 or less, and M is an element having an ionic radius of 70% to 130% of an ionic radius of Sc, excluding Sc, V, and Zn, or a mixed formulation of a plurality of elements having an average ionic radius of 70% to 130% of the ionic radius of Sc, excluding Sc, V, and Zn (here, in a case where M is Ce, a range of x = 0.01 to 0.2 or a range of z = 0.74 to 0.84 is excluded),
(41) a proton-conducting solid electrolyte represented by a general formula: Ba_{1-ε}Sc_{1-x-z}WₓM_{z}O_{3-δ}H_{y}, in which x is more than 0 and 1/3 or less, and M is an element having an ionic radius of 70% to 130% of an ionic radius of Sc, excluding Sc, W, and Zn, or a mixed formulation of a plurality of elements having an average ionic radius of 70% to 130% of the ionic radius of Sc, excluding Sc, W, and Zn (here, in a case where M is Ce, a range of x = 0.01 to 0.2 or a range of z = 0.74 to 0.84 is excluded),
(42) a proton-conducting solid electrolyte represented by a general formula: Ba₁₋ₛSc_{1-x-z}CeₓM_{z}O_{3-δ}H_{y}, in which x is more than 0 and less than 0.8, and M is an element having an ionic radius of 70% to 130% of an ionic radius of Sc, excluding Sc, Ce, and Zn (in a case where ε is 0, further excluding Zr), or a mixed formulation of a plurality of elements having an average ionic radius of 70% to 130% of the ionic radius of Sc, excluding Sc, Ce, and Zn (here, in a case where M is Cr, Fe, Mn, Co, or Ni, a range of ε = 0 to 0.2 or a range of x = 0.01 to 0.02 is excluded, and in a case where M is Mo, Nb, Ta, V, W, or Sb, a range of z = 0.01 to 0.2 or a range of x = 0.74 to 0.84 is excluded), and
(43) a proton-conducting solid electrolyte represented by a general formula: Ba₁₋ₛSc_{1-x-z}SbₓM_{z}O_{3-δ}H_{y}, in which x is more than 0 and 1/2 or less, and M is an element having an ionic radius of 70% to 130% of an ionic radius of Sc, excluding Sc, Sb, and Zn, or a mixed formulation of a plurality of elements having an average ionic radius of 70% to 130% of the ionic radius of Sc, excluding Sc, Sb, and Zn (here, in a case where M is Ce, a range of x = 0.01 to 0.2 or a range of z = 0.74 to 0.84 is excluded).

12. A proton-conducting solid electrolyte represented by a general formula:
Ba_{5-α}R₂₊ₓAl_{2+y}M_{1+z}O_{13+δ},
wherein α is 0 or more and 2 or less,
x is -1 or more and 1 or less,
y is -1 or more and 1 or less,
z is -0.5 or more and 0.5 or less,
δ is -1 or more and 1 or less,
R in the general formula is a cation of one element selected from the group consisting of a rare earth element and Ga, and
M in the general formula is a cation of one element selected from the group consisting of Hf, Sn, and Zr.

13. The proton-conducting solid electrolyte according to Claim 12,
wherein the proton-conducting solid electrolyte is represented by a general formula: Ba₅R₂Al₂MO₁₃, in which M is a cation of one element selected from the group consisting of Hf and Sn.

14. The proton-conducting solid electrolyte according to Claim 12 or 13,
wherein M in the general formula is Sn, and
R in the general formula is Nd, Sm, Eu, Gd, Dy, Ho, Y, Er, Tm, or Yb.

15. The proton-conducting solid electrolyte according to any one of Claims 1, 2, and 5 to 12,
wherein the proton-conducting solid electrolyte is used under temperature conditions of 100°C to 700°C.

16. The proton-conducting solid electrolyte according to any one of Claims 1, 2, and 5 to 12,
wherein the proton-conducting solid electrolyte is used under temperature conditions of 200°C to 400°C.

17. The proton-conducting solid electrolyte according to any one of Claims 1, 2, and 5 to 12,
wherein, in a case where a proton conductivity in a grain is measured, a temperature at which an electrical conductivity represented by log [σ(Scm⁻¹)] is more than -2.0 is 350°C or lower.

18. The proton-conducting solid electrolyte according to any one of Claims 1, 2, and 5 to 12,
wherein the proton-conducting solid electrolyte is used for a solid oxide fuel cell (SOFC), a proton ceramic fuel cell (PCFC), a sensor, a battery, an electrode, an electrolyte, a hydrogen permeable membrane, a catalyst, a photocatalyst, an electrical, electronic, or communication apparatus, an energy or environment-related apparatus, or an optical apparatus.

19. The proton-conducting solid electrolyte according to any one of Claims 1, 2, and 5 to 12,
wherein the proton-conducting solid electrolyte is used for a solid oxide fuel cell (SOFC), a proton ceramic fuel cell (PCFC), a sensor, or a hydrogen permeable membrane.

20. An electrolyte layer comprising:
the proton-conducting solid electrolyte according to any one of Claims 1, 2, and 5 to 12.

21. A battery comprising:
the electrolyte layer according to Claim 20.

22. The battery according to Claim 21,
wherein the battery is a solid oxide fuel cell (SOFC) or a proton ceramic fuel cell (PCFC).
